(19) **Europäisches Patentamt / European Patent Office / Office européen des brevets**

(11) **EP 4 279 267 A1**

(12) # EUROPEAN PATENT APPLICATION
published in accordance with Art. 153(4) EPC

(43) Date of publication:
**22.11.2023  Bulletin 2023/47**

(21) Application number: **22739407.9**

(22) Date of filing: **12.01.2022**

(51) International Patent Classification (IPC):
**B32B 27/20** (2006.01)   **C09C 1/62** (2006.01)
**C09C 3/00** (2006.01)   **C09C 3/06** (2006.01)
**C09C 3/08** (2006.01)   **C09C 3/10** (2006.01)
**C09C 3/12** (2006.01)   **C09D 5/00** (2006.01)
**C09D 201/00** (2006.01)   **C09D 11/00** (2014.01)
**C09D 7/62** (2018.01)

(52) Cooperative Patent Classification (CPC):
**B32B 27/20; C09C 1/62; C09C 3/00; C09C 3/06;
C09C 3/08; C09C 3/10; C09C 3/12; C09D 5/00;
C09D 7/62; C09D 11/00; C09D 201/00**

(86) International application number:
**PCT/JP2022/000677**

(87) International publication number:
**WO 2022/154001 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.01.2021   JP 2021003098
02.03.2021   JP 2021032830
23.03.2021   JP 2021048562
05.07.2021   JP 2021111401**

(71) Applicant: **Asahi Kasei Kabushiki Kaisha
Tokyo 1000006 (JP)**

(72) Inventors:
• **FUJIMOTO Katsuhiro**
  **Tokyo 100-0006 (JP)**
• **ORIKASA Tomoaki**
  **Tokyo 100-0006 (JP)**
• **SUGIMOTO Atsutoshi**
  **Tokyo 100-0006 (JP)**
• **KOMAKINE Hiroyuki**
  **Tokyo 100-0006 (JP)**
• **YOSHIKAWA Shuhei**
  **Tokyo 100-0006 (JP)**
• **FUKUHARA Shintaro**
  **Tokyo 100-0006 (JP)**

(74) Representative: **Strehl Schübel-Hopf & Partner
Maximilianstrasse 54
80538 München (DE)**

(54) **METAL PIGMENT, APPLICATION OF METAL PIGMENT, AND METHOD FOR MANUFACTURING METAL PIGMENT**

(57)   Provided are a metal pigment containing novel composite particles that have not been seen in conventional technologies and a method for manufacturing a metal pigment having reduced flocculation. The problem is solved by a metal pigment containing metal particles and composite particles having one or more coating layers formed on surfaces of the metal particles, or the like, the metal pigment being characterized in that (1) the composite particles have a flaky shape, (2) a volume-based diameter D50 is 0.1 to 30 $\mu$m when a particle size distribution of the composite particles is measured by a laser diffraction type particle size distribution meter, and (3) the composite particles have an average thickness of 15 to 300 nm.

EP 4 279 267 A1

**Description**

TECHNICAL FIELD

A first invention of the present application relates to a metal pigment containing novel composite particles. More specifically, a first aspect of the first invention of the present application relates to a metal pigment (including the case of a composition) containing novel composite particles having a reduced flocculation property of individual particles and excellent hiding power, color tone, and the like.

A second aspect of the first invention of the present application relates to a (composite) metal pigment comprising composite particles having metal particles and a metal oxide coating formed on the surfaces of the metal particles, and more specifically relates to a (composite) metal pigment in which flocculation and deformation of composite particles are effectively suppressed and excellent designability and gloss and suppression of seeds in a coating film, stability in an aqueous coating material, and the like are balanced at a high level.

A second invention of the present application relates to a metal pigment comprising composite particles in which metal particles are coated with a polysiloxane layer. The second invention of the present application further relates to a metal pigment suitable for an aqueous coating material comprising composite particles coated with a polysiloxane layer, having a high degree of condensation of polysiloxane and excellent mechanical stability, and having high designability, and to a metal pigment composition, aqueous coating material composition, aqueous ink composition, and coating film containing the metal pigment.

A third invention of the present application relates to a method for manufacturing a metal pigment. More specifically, the third invention of the present application relates to a method for manufacturing a metal pigment comprising composite particles having a reduced flocculation property of individual particles and having excellent hiding power, color tone, and the like.

BACKGROUND ART

Conventionally, metal pigments have been used for metallic coating materials, printing inks, plastic kneading, and the like for the purpose of obtaining a decorative effect focusing on a metallic feeling.

In the field of coating materials, there has recently been an increasing need for conversion to aqueous coating materials with small use amounts of organic solvents in order to save resources and eliminate pollution, but in metallic coating materials containing metal pigments, the types of aqueous coating materials that can be practically used are not sufficient yet. This is because a metal pigment is easily corroded in an aqueous coating material. When metal powder is present in an aqueous coating material, corrosion by water occurs in any one of acidic, neutral, and basic regions or a plurality of regions on the basis of the properties of various metals, and hydrogen gas is generated. From the viewpoint of safety, this is a very serious problem in the process of manufacturing coating materials or inks in coating material manufacturers or ink manufacturers, and in the coating process or printing process in automobiles, home appliance manufacturers, printing manufacturers, or the like. In addition, the smoothness of a metal surface is lost due to corrosion, and thus a decrease in color tone cannot be avoided. The corrosion resistance of a metal pigment in water, an aqueous coating material, or an aqueous ink can be paraphrased as "storage stability".

Patent Literature 1 (JP-A-2003-147226) discloses an aluminum pigment having an inorganic molybdenum coating film and further having a coating film made of amorphous silica that coats the coating film. Patent Literature 2 (WO 2004/096921 A) discloses an aluminum pigment having an inorganic molybdenum coating film and further having a coating film made of amorphous silica that coats the coating film and/or a coating film formed from a silane coupling agent.

In any of the methods described in these patent literatures (a method for manufacturing an aluminum pigment, etc.), however, a decrease in the color tone of the metal pigment cannot be avoided, and the process is complicated.

Patent Literature 3 (WO 2018/180936 A) discloses a coating pigment of composite particles containing metal particles and a coating layer, which is a silicon-containing compound layer, and having a small proportion of aggregates constituted by at least four particles, for the purpose of providing a coating pigment (metal pigment composition) in which a relatively small amount of flocculated bodies is dispersed.

In Patent Literature 3, however, it is not possible to find a specific teaching as to how to obtain a desired coating pigment having a small amount of flocculated bodies, other than that it is preferable to adjust a stirring Reynolds number to a predetermined range. It is also known that, only by satisfying the ranges of the characteristic parameters defined in Patent Literature 3, it is difficult to obtain sufficiently satisfactory storage stability, a reduced flocculation property, hiding power, and color tone.

In addition, in order to improve the stability of a metal pigment in an aqueous coating material, a pigment using composite particles, in which metal particles are coated with metal oxide such as amorphous silica, has been proposed. Many of the pigment particles coated with amorphous silica or the like exist as flocculated bodies, and as a result, hiding power per unit mass may be decreased or brightness may be deteriorated, so that a means for suppressing flocculation has been required.

For example, Patent Literature 4 proposes a technique in which the number proportion of aggregates constituted by at least four composite particles, can be as small as 35% or less. In this technique, however, particles, in which two or three composite particles are flocculated, are acceptable, and in order to realize a metallic coating film having high gloss or the like, a technique for more effectively suppressing flocculation has been required.

In addition, these flocculated particles can have a substantial particle thickness of 2 to 3 times that of primary particles that are not flocculated, and thus, in a coating film having a small film thickness, the particles are not be contained within the coating film and protrusions of the particles may cause seeds or a decrease in gloss, which is an obstacle in reducing the film thickness of a coating film.

Furthermore, in the technique described in Patent Literature 4, it is necessary to apply a large force at the time of stirring in a coating treatment reaction in order to prevent the composite particles from being fixed to each other, and particularly in the case of particles having a small thickness, particle deformation due to the stirring is significant, and thus the designability of the metal particles after being coated may be decreased, and thus the solution has been required.

In addition, the above-described corrosion occurs from the surface of the metal, and thus the surface smoothness is decreased, and the designability of the metal pigment is also decreased.

Among the metal pigments, particularly an aluminum flake pigment is an amphoteric metal, and thus there is a problem that aluminum reacts with water in an aqueous coating material to generate gas, and as a countermeasure for this, it is effective to coat the surface of the aluminum flake pigment with a metal such as polysiloxane or a metalloid oxide.

When the metal particles are coated with a certain amount or more of a metal or metalloid oxide, hydrogen gas is suppressed from being generated in normal handling of a coating material. Patent Literature 5 describes that a metallic effect pigment excellent in gas stability is provided by combining, in an alkoxysilane reaction step, an acid catalyst and a base catalyst to coat a metal pigment with a polysiloxane layer.

However, when a strong shearing force is applied to a metal pigment due to strong stirring/mixing at the time of manufacturing a coating material, long-time circulation (circulation/stirring of a coating material) at the time of coating, or the like, the coating layer is damaged, leading to a decrease in storage stability, such as gas generation, and a change in color tone. In particular, when the aspect ratio of a metal pigment particle itself is increased, mechanical stability is decreased and the particle is deformed due to circulation, and as a result, storage stability, such as gas generation, and color tone are further decreased.

For Patent Literature 5, it is conceivable that, since the reaction rate (degree of crosslinking) of polysiloxane is not controlled and the reaction rate is not sufficiently increased, there is a problem that the coating layer is damaged during manufacturing of the coating material or circulation of the coating material, and mechanical stability, storage stability (gas generation), and color tone are decreased.

Furthermore, in the silicon compound treatment, alkoxysilane, then water, and a catalyst are put in an aluminum pigment slurry by a stirring vessel-type reaction apparatus to promote hydrolysis and dehydration condensation reactions, and a silica treatment is performed on the aluminum flakes. At this time, the aluminum flakes are flocculated by a condensate, and thus desired hiding property and luminance cannot be exhibited when a coating material is formed, or aluminum flakes that are not sufficiently treated may be formed on a surface layer of a treatment liquid or at a liquid contact portion with the reactor. When such aluminum flakes are mixed into, gas may be generated or color tone may be deteriorated.

CITATION LIST

PATENT LITERATURE

PATENT LITERATURE 1: JP-A-2003-147226
PATENT LITERATURE 2: WO 2004/096921 A
PATENT LITERATURE 3: WO 2018/180936 A
PATENT LITERATURE 4: JP-A-2018-172617
PATENT LITERATURE 5: JP-A-2013-518948

SUMMARY OF INVENTION

TECHNICAL PROBLEM

An object of a first aspect of the first invention of the present application is to provide a metal pigment (hereinafter, also referred to as a "metal pigment composition") containing novel composite particles that have not been present in the conventional techniques.

Another object of the first aspect of the first invention of the present application is to provide a metal pigment composition containing novel composite particles, in which disadvantages in the conventional techniques are eliminated, that is, the metal pigment composition is excellent in storage stability, has a reduced flocculation property of individual particles, and has excellent hiding power, color tone, and the like.

Furthermore, in view of the limitations of the conventional techniques described above, an object of a second aspect of the first invention of the present application is to provide a metal pigment (hereinafter, also referred to as a "composite metal pigment") in which flocculation and deformation of composite particles are effectively suppressed, and excellent designability and gloss and suppression of seeds in a coating film, stability in an aqueous coating material, and the like are balanced at a high level.

An object of the second invention of the present application is to provide a novel metal pigment comprising composite particles coated with a polysiloxane layer.

In addition, in view of the above-described conventional techniques, an object of the second invention of the present application is to provide a metal pigment suitable for an aqueous coating material, having a high reaction rate of polysiloxane constituting a coating layer of composite particles, excellent mechanical stability, and high designability.

Another object of the second invention of the present application is to provide a metal pigment composition, aqueous coating material composition, or aqueous ink composition containing the metal pigment.

Note that, in the present description, the corrosion resistance, in water, an aqueous coating material, or an aqueous ink, of the composite particles contained in the metal pigment is also referred to as "storage stability".

An object of the third invention of the present application is to provide a method for manufacturing a metal pigment (hereinafter, also referred to as a "metal pigment composition") with less flocculation.

Another object of the third invention of the present application is to provide a metal pigment composition comprising composite particles, in which the disadvantages of the conventional techniques are eliminated, that is, the metal pigment composition is excellent in storage stability, has a reduced flocculation property of individual particles, and has excellent hiding power, color tone, and the like.

Yet another object of the third invention of the present application is to provide a manufacturing apparatus for a metal pigment composition with less flocculation.

SOLUTION TO PROBLEM

As a result of intensive studies, the present inventor has found a means for solving the above-described problems in the first invention of the present application.

More specifically, the present inventor has found, as a result of intensive studies, that the problems in the first aspect of the first of the present application can be solved by, in composite particles, controlling the proportion of aggregates constituted by at least four of the particles to be small, controlling $D_{50}$ in a particle size distribution to be within a predetermined range, and controlling the average thickness of the composite particles, the proportion of bent composite particles (i.e., damaged composite particles), and the like to be within predetermined ranges.

In addition, the present inventor has found, as a result of intensive studies, that the above-described problems can be solved by controlling, in a composite metal pigment, the average thickness of composite particles, the particle sizes of the composite particles, and the like to be within predetermined ranges, and have completed the second aspect of the first invention of the present application.

Furthermore, the present inventors have found that the mechanical strength of a polysiloxane layer for coating can be improved by making the polysiloxane layer have a strong structure with a specific chemical structure without damaging a metal pigment, whereby the problems in the second invention of the present application can be solved. Then, the present inventors have completed the metal pigment, comprising composite particles, of the second invention of the present application by, when a metal pigment is coated with a polysiloxane layer, appropriately setting a catalyst type/amount/addition time, temperature, and the like for obtaining polysiloxane in order to increase the reaction rate of the polysiloxane while suppressing metal corrosion, more specifically, by adding a basic catalyst in two stages, starting the reaction under mild conditions where metal corrosion is less likely to occur, and then performing the reaction under conditions where the reaction progresses fast and the reaction rate can be increased.

In addition, the present inventor has found, as a result of intensive studies, that, when a metal particle is coated with a silicon compound using a stirring vessel-type reaction apparatus, the size of the stirring vessel-type reaction apparatus and stirring conditions (stirring blade conditions and linear speed) are controlled to be within predetermined ranges, whereby the metal particle is not damaged and flocculation, possibly occurring at the time of condensation, can be suppressed, and have completed the third invention of the present application.

That is, the respective inventions of the present application and aspects thereof are as follows:

[1] A metal pigment comprising composite particles having metal particles and one or more coating layers formed on surfaces of the metal particles, wherein

(1) the composite particles have a flaky shape,
(2) $D_{50}$ based on volume is 0.1 to 30 $\mu$m when a particle size distribution of the composite particles is measured by a laser diffraction particle size distribution meter, and
(3) the composite particles have an average thickness of 15 to 300 nm.

[2] The metal pigment according to [1], wherein the proportion of the composite particles that are bent is 10% or less.
[3] The metal pigment according to [1] or [2], wherein the number proportion of aggregates constituted by at least four of the composite particles, is 35% or less with respect to a total number of the composite particles.
[4] The metal pigment according to any one of [1] to [3], wherein the metal particles contain aluminum or an aluminum alloy.
[5] The metal pigment according to any one of [1] to [4], wherein the one or more coating layers include a metal oxide coating layer.
[6] The metal pigment according to any one of [1] to [5], wherein the one or more coating layers include a silicon compound-containing layer.
[7] The metal pigment according to any one of [1] to [6], wherein at least one layer of the coating layers is a polysiloxane layer.
[8] The metal pigment according to any one of [1] to [7], wherein the composite particles have an average particle thickness of 15 to 160 nm.
[9] The metal pigment according to any one of [1] to [8], wherein the composite particles have an average aspect ratio of 20 to 400.
[10] The metal pigment according to [7], wherein the proportion of Q4 structures, in which a Si atom has four -O-Si- bonds, in the structure of polysiloxane constituting the polysiloxane layer, is 40 to 90%.
[11] The metal pigment according to any one of [1] to [10], wherein, when surfaces of the composite particles are evaluated by XPS, the relative element concentration, ((A/B) $\times$ 100), between the element concentration of metal, A, and the element concentration of Si, B, is 10% by mole or less.
[12] The metal pigment according to [7] or [10], wherein the polysiloxane layer has an average thickness of 5 to 100 nm.
[13] The metal pigment according to any one of [1] to [12], wherein a hydrophilicity, A, defined by the sum of (the proportion of Q1 structures, in which a Si atom has one -O-Si- bond, $\times$ 3) + (the proportion of Q2 structures, in which a Si atom has two -O-Si- bonds, $\times$ 2) + (the proportion of Q3 structures, in which a Si atom has three -O-Si- bonds), is 10 to 80%.
[14] The metal pigment according to any one of [1] to [13], wherein the composite particles further contain a coating layer containing at least one of a metal, a metal oxide, a metal hydrate, and a resin.
[15] A metal pigment comprising composite particles in which metal particles are coated with a polysiloxane layer, wherein

1) the proportion of Q4 structures, in which a Si atom has four -O-Si- bonds in the structure of the polysiloxane, is 40 to 90%, and
2) when surfaces of the composite particles are evaluated by XPS, the relative element concentration, ((A/B) $\times$ 100), between the element concentration of metal, A, and the element concentration of Si, B, is 10% by mole or less.

[16] The metal pigment according to any one of [1] to [15], wherein when 200 g of an aqueous metallic coating material, containing 12 g of the metal pigment as a nonvolatile content, 18 g of methoxypropanol, 110 g of an aqueous acrylic resin, 18 g of a melamine resin, and 12 g of water, is collected in a flask and a cumulative amount of generated hydrogen gas is measured in a constant-temperature water bath at 60°C for up to 24 hours, gas generation is 10 ml or less.
[17] An aqueous metallic coating material comprising the metal pigment according to any one of [1] to [15] and 5% by mass or more of water, wherein when 200 g of the aqueous metallic coating material is collected in a flask and a cumulative amount of generated hydrogen gas is measured in a constant-temperature water bath at 60°C for up to 24 hours, gas generation is 10 ml or less.
[18] A metal pigment composition comprising the metal pigment according to any one of [1] to [16].
[19] An aqueous coating material composition comprising the metal pigment according to any one of [1] to [16].
[20] An aqueous ink composition comprising the metal pigment according to any one of [1] to [16].
[21] A coating film comprising the metal pigment according to any one of [1] to [16].
[22] A method for manufacturing a metal pigment, using a stirring vessel-type reaction apparatus and comprising following steps (1) to (3):

(1) dispersing metal particles in a solvent;
(2) coating the metal particles with a silicon compound; and
(3) filtering/washing the metal particles, wherein
the stirring vessel-type reaction apparatus:

includes a reactor having a volume of 100 L or more; and
has the ratio of the maximum diameter of a stirring blade to the diameter of the reactor is in a range of 0.2 to 1.0, and the shortest distance between an inner surface of the reactor and a tip of the stirring blade is 10 mm or more; and
has the tip speed of the stirring blade, while being stirred, is 1 to 20 m/s.

[23] The manufacturing method according to [22], wherein:

in the step (1), the average particle size of the metal particles in a dispersion is 1.2 times or less the average particle size of the metal particles as a raw material, and the metal particles in the dispersion are uniformly dispersed in the solvent;
in the step (2), stirring is performed to not form a stagnation portion in a surface layer and a bottom; and
the average particle size of the composite particles contained in the metal pigment obtained after the step (3) is 1.3 times or less the average particle size of the metal particles as a raw material.

[24] The manufacturing method according to [22] or [23], wherein in the step (1) and/or (2), a treatment liquid extracted from a vicinity of the bottom of the reactor is returned to the reactor at an upper portion of the reactor for circulation.
[25] The manufacturing method according to any one of [22] to [24], wherein in the step (2), after a silicon-containing raw material and a catalyst are put in, an inner wall of the reactor near a liquid contact portion between the reactor and a mixed liquid is washed with a reaction liquid or the solvent to reduce deposits or stagnant matters.
[26] The manufacturing method according to any one of [22] to [25], wherein the step (2) is performed for 2 hours or more.
[27] The manufacturing method according to any one of [22] to [26], wherein the metal pigment according to any one of [1] to 16] is manufactured.
[28] A metal pigment obtained by the manufacturing method according to any one of [22] to [27].
[29] A stirring vessel-type reaction apparatus used in the manufacturing method according to any one of [22] to [27].

ADVANTAGEOUS EFFECTS OF INVENTION

According to the first invention of the present application, it is possible to obtain a metal pigment composition containing novel composite particles that are not present in the conventional techniques, and a novel composite metal pigment that is not present in the conventional techniques.
According to a preferred embodiment of the first aspect of the first invention of the present application, it is possible to obtain a metal pigment composition that has a reduced flocculation property of individual particles, has excellent hiding power and color tone (brightness feeling, etc.), and generates less gas.
In addition, according to a further preferred embodiment of the first aspect of the first invention of the present application, it is possible to obtain a metal pigment composition that has a reduced flocculation property of individual particles, has excellent hiding power and color tone, has less generation of gas, and has good storage stability.
Since the composite metal pigment of the second aspect of the first invention of the present application can effectively suppress flocculation or deformation of the composite particles constituting the composite metal pigment, excellent designability and gloss and suppression of seeds in a coating film such as a metallic coating film, stability in an aqueous coating material, and the like can be balanced at a high level beyond the limits of the conventional techniques.
According to the second invention of the present application, a novel metal pigment that is not present in the conventional techniques, comprising composite particles coated with a polysiloxane layer, is provided.
In addition, according to the second invention of the present application, it is possible to provide a metal pigment in which the polysiloxane constituting the coating layer of the composite particles has a high reaction rate, and mechanical stability, storage stability (gas generation), and color tone are excellent.
According to the third invention of the present application, it is possible to provide a method for manufacturing a metal pigment composition with less flocculation. According to an embodiment, it is possible to obtain a metal pigment composition that has a reduced flocculation property of individual particles, has excellent hiding power and color tone (brightness feeling, etc.), and generates less gas. In addition, according to an embodiment, it is possible to provide a stirring vessel-type reaction apparatus for manufacturing the metal pigment composition.

DESCRIPTION OF EMBODIMENTS

Hereinafter, the present inventions will be described with reference to typical or preferred embodiments, but the present inventions are not limited by these embodiments. Unless clearly indicated, these embodiments may be freely combined within the scopes of the inventions defined in the appended claims.

First invention

A first invention of the present application is
a metal pigment comprising composite particles having metal particles and one or more coating layers formed on surfaces of the metal particles, wherein

   (1) the composite particles have a flaky shape,
   (2) $D_{50}$ based on volume is 0.1 to 30 $\mu$m when a particle size distribution of the composite particles is measured by a laser diffraction particle size distribution meter, and
   (3) the composite particles have an average thickness of 15 to 300 nm.

In the first invention of the present application, the proportion of the composite particles that are bent is preferably 10% or less.
In the first invention of the present application, the number proportion of aggregates constituted by at least four of the composite particles, is preferably 35% or less with respect to the total number of the composite particles.
In the first invention of the present application, the metal particles preferably contain aluminum or an aluminum alloy.
In the first invention of the present application, the one or more coating layers preferably include a metal oxide coating layer.
In the first invention of the present application, at least one layer of the coating layers is preferably a silicon compound-containing layer.
In the first invention of the present application, at least one layer of the coating layers is preferably a polysiloxane layer. Here, the proportion of Q4 structures, in which a Si atom has four -O-Si- bonds in the structure of polysiloxane constituting the polysiloxane layer, is more preferably 40 to 90%. In addition, the polysiloxane layer more preferably has an average thickness of 5 to 100 nm.
In the first invention of the present application, the composite particles preferably have an average particle thickness of 15 to 160 nm.
In the first invention of the present application, the composite particles preferably have an average aspect ratio of 20 to 400.
In the first invention of the present application, when the surfaces of the composite particle are evaluated by XPS, the relative element concentration, ($(A/B) \times 100$), between the element concentration of metal, A, and the element concentration of Si, B, is preferably 10% by mole or less.
In the first invention of the present application, a hydrophilicity, A, defined by the sum of (the proportion of Q1 structures, in which a Si atom has one -O-Si- bond, $\times$ 3) + (the proportion of Q2 structures, in which the Si atom has two -O-Si- bonds, $\times$ 2) + (the proportion of Q3 structures, in which the Si atom has three -O-Si- bonds), is preferably 10 to 80%.
In the first invention of the present application, the composite particles preferably further include a coating layer containing at least one of a metal, a metal oxide, a metal hydrate, and a resin.
For the metal pigment of the first invention of the present application, when 200 g of an aqueous metallic coating material, containing 12 g of the metal pigment as a nonvolatile content, 18 g of methoxypropanol, 110 g of an aqueous acrylic resin, 18 g of a melamine resin, and 12 g of water, is collected in a flask and a cumulative amount of generated hydrogen gas is measured in a constant-temperature water bath at 60°C for up to 24 hours, gas generation is preferably 10 ml or less.
The metal pigment of the first invention of the present application is preferably used in a metal pigment composition containing the metal pigment.
The metal pigment of the first invention of the present application is preferably used in an aqueous coating material composition containing the metal pigment. The metal pigment of the first invention of the present application is particularly preferably used in an aqueous metallic coating material, and when 200 g of an aqueous metallic coating material, containing the metal pigment and 5% by mass or more of water, is collected in a flask and a cumulative amount of generated hydrogen gas is measured in a constant-temperature water bath at 60°C for up to 24 hours, gas generation is preferably 10 ml or less.

The metal pigment of the first invention of the present application is preferably used in an aqueous ink composition containing the metal pigment.

The metal pigment of the first invention of the present application is preferably used in a coating film containing the metal pigment.

Metal oxide coating layer

The one or more coating layers constituting the composite particles in the first invention of the present application preferably include a metal oxide coating layer.

The metal oxide coating constituting the metal oxide coating layer may be formed on the entire surface of the metal particle, or may be formed on only a part of the surface.

The metal oxide coating may be entirely composed of a metal oxide, or only a part thereof may be composed of a metal oxide and contain components other than metal oxide.

Details of the metal oxide coating layer and the metal oxide coating constituting the metal oxide coating layer, such as the preferred form thereof and the like, are the same as those described later in relation to the first aspect and second aspect of the first invention of the present application.

The one or more coating layers constituting the composite particles may have another coating layer (second coating layer) in addition to the metal oxide coating layer. Such a second coating layer is the same as that described later in relation to the first aspect and second aspect of the first invention of the present application.

Silicon compound-containing layer

As the metal oxide coating layer, a silicon compound-containing layer is particularly preferably used.

That is, in the metal pigment of the first invention of the present application, at least one of the one or more coating layers formed on the surfaces of metal particles to be the cores of the composite particles is preferably a silicon compound-containing layer. When at least one of the coating layers is a silicon compound-containing layer, gas generation in an aqueous coating material can be suppressed, good storage stability can be obtained, and water resistance, when a coating film is formed, is excellent.

Details of the silicon-containing compound layer, such as the preferred form thereof and the like, are the same as those described later in relation to the first aspect and second aspect of the first invention of the present application.

Polysiloxane layer

As the silicon compound-containing layer, a polysiloxane layer is particularly preferably used.

Therefore, the composite particles contained in the metal pigment of the first invention of the present application particularly preferably have a structure in which the metal particles are placed at centers and coated with polysiloxane.

Polysiloxane is composed of a compound containing a siloxane bond (Si-O-Si) composed of silicon atoms (Si) and an oxygen atom (O). These compounds may be either crystalline or amorphous, but are particularly preferably amorphous.

In addition, the polysiloxane may be formed from an organosilicon compound (including a silane coupling agent) as a starting material. In this case, the organosilicon compound or a component derived from the organosilicon compound may be contained as long as the effects of the first invention of the present application are not impaired. In a typical example, polysiloxane can be formed by hydrolyzing an organosilicon compound.

The polysiloxane layer may contain additives other than the silicon compound, impurities, and the like as long as the characteristics of the first invention of the present application are not impaired.

Details of the polysiloxane layer, such as the preferred form thereof and the like, are the same as those described later in relation to the second invention of the present application.

In the first invention of the present application, particularly preferred aspects are the first aspect and second aspect described in detail below.

First aspect of first invention

A first aspect of the first invention of the present application is
a metal pigment (composition) comprising composite particles having metal particles and one or more coating layers formed on surfaces of the metal particles, wherein

(1) the composite particles have a flaky shape,

(2) $D_{50}$ based on volume is 0.1 to 30 $\mu$m when a particle size distribution of the composite particles is measured by a laser diffraction particle size distribution meter,

(3) the composite particles have an average thickness of 20 to 300 nm,

(4) at least one layer of the coating layers is a metal oxide film layer, and preferably a silicon compound-containing layer,

(5) the proportion of the composite particles that are bent is 10% or less, and

(6) the number proportion of aggregates constituted by at least four of the composite particles, is 35% or less with respect to the total number of the composite particles.

Hereinafter, the respective components of the metal pigment (composition) of the first aspect and the details thereof will be described.

1. Composite particles contained in metal pigment composition

The metal pigment composition according to the first aspect of the first invention of the present application comprises composite particles containing metal particles and one or more coating layers formed on the surfaces of the metal particles.

That is, in the description of the above-described first aspect in the present description, the term "metal pigment composition" refers to a composition: in which composite particles containing metal particles and one or more coating layers formed on the surfaces of the metal particles are dispersed in a solvent containing water and/or a hydrophilic solvent, or the composite particles entrain a solvent containing water and/or a hydrophilic solvent; and which may optionally contain other components.

In the description of the above-described first aspect in the present description, a composition obtained by adding a resin to the metal pigment composition may be referred to as a "resin composition" or a "resin composition containing the metal pigment composition" in distinction from the term "metal pigment composition".

Metal particles

The composite particles contained in the metal pigment composition according to the first aspect of the first invention of the present application contain metal particles and one or more coating layers formed on the surfaces of the metal particles. That is, one or more coating layers are formed on the surfaces of metal particles to be the cores of the composite particles.

The material of the metal particles (core particles) constituting the composite particles is not particularly limited, and may be any metal used for known or commercially available metal pigments, such as aluminum, an aluminum alloy, zinc, iron, magnesium, nickel, copper, silver, tin, chromium, or stainless steel. In the present description, the metal of the metal particles constituting the composite particles includes not only a metal simple substance but also an alloy and an intermetallic compound.

The metal particles may be used alone or in combination of two or more.

The average particle size of the metal particles is not particularly limited, but may be such an average particle size that can achieve the $D_{50}$ in the particle size distribution of the composite particles described later. That is, the volume average particle size ($D_{50}$) of the metal particles may be set such that the $D_{50}$ is 0.1 to 30 $\mu$m when the volume distribution of the composite particles is measured by a laser diffraction particle size distribution meter.

The average particle size of the metal particles can be controlled by appropriately adjusting, in the step of grinding and sieving/filtering raw material atomized metal powder (e.g., aluminum powder) using a ball mill or the like, the particle size of the raw material atomized metal powder, the mass per grinding ball in the case of using a ball mill, the rotation speed of a grinder, the degrees of the sieving and filter press, and the like.

The shape of the metal particles is not limited, but is particularly desirably a flaky shape (flake-like shape). As a result, the composite particles contained in the metal pigment composition according to the first aspect of the first invention of the present application can also have a flaky shape, and as a result, high hiding power and the like can be more reliably obtained. From such a viewpoint, the aspect ratio (shape factor obtained by dividing an average particle size by an average thickness) of the flaky shaped metal particles is preferably 1 to 1,000, and particularly preferably 15 to 500. When the aspect ratio of the metal particles is 1 or more, a higher brightness feeling can be obtained. In addition, when the aspect ratio of the metal particles is 1,000 or less, the mechanical strength of the flakes is maintained, and a stable color tone can be obtained. Here, the average thickness of the metal particles used in the first aspect of the first invention of the present application can be calculated from the water surface diffusion area and density of the metal particles.

The metal particles do not necessarily need to be composed only of metal, and as long as the effects of the first aspect of the first invention of the present application are not impaired, particles, obtained by coating the surfaces of, for example, synthetic resin particles or inorganic particles, such as mica or glass, with metal, can also be used. In the first aspect of the first invention of the present application, particles formed from aluminum or an aluminum alloy are desirable in terms of particularly high weather resistance, small specific gravity, easy availability, and the like.

Particularly suitable as the metal particles constituting the composite particles are aluminum flakes that are generally frequently used for metallic pigments. As the aluminum flakes, those having surface properties, particle sizes, and shapes that are required for metallic pigments, such as surface glossiness, whiteness, and brightness, are suitable. The aluminum flakes are commercially available usually in a paste state. The paste-like aluminum flakes may usually contain flaky shaped aluminum powder, mineral spirit (aliphatic hydrocarbon) used at the time of pulverization, a residual content of fatty acid, and an organic solvent such as solvent naphtha or xylene. The paste-like aluminum flakes may be used as they are, or may be used after the fatty acid and the like on the surfaces are removed with an organic solvent or the like in advance. In addition, a so-called aluminum-deposited foil, having a volume-based average particle size ($D_{50}$) of 3 to 30 $\mu$m and an average thickness (t) of 5 to 50 nm, can also be used.

Desirable physical properties of metal pigment (composition)

The metal pigment (composition) according to the first aspect of the first invention of the present application is characterized by satisfying the following physical property requirements.

(1) The composite particles have a flaky shape.
(2) $D_{50}$ based on volume is 0.1 to 30 $\mu$m when the particle size distribution of the composite particles is measured by a laser diffraction particle size distribution meter.
(3) The composite particles have an average thickness of 20 to 300 nm.
(4) At least one layer of the coating layers is a metal oxide film layer, and preferably a silicon compound-containing layer.
(5) The proportion of the composite particles that are bent is 10% or less.
(6) The number proportion of aggregates constituted by at least four of the composite particles, is 35% or less with respect to the total number of the composite particles.

Each of these physical property requirements will be described below.

(1) The composite particles have a flaky shape.

The shape of the composite particles of the metal pigment composition according to the first aspect of the first invention of the present application is a flaky shape (flake-like shape). As a result, a coating film formed by using the metal pigment composition can exhibit high hiding power and brightness feeling and the like. In the present description, the shape of the composite particles is a "flaky shape" (flake-like shape) means that an average aspect ratio (shape factor obtained by dividing an average particle size by an average thickness) of the composite particles is 5 or more. From the viewpoint of obtaining high hiding power and brightness feeling, the average aspect ratio of the flaky shaped composite particles is preferably 5 to 1,000, and particularly more preferably 15 to 500. When the average aspect ratio is 5 or more, a sufficient brightness feeling can be exhibited, whereas when the average aspect ratio is 1,000 or less, the mechanical strength of the flakes is maintained, and a stable color tone can be obtained.

When a plurality of the composite particles are flocculated/fixed, the "composite particles" in this physical property requirement refer to flocculated matters (aggregates) thereof.

Here, the average particle size for calculating the average aspect ratio of the composite particles is $D_{50}$ based on volume referred to as a median diameter, which will be described later with respect to the requirement (2). The average thickness for calculating the average aspect ratio of the composite particles will be described later with respect to the requirement (3).

(2) $D_{50}$ based on volume is 0.1 to 30 $\mu$m when the particle size distribution of the composite particles is measured by a laser diffraction particle size distribution meter.

$D_{50}$ based on volume is 0.1 to 30 $\mu$m when the particle size distribution of the composite particles is measured by a laser diffraction particle size distribution meter. As a result, a coating film formed by using the metal pigment composition can exhibit high hiding power and brightness feeling and the like, and the flocculation property of individual particles can be suppressed to be small. This $D_{50}$ based on volume is also generally referred to as a median diameter.

From the viewpoint of obtaining high hiding power and brightness feeling, and small flocculation property, the $D_{50}$ based on volume, when the particle size distribution of the composite particles is measured by a laser diffraction particle size distribution meter, may be preferably 0.1 to 25 $\mu$m, more preferably 0.1 to 20 $\mu$m, even more preferably 0.1 to 15 $\mu$m, and particularly preferably 0.1 to 10 $\mu$m. Alternatively, from the same viewpoint, the $D_{50}$ based on volume may be 0.2 to 25 $\mu$m, more preferably 0.5 to 20 $\mu$m, even more preferably 1 to 20 $\mu$m, and yet even more preferably 3 to 20 $\mu$m when the particle size distribution of the composite particles is measured by a laser diffraction particle size distribution meter.

When a plurality of the composite particles are flocculated/fixed, the "composite particles" in this physical property requirement refer to flocculated matters (aggregates) thereof.

Here, the $D_{50}$ based on volume, when the particle size distribution of the composite particles is measured by a laser diffraction particle size distribution meter, refers to the particle size at the cumulative frequency of 50% in a volume-based cumulative particle size distribution. The laser diffraction particle size distribution meter is not particularly limited, but "LA-300" (manufactured by HORIBA, Ltd.) or the like can be used. As a measuring solvent, isopropyl alcohol or mineral spirit can be used. For example, a metal pigment composition comprising composite particles as a sample is subjected to ultrasonic dispersion for 2 minutes as a pretreatment, and then it is put into a dispersion vessel. After it is confirmed that the metal pigment composition is properly dispersed, the $D_{50}$ can be measured.

The particle size of the composite particles in a resin composition described later cannot be measured by this method. Therefore, as an alternative method in this case, for example, a method can be adopted in which: the composite particles in the resin composition are photographed from the surface of a coating film by an optical microscope, a laser microscope, or the like; and an equivalent circle diameter distribution is obtained by using commercially available image analysis software, whereby the particle size is determined.

The $D_{50}$ based on volume of the composite particles contained in the metal pigment composition can be controlled by: in a method for manufacturing a metal pigment composition described later, appropriately adjusting, in the step of grinding and sieving/filtering raw material atomized metal powder (e.g., aluminum powder) using a ball mill or the like, the particle size of the raw material atomized metal powder, the mass per one grinding ball in the case of using a ball mill, the rotation speed of a grinder, the degrees of the sieving and filter press, and the like; and appropriately adjusting, in the step of coating with the metal oxide film layer, preferably the silicon compound-containing layer (and another coating layer as necessary), the type of the organosilicon compound to be used, the pH, the concentration, the stirring temperature, the stirring time, the type of a stirring apparatus, the power/degree of the stirring (type and diameter of a stirring blade, rotation speed, presence or absence of external stirring, etc.) and the like in the coating step (when the organosilicon compound is hydrolyzed and used, the step thereof is also included), and the like.

(3) The composite particles have an average thickness of 20 to 300 nm.

The average thickness of the composite particles contained in the metal pigment composition according to the first aspect of the first invention of the present application is 20 to 300 nm. As a result, in combination with the satisfaction of the requirement (2), the coating film formed by using the metal pigment composition can exhibit higher hiding power and brightness feeling and the like, and the flocculation property of individual particles can be suppressed to be smaller.

From the above viewpoint, the average thickness of the composite particles is preferably 20 to 300 nm, more preferably 20 to 250 nm, and even more preferably 20 to 200 nm, and when even higher hiding property and high luminance are desired, it is yet even more preferably 30 to 150 nm.

When a plurality of the composite particles are flocculated/fixed, the "composite particles" in this physical property requirement refer to flocculated matters (aggregates) thereof.

Here, the average thickness of the composite particles can be calculated from the water surface diffusion area and density of the composite particles. The water surface diffusion area refers to an area occupied by dry composite particles per unit mass when composite particles that are dried by using a leafing phenomenon are uniformly diffused on a water surface to cover the surface without a gap. The water surface diffusion area can be measured in accordance with JIS K 5906: 1998.

However, when the hydrophilicity of the surfaces of the composite particle according to the first aspect of the first invention of the present application is strong, it may be difficult to obtain the water surface diffusion area. In this case, the average thickness of the composite particles can be measured according to the method described in Examples described later. That is, a coating film (thin film) is formed by using a metal pigment composition in which composite particles are dispersed in a mixture of an alcohol-based solvent, such as methoxypropanol, and water, and the thickness of the composite particles (30 or more, preferably 50 or more, particularly preferably 500 or more) is observed by a scanning electron microscope (SEM), whereby the average thickness of the composite particles can be determined.

Similarly to the $D_{50}$ based on volume, the average thickness of the composite particles contained in the metal pigment composition can be controlled by: in a method for manufacturing a metal pigment composition described later, appropriately adjusting, in the step of grinding and sieving/filtering raw material atomized metal powder (e.g., aluminum powder) using a ball mill or the like, the particle size of the raw material atomized metal powder, the mass per one grinding ball in the case of using a ball mill, the rotation speed of a grinder, the degrees of the sieving and filter press, and the like; and appropriately adjusting, in the step of coating with the metal oxide film layer, preferably the silicon compound-containing layer (and another coating layer as necessary), the type of the organosilicon compound to be used, the pH, the concentration, the stirring temperature, the stirring time, the type of a stirring apparatus, the power/degree of the stirring (type and diameter of a stirring blade, rotation speed, presence or absence of external stirring, etc.) and the like in the coating step (when the organosilicon compound is hydrolyzed and used, the step thereof is also included), and the like.

(4) At least one layer of the coating layers is a metal oxide film layer, and preferably a silicon compound-containing layer.

In the metal pigment composition according to the first aspect of the first invention of the present application, at least one of the one or more coating layers formed on the surfaces of the metal particles to be the cores of the composite particles is a metal oxide film layer, and preferably a silicon compound-containing layer.

When at least one of the coating layers is a metal oxide coating layer, and preferably a silicon compound-containing layer, gas generation in an aqueous coating material can be suppressed, good storage stability can be obtained, and water resistance, when a coating film is formed, is excellent.

In addition to the metal oxide film layer, the coating layers of the composite particle may have another coating layer (second coating layer). Such a second coating layer will be further described later.

The metal oxide coating is a film formed by a layer containing a metal oxide, and may be formed on the entire surface of the metal particle, or may be formed on only a part of the surface.

The metal oxide coating may be entirely composed of a metal oxide, or only a part thereof may be composed of a metal oxide and contain components other than metal oxide.

The metal oxide constituting the metal oxide coating is a compound containing oxygen and at least one metal element as the constituent elements thereof.

Therefore, the metal oxide may be a metal oxide in a narrow sense having only oxygen and at least one metal element as the constituent elements thereof, but as long as oxygen and at least one metal element are contained as the constituent elements thereof, elements other than the oxygen and the metal element may be contained as the constituent elements thereof. For example, a metal hydroxide, a metal oxide hydrate, a metal oxynitride, or the like may be contained. A compound containing an organic group may also be contained.

The metal oxide may be a so-called single oxide containing only one type of a metal element as the constituent element, or may be a composite oxide containing two or more of metal elements as the constituent elements.

The at least one metal element as the constituent element of the metal oxide may be a typical metal or a transition metal. Furthermore, the metal element may be a so-called metalloid element. Among them, a metal oxide containing silicon as a constituent element is particularly suitable as a metal oxide constituting a metal oxide coating layer (in this case, also corresponds to the silicon compound-containing layer).

Specific examples of the suitable metal oxide constituting the metal oxide coating include silicon oxide, aluminum oxide, boron oxide, zirconium oxide, cerium oxide, iron oxide, titanium oxide, chromium oxide, tin oxide, molybdenum oxide, vanadium oxide, oxide hydrates thereof, hydroxides thereof, and mixtures thereof. Among them, silicon oxide, aluminum oxide, and mixtures thereof, and oxide hydrates and hydroxides thereof are preferably used. Particularly preferably, silicon oxides, such as silicon oxide (also corresponds to silicon compound), silicon hydroxide, and/or silicon oxide hydrate, can be used.

The silicon compound-containing layer preferably used as the metal oxide film layer is desirably a layer composed of a compound particularly containing a Si-O- bond (siloxane bond). Examples of such a layer include a layer containing at least one of a silane-based compound and a silicon oxide. Examples of such a compound include silane-based compounds $[H_3SiO(H_2SiO)_nSiH_3]$ (wherein, n indicates an arbitrary positive integer), silicon oxides represented by $SiO_2$, $SiO_2 \cdot nH_2O$ (wherein, n indicates an arbitrary positive integer), and the like. These silane-based compounds and silicon oxides may be either crystalline or amorphous, but are particularly preferably amorphous. Therefore, a layer containing, for example, amorphous silica can also be suitably adopted as the layer containing silicon oxide (silica, etc.).

In addition, the layer composed of a compound containing a Si-O bond may be a layer formed by using an organosilicon compound (including a silane coupling agent) as a starting material. In this case, the silicon compound-containing layer may contain an organosilicon compound or a component derived from the organosilicon compound as long as the effects of the first aspect of the first invention of the present application are not impaired. In a typical example, a layer composed of a compound containing a Si-O bond can be formed by hydrolyzing an organosilicon compound.

The silicon compound-containing layer may contain additives other than the silicon compound, impurities, and the like as long as the characteristics of the first aspect of the first invention of the present application are not impaired.

The content of silicon contained in the silicon compound-containing layer is not particularly limited, but is preferably 1 to 30 parts by mass based on 100 parts by mass of the metal particles, and particularly more preferably 2 to 20 parts by mass. When the silicon content of the silicon compound-containing layer is 1 part by mass or more based on 100 parts by mass of the metal particles, the corrosion resistance, water dispersibility, stability, and the like of the metal pigment composition can be maintained high. When the silicon content of the silicon compound-containing layer is 30 parts by mass or less based on 100 parts by mass of the metal particles, flocculation of the composite particles and a decrease in hiding property or color tone, such as a metallic gloss feeling, can be prevented.

The coating layer of the composite particle contained in the metal pigment composition according to the first aspect of the first invention of the present application is particularly preferably hydrophilic. The composite particles usually form a metal pigment composition in the form of being dispersed in an aqueous solvent (water or a mixed solvent containing water and an organic solvent), and when the coating layer has a hydrophilic surface, the composite particles can be highly dispersed in such an aqueous solvent. Moreover, the silicon oxide (amorphous silica, etc.) is very stable in an aqueous solvent, so that it is possible to provide a metal pigment composition comprising composite particles that are highly stable in an aqueous solvent. From such a viewpoint, in the composite particle contained in the metal pigment composition according to the first aspect of the first invention of the present application, at least the outermost layer is desirably a metal oxide film layer, and preferably a silicon compound-containing layer (particularly, a layer composed of a compound containing a Si-O bond). When the coating layer is composed of a plurality of layers, in addition to the metal oxide film layer as the outermost layer, preferably the silicon compound-containing layer, a metal oxide film layer, preferably a silicon compound-containing layer (particularly, a Si-O-based coating layer) may be separately formed as a layer other than the outermost layer.

The thickness of the coating layer of each composite particle is not particularly limited as long as the average thickness of the composite particle is within the range of 20 to 300 nm as described above. The thickness of the coating layer is usually desirably within the range of about 1 to 50 nm (particularly, 1 to 30 nm, and further 1 to 20 nm). When the thickness of the coating layer is 1 nm or more, a coating film, which has sufficient water resistance and in which occurrence of corrosion or discoloration of the metal particles in an aqueous coating material is suppressed, can be obtained. On the other hand, when the thickness of the coating layer is about 50 nm or less, the lightness, sharpness, and hiding power of the coating film can be maintained at high levels.

The thickness of the metal oxide film layer, preferably the silicon compound-containing layer, contained in the coating layers of each composite particle is also not particularly limited as long as the average thickness of the composite particle is within the range of 20 to 300 nm as described above. From the viewpoint of exhibiting the function of the layer, the thickness of the metal oxide film layer, preferably the silicon compound-containing layer, may be usually within the range of 1 to 20 nm, and is particularly preferably within the range of 1 to 15 nm.

Specific examples of the organosilicon compound that can be preferably used in the first aspect of the first invention of the present invention will be further described below, but the organosilicon compound is not limited to these specific examples.

The organosilicon compound may contain at least one organosilicon compound represented by the following general formula (1), and at least one selected from silane coupling agents represented by any one of the following general formulas (2), (3), and (4), and partial condensates thereof.

$$Si(OR^1)_4 \cdots \qquad (1)$$

(wherein, $R^1$ is a hydrogen atom or a hydrocarbon group having 1 to 8 carbon atoms, and all of $R^1$s may the same, some may be the same, or all may be different.)

$$R^2_m Si(OR^3)_{4-m} \cdots \qquad (2)$$

(wherein, $R^2$ is a hydrogen atom or a hydrocarbon group having 1 to 30 carbon atoms and optionally containing a halogen group, and $R^3$ is a hydrogen atom or a hydrocarbon group having 1 to 8 carbon atoms. $R^2$ and $R^3$ may be the same or different, and when there are two or more $R^2$s or $R^3$s, all may be the same, some may be the same, or all may be different. $1 \leq m \leq 3$.)

$$R^4_p R^5_q Si(OR^6)_{4-p-q} \cdots \qquad (3)$$

(wherein, $R^4$ is a group containing a reactive group capable of chemically bonding to another functional group, $R^5$ is a hydrogen atom or a hydrocarbon group having 1 to 30 carbon atoms and optionally containing a halogen group, and $R^6$ is a hydrogen atom or a hydrocarbon group having 1 to 8 carbon atoms. When there are two or more $R^4$s, $R^5$s, or $R^6$s, all may be the same, some may be the same, or all may be different. $1 \leq p \leq 3$, $0 \leq q \leq 2$, and $1 \leq p + q \leq 3$.)

$$R^7_r SiCl_{4-r} \cdots \qquad (4)$$

(wherein, $R^7$ is a hydrogen atom or a hydrocarbon group having 1 to 30 carbon atoms and optionally containing a halogen group, and when there are two or more $R^7$s, all may be the same, some may be the same, or all may be different. $0 \leq r \leq 3$.)

Examples of the hydrocarbon group in $R^1$ of the formula (1) include methyl, ethyl, propyl, butyl, hexyl, and octyl, which may be branched or linear. Among these hydrocarbon groups, methyl, ethyl, propyl, and butyl are particularly preferable. In addition, all four $R^1$s may be the same, some may be the same, or all may be different.

Preferred examples of the organosilicon compound represented by the formula (1) include tetramethoxysilane, tetraethoxysilane, tetraisopropoxysilane, and tetrabutoxysilane. Among them, tetraethoxysilane is particularly preferable.

Examples of the hydrocarbon group in $R^2$ of the formula (2) include methyl, ethyl, propyl, butyl, hexyl, octyl, decyl, dodecyl, oleyl, stearyl, cyclohexyl, phenyl, benzyl, and naphthyl, which may be branched or linear or may contain a halogen group such as fluorine, chlorine, or bromine. Among them, a hydrocarbon group having 1 to 18 carbon atoms is particularly preferable. When there are two or more $R^2$s, all may be the same, some may be the same, or all may be different. The number of $R^2$s in the molecule is m = 1 to 3, that is, 1 to 3 in the formula (2), but m is more preferably 1 or 2.

Examples of the hydrocarbon group in $R^3$ of the formula (2) include methyl, ethyl, propyl, butyl, hexyl, and octyl, which may be branched or linear. Among these hydrocarbon groups, methyl, ethyl, propyl, and butyl are particularly preferable. When there are two or more $R^3$s, all may be the same, some may be the same, or all may be different.

Preferred examples of such an organosilicon compound (silane coupling agent) of the formula (2) include methyltrimethoxysilane, methyltriethoxysilane, methyltributoxysilane, dimethyldimethoxysilane, dimethyldiethoxysilane, dimethyldibutoxysilane, trimethylmethoxysilane, trimethylethoxysilane, n-propyltrimethoxysilane, n-propyltriethoxysilane, n-propyltributoxysilane, butyltrimethoxysilane, butyltriethoxysilane, butyltributoxysilane, dibutyldimethoxysilane, dibutyldiethoxysilane, dibutyldibutoxysilane, isobutyltrimethoxysilane, isobutyltriethoxysilane, hexyltrimethoxysilane, hexyltriethoxysilane, dihexyldimethoxysilane, dihexyldiethoxysilane, octyltrimethoxysilane, octyltriethoxysilane, dioctyldimethoxysilane, dioctyldiethoxysilane, dioctylethoxybutoxysilane, decyltrimethoxysilane, decyltriethoxysilane, didecyldimethoxysilane, didecyldiethoxysilane, octadecyltrimethoxysilane, octadecyltriethoxysilane, dioctadecyldimethoxysilane, dioctadecyldiethoxysilane, phenyltrimethoxysilane, phenyltriethoxysilane, diphenyldimethoxysilane, diphenyldiethoxysilane, trifluoropropyltrimethoxysilane, heptadecafluorodecyltrimethoxysilane, tridecafluorooctyltrimethoxysilane, tridecafluorooctyltriethoxysilane, 3-chloropropyltrimethoxysilane, 3-chloropropyltriethoxysilane, and 3-chloropropyltributoxysilane.

Examples of the reactive group capable of chemically bonding to another functional group in $R^4$ of the formula (3) include a vinyl group, an epoxy group, a styryl group, a methacryloxy group, an acryloxy group, an amino group, a ureido group, a mercapto group, a polysulfide group, and an isocyanate group.

When there are two or more $R^4$s, all may be the same, some may be the same, or all may be different. The number of $R^4$ in the molecule is p = 1 to 3, that is, 1 to 3 in the formula (3), but more preferably p = 1.

Examples of the hydrocarbon group of $R^5$ in the formula (3) include methyl, ethyl, propyl, butyl, hexyl, octyl, decyl, dodecyl, oleyl, stearyl, cyclohexyl, phenyl, benzyl, and naphthyl, which may be branched or linear or may contain a halogen group such as fluorine, chlorine, or bromine. Among them, a hydrocarbon group having 1 to 18 carbon atoms is particularly preferable. When there are two or more $R^5$s, all may be the same, some may be the same, or all may be different.

Examples of the hydrocarbon group in $R^6$ of the formula (3) include methyl, ethyl, propyl, butyl, hexyl, and octyl, which may be branched or linear. Among these hydrocarbon groups, methyl, ethyl, propyl, and butyl are particularly preferable. When there are two or more $R^6$s, all may be the same, some may be the same, or all may be different.

Preferred examples of such an organosilicon compound (silane coupling agent) of the formula (3) include vinyltrimethoxysilane, vinyltriethoxysilane, vinyl-tris(2-methoxyethoxy)silane, 2-(3,4-epoxycyclohexyl)ethyltrimethoxysilane, 3-glycidoxypropylmethyldiethoxysilane, 3-glycidoxypropyltrimethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-methyl-3-aminopropyl-trimethoxysilane, N-2-(aminoethyl)-3-aminopropylmethyldimethoxysilane, N-2-(aminoethyl)-3-aminopropylmethyldimethoxysilane, N-2-(aminoethyl)-3-aminopropylmethyldiethoxysilane, 3-aminopropyltrimethoxysilane, 3-aminopropyltriethoxysilane, N-phenyl-3-aminopropyltrimethoxysilane, N-(vinylbenzyl)-2-aminoethyl-3-aminopropyltrimethoxysilane, 3-triethoxysilyl-N-(1,3-dimethylbutylidene)propylamine, 3-ureidopropyltriethoxysilane, 3-mercaptopropylmethyldimethoxysilane, 3-mercaptopropyltrimethoxysilane, 3-mercaptopropyl-triethoxysilane, bis(triethoxysilylpropyl)tetrasulfide, and 3-isocyanatopropyltriethoxysilane.

Examples of the hydrocarbon group in $R^7$ of the formula (4) include methyl, ethyl, propyl, butyl, hexyl, octyl, decyl, dodecyl, oleyl, stearyl, cyclohexyl, phenyl, benzyl, and naphthyl, which may be branched or linear or may contain a halogen group such as fluorine, chlorine, or bromine. Among them, a hydrocarbon group having 1 to 12 carbon atoms is particularly preferable. When there are two or more $R^7$s, all may be the same, some may be the same, or all may be different. The number of $R^7$ in the molecule is r = 0 to 3, that is, zero to three $R^7$s in the formula (4), but r = 1 to 3 is more preferable.

Preferred examples of such an organosilicon compound (silane coupling agent) of the formula (4) include methyltrichlorosilane, dimethyldichlorosilane, trimethylchlorosilane, octyldimethylchlorosilane, phenyltrichlorosilane, vinyltrichlorosilane, and tetrachlorosilane.

The organosilicon compound represented by the general formula (1) may be used alone or in combination of two or more. The silane coupling agent represented by any one of the general formulas (2), (3), and (4) may also be used alone or in combination of two or more. When two or more are used in combination, only two or more of the silane coupling agents represented by any one of (2), (3), and (4) may be used in combination, or the silane coupling agents represented by two or more different general formulas may be used in combination.

The hydrolysate of the organosilicon compound and/or the condensation reaction product thereof are/is obtained by stirring and mixing the organosilicon compound, water in an amount necessary for performing a hydrolysis reaction, and a hydrolysis catalyst. At that time, a hydrophilic solvent can also be used as necessary. Various conditions of the hydrolysis reaction (i.e., reaction for forming the silicon compound-containing layer) will be described later.

As a raw material for the hydrolysis reaction and/or the condensation reaction thereof for obtaining the hydrolysate of the organosilicon compound and/or the condensation reaction product thereof, an oligomer partially condensed in advance may be used.

The condensation reaction of the hydrolysate of the organosilicon compound may be performed simultaneously with the hydrolysis reaction of the organosilicon compound, or may be performed in separate steps and with a catalyst changed as necessary. At that time, heating may be performed as necessary.

The coating layers of the composite particle contained in the metal pigment composition according to the first aspect of the first invention of the present application are not particularly limited as long as at least one layer is a metal oxide film layer, and preferably a silicon compound-containing layer, but a coating layer (hereinafter referred to as a "second coating layer") other than the metal oxide film layer, preferably the silicon compound-containing layer can be formed as necessary.

The second coating layer may contain, for example, at least one of a metal (alkali metal; alkaline earth metal; metal such as manganese, iron, cobalt, nickel, copper, or silver), a metal oxide (titanium oxide, zirconium oxide, iron oxide, or the like), a metal hydrate, and a resin (synthetic resin such as an acrylic resin, an alkyd resin, a polyester resin, a polyurethane resin, a polyvinyl acetate resin, a nitrocellulose resin, or a fluororesin). As the second coating layer, for example, a molybdenum-containing coating film, a phosphoric acid compound coating film, or the like can be formed. When the second coating layer is provided, the corrosion resistance of the metal particle can be improved, and the formation of the metal oxide film layer, preferably the silicon compound-containing layer can be promoted.

The second coating layer (when formed) is preferably formed particularly between the metal particle and the metal oxide film layer, preferably the silicon compound-containing layer. Therefore, for example, a layer configuration of "metal particle/second coating layer/metal oxide film layer, preferably silicon compound-containing layer" can be suitably adopted. Although not particularly limited, examples of the molybdenum-containing coating film can include those disclosed in JP-A-2003-147226, WO 2004/096921 A, JP-B-5979788, and JP-A-2019-151678. Examples of the phosphoric acid compound coating film include those disclosed in JP-B-4633239. Preferred examples of the molybdenum-containing material constituting the molybdenum-containing coating film include a mixed coordination type heteropolyanion compound disclosed in JP-A-2019-151678.

In another modification, the second coating layer can be formed outside the metal particle and the metal oxide film layer, preferably the silicon compound-containing layer. In yet another modification, the constituent components (such as a molybdenum-containing compound and a phosphoric acid compound) of the second coating layer can be contained in the metal oxide film layer, preferably the silicon compound-containing layer together with the metal oxide, preferably the silicon compound.

The mixed coordination type heteropolyanion compound, used in the aspect of forming the second coating layer (typically, molybdenum-containing coating film) other than the metal oxide film layer, preferably the silicon compound-containing layer of the composite particles contained in the metal pigment composition according to the first aspect of the first invention of the present application, is not particularly limited, and specific examples thereof include the following.

A mixed coordination type heteropolyanion of the mixed coordination type heteropolyanion compound that can be used has a structure in which some of the poly atoms of the heteropolyanion made of one element are replaced with other elements, and exhibits physical properties different from those of a mixture of the respective heteropolyanions.

When the mixed coordination type heteropolyanion is expressed by a chemical formula of $[X_pM_qN_rO_s]^t$, the heteropolyanion is expressed by $[X_pM_qO_s]^t$, which is further distinguished from isopolyanion $[M_qO_s]^t$. However, X as a heteroatom represents an element of group IIIB, IVB, or VB such as B, Si, Ge, P, or As, and among them, B, Si, or P is preferable. M and N, which are poly atoms, represent transition metals such as Ti, Zr, V, Nb, Ta, Mo, and W; and Ti, Zr, V, Nb, Mo, and W are preferable.

In addition, p, q, r, and s represent the numbers of atoms, and t represents the oxidation number.

Since the heteropolyanion compound has many structures, the mixed coordination type heteropolyanion compound can have even more structures. Examples of the representative and preferred mixed coordination type heteropolyanion compound include the following mixed coordination type heteropolyacids: $H_3PW_xMo_{12-x}O_{40}\cdot nH_2O$ (phosphotungstic molybdic acid•n-hydrate), $H_{3+x}PV_xMo_{12-x}O_{40}\cdot nH_2O$ (phosphorus vanadomolybdic acid•n-hydrate), $H_4SiW_xMo_{12-x}O_{40}\cdot nH_2O$ (silica tungsten molybdic acid•n-hydrate), and $H_{4+x}SiV_xMo_{12-x}O_{40}\cdot nH_2O$ (silica vanadomolybdic acid•n-hydrate). (wherein, $1 \leq x \leq 11$, $n \geq 0$)

Among these heteropolyanion compounds, preferred specific examples include mixed coordination type heteropolyacids such as $H_3PW_3Mo_9O_{40}\cdot nH_2O$, $H_3PW_6Mo_6O_{40}\cdot nH_2O$, $H_3PW_9Mo_3O_{40}\cdot nH_2O$, $H_4PV_1Mo_{11}O_{40}\cdot nH_2O$, $H_6PV_3Mo_9O_{40}\cdot nH_2O$, $H_4SiW_3Mo_9O_{40}\cdot nH_2)O$, $H_4SiW_6Mo_6O_{40}\cdot nH_2O$, $H_4SiW_9Mo_3O_{40}\cdot nH_2O$, $H_5SiV_1Mo_{11}O_{40}\cdot nH_2O$, and $H_7SiV_3Mo_9O_{40}\cdot nH_2O$. (wherein, $n \geq 0$)

The mixed coordination type heteropolyanion compound may be used in the form of an acid (so-called mixed coordination type heteropoly acid), or may be used in the form of a (partial or complete) salt having a specific cation as a counter ion.

Examples of a counter cation source, when the mixed coordination type heteropolyanion compound is used in the form of a salt having a specific cation as a counter ion, include at least one selected from: inorganic components including alkali metals such as lithium, sodium, potassium, rubidium, and cesium, alkaline earth metals such as magnesium, calcium, strontium, and barium, metals such as manganese, iron, cobalt, nickel, copper, zinc, silver, cadmium, lead, and aluminum, and ammonia; and an amine compound that is an organic component. Among the inorganic components, salts of alkali metals, alkaline earth metals, and ammonia are preferable.

Furthermore, when at least one selected from these alkali metals, alkaline earth metals, and ammonia is used as a counter cation source, it is more preferable to use the counter cation source in the form of a salt with at least one selected from $H_3PW_xMo_{12-x}O_{40}\cdot nH_2O$ (phosphotungstic molybdic acid•n-hydrate), $H_{3+x}PV_xMo_{12-x}O_{40}\cdot nH_2O$ (phosphorus vanadomolybdic acid•n-hydrate), $H_4SiW_xMo_{12-x}O_{40}\cdot nH_2O$ (silica tungsten molybdic acid•n-hydrate), and $H_{4+x}SiV_xMo_{12-x}O_{40}\cdot nH_2O$ (silica vanadomolybdic acid•n-hydrate).

In addition, an amine compound that is an organic component is also preferably used as a counter cation source for the mixed coordination type heteropolyanion compound, and as a specific example, an amine compound represented by the following general formula (5) is preferable.

$$(R^8-N(-R^{10})-)_n-R^9 \cdots \qquad (5)$$

(wherein, $R^8$, $R^9$ and $R^{10}$ may be the same or different and are a hydrogen atom or a monovalent or divalent hydrocarbon group having 1 to 30 carbon atoms and optionally containing an ether bond, an ester bond, a hydroxyl group, a carbonyl group, or a thiol group; $R^8$ and $R^9$ may optionally form together a 5- or 6-membered cycloalkyl group, or form a 5- or 6-membered ring that can additionally contain a nitrogen or oxygen atom as a crosslinking member; or $R^8$, $R^9$, and $R^{10}$ may optionally form together a multi-membered multiple ring that can contain one or more additional nitrogen and/or oxygen atoms as crosslinking members. $R^8$, $R^9$, and $R^{10}$ do not simultaneously become a hydrogen atom. n represents an integer of 1 to 2.)

Specific examples of the amine compound as a counter cation source for the mixed coordination type heteropolyanion compound include linear primary amines such as ethylamine, propylamine, butylamine, hexylamine, octylamine, laurylamine, tridecylamine, and stearylamine; branched primary amines such as isopropylamine, isobutylamine, 2-ethylhexylamine, and branched tridecylamine; linear secondary amines such as dimethylamine, diethylamine, dipropylamine, dibutylamine, dihexylamine, dioctylamine, dilaurylamine, ditridecylamine, and distearylamine; branched secondary amines such as diisopropylamine, diisobutylamine, di-2-ethylhexylamine, and di-branched tridecylamine; asymmetric secondary amines such as N-methylbutylamine, N-ethylbutylamine, N-ethylhexylamine, N-ethyllaurylamine, N-ethylstearylamine, N-isopropyloctylamine, and N-isobutyl-2-ethylhexylamine; linear tertiary amines such as trimethylamine, triethylamine, tripropylamine, tributylamine, trioctylamine, trilaurylamine, tritridecylamine, and tristearylamine; branched tertiary amines such as triisopropylamine, triisobutylamine, tri-2-ethylhexylamine, and tri-branched tridecylamine; tertiary amines having a mixed hydrocarbon group such as N,N-dimethyloctylamine, N,N-dimethyllaurylamine, N,N-dimethylstearylamine, and N,N-diethyllaurylamine; amines having an alkenyl group such as allylamine, diallylamine, triallylamine, and N,N-dimethylallylamine; and alicyclic primary amines such as cyclohexylamine and 2-methylcyclohexylamine; primary amines having an aromatic ring substituent such as aniline, benzylamine, and 4-methylbenzylamine; alicyclic secondary amines such as N,N-dicyclohexylamine and N,N-di-2-methylcyclohexylamine; secondary amines having an aromatic ring substituent such as dibenzylamine and N,N-di-4-methylbenzylamine; asymmetric secondary amines such as N-cyclohexyl-2-ethylhexylamine, N-cyclohexylbenzylamine, N-stearylbenzylamine, and N-2-ethylhexylbenzylamine; alicyclic tertiary amines such as N,N-dimethylbenzylamine, N,N-dimethylcyclohexylamine, and tricyclohexylamine; tertiary amines having an aromatic ring substituent such as tribenzylamine and tri-4-methylbenzylamine; amines having an ether bond such as morpholine, 3-methoxypropylamine, 3-ethoxypropylamine, 3-butoxypropylamine, 3-decyloxypropylamine, and 3-lauryloxypropylamine; alkanol amines such as monoethanolamine, diethanolamine, monoisopropanolamine, monopropanolamine, butanolamine, triethanolamine, N,N-dimethylethanolamine, N-methylethanolamine, N-methyldiethanolamine, N-ethylethanolamine, N-propylethanolamine, N-isopropylethanolamine, N-butylethanolamine, N-cyclohexyl-N-methylaminoethanol, N-benzyl-N-propylaminoethanol, or N-hydroxyethylpyrrolidine, N-hydroxyethylpiperazine, and N-hydroxyethylmorpholine; diamines such as ethylenediamine, N-methylethylenediamine, N,N'-dimethylethylenediamine, N,N,N',N'-tetramethylethylenediamine, 1,2-propanediamine, 1,3-propanediamine, N,N-dimethyl-1,3-propanediamine, N-cyclohexyl-1,3-propanediamine, N-decyl-1,3-propanediamine, and N-isotridecyl-1,3-propanediamine; cyclic amines such as N,N'-dimethylpiperazine, N-methoxyphenylpiperazine, N-methylpiperidine, N-ethylpiperidine, quinuclidine, diazabicyclo[2,2,2]octane, and 1,8-diazabicyclo[5,4,0]-7-undecene; and aromatic amines such as pyridine and quinoline, or any mixture thereof.

Among these amine compounds, preferred specific examples include at least one selected from linear or branched alkyl primary, secondary, or tertiary amines having 4 to 20 carbon atoms, or alkanolamines, and include, for example, butylamine, hexylamine, cyclohexylamine, octylamine, tridecylamine, stearylamine, dihexylamine, di-2-ethylhexylamine, linear or branched ditridecylamine, distearylamine, tributylamine, trioctylamine, linear or branched tritridecylamine, tristearylamine, N,N-dimethylethanolamine, N-methyldiethanolamine, triethanolamine, and morpholine.

It is more preferable to use the amine compound in the form of a salt of at least one selected from the amine compounds represented by the general formula (5) and at least one selected from $H_3PW_xMo_{12-x}O_{40} \cdot nH_2O$ (phosphotungstic molybdic acid·n-hydrate), $H_{3+x}PV_xMo_{12-x}O_{40} \cdot nH_2O$ (phosphorus vanadomolybdic acid·n-hydrate), $H_4SiW_xMo_{12-x}O_{40} \cdot nH_2O$ (silica tungsten molybdic acid·n-hydrate), and $H_{4+x}SiV_xMo_{12-x}O_{40} \cdot nH_2O$ (silica vanadomolybdic acid·n-hydrate).

Among the above mixed coordination type heteropolyanion compounds, mixed coordination type heteropoly acids of $H_3PW_xMo_{12-x}O_{40} \cdot nH_2O$ (phosphotungstic molybdic acid·n-hydrate), $H_{3+x}PV_xMo_{12-x}O_{40} \cdot nH_2O$ (phosphorus vanadomolybdic acid·n-hydrate), and $H_4SiW_xMo_{12-x}O_{40} \cdot nH_2O$ (silica tungsten molybdic acid·n-hydrate), or organic amine salts of these mixed coordination type heteropoly acids are most preferable.

The metal oxide film layer of the composite particle contained in the metal pigment composition according to the first aspect of the first invention of the present application, preferably the second coating layer other than the silicon compound-containing layer, may be a layer containing another corrosion inhibitor in order to further improve the corrosion resistance of the metal particles (preferably, aluminum particles or aluminum alloy particles) to be the cores. The corrosion inhibitor to be added is not particularly limited, and any known corrosion inhibitor can be used. The use amount thereof may be within a range that does not inhibit the desired effects of the first aspect of the first invention of the present application. Examples of such a corrosion inhibitor include metal salts of an acidic phosphoric acid ester, a dimer acid, an organophosphorus compound, and a molybdic acid.

From the viewpoint of adhesion and chemical resistance when a coating film is formed, an organic oligomer or polymer can be further contained in the metal oxide film layer of the composite particle contained in the metal pigment composition, preferably in the silicon compound-containing layer and/or the second coating layer, or in a separate layer.

In addition, from the viewpoint of storage stability, at least one selected from the group consisting of inorganic phosphoric acids and salts thereof, and acidic organic (phosphorous) phosphoric acid esters and salts thereof may be contained in the metal oxide film layer of the composite particle, preferably in the silicon compound-containing layer and/or the second coating layer, or in a separate layer.

These compounds are not particularly limited, but for example, compounds disclosed in JP-A-2019-151678 can be used.

(5) The proportion of the composite particles that are bent is 10% or less.

In the metal pigment composition according to the first aspect of the first invention of the present application, the proportion of the composite particles that are bent is 10% or less. As a result, in combination with the satisfaction of the above-described requirements, a coating film formed by using the metal pigment composition exhibits higher hiding power brightness feeling and the like. The proportion of the composite particles that are bent is understood to be an index related to the degree of deformation or damage of the composite particles. When the proportion of the composite particles that are bent is 10% or less, the degree of deformation or damage of the composite particles is small. Accordingly, the projected area of the particles, when a coating film is formed, is increased and the composite particles are likely to be oriented in parallel to the surface of the coating film, so that high hiding power, excellent brightness feeling and the like can be exhibited. Furthermore, the proportion of the untreated surface of the surface of the coating film formed by using the metal pigment composition is reduced, so that the water resistance of the coating film can be expected to be improved.

When a plurality of the composite particles are flocculated/fixed, the "composite particles" in this physical property requirement refer to flocculated matters (aggregates) thereof.

The smaller the proportion of the composite particles that are bent in the metal pigment composition, the better. This proportion is preferably 9% or less, more preferably 8% or less, even more preferably 7% or less, and most preferably 6% or less.

In detail, the proportion of the composite particles that are bent in the metal pigment composition can be measured according to the method described in Examples described later. That is, a coating film (thin film) is formed by using a metal pigment composition in which composite particles are dispersed in a mixture of an alcohol-based solvent (hydrophilic solvent), such as methoxypropanol, and water, and the degree of deformation of the cross section of the particle can be observed by a scanning electron microscope (SEM). At that time, for each composite particle, a case, where the shortest distance between both ends of the particle is 0.8 times or less the length of the particle, is determined that there is a deformation, and 300 or more particles, preferably 500 or more particles are observed to calculate the proportion of deformed particles, which can be regarded as the proportion of composite particles that are bent. In the observation, particles having a particle size in the range of 90% from the center, when a particle size distribution is measured, are targeted.

The proportion of the composite particles that are bent in the metal pigment composition can be controlled mainly by appropriately adjusting, in the step of coating with the metal oxide film layer, preferably the silicon compound-containing layer (and another coating layer as necessary), a stirring time, the type of a stirring apparatus, the power/degree of the stirring (type and diameter of a stirring blade, rotation speed, presence or absence of external stirring, etc.), and the like.

(6) The number proportion of aggregates constituted by at least four of the composite particles, is 35% or less with respect to the total number of the composite particles.

In the metal pigment composition according to the first aspect of the first invention of the present application, the number proportion of aggregates constituted by at least four of the composite particles, is 35% or less with respect to the total number of the composite particles. As a result, in combination with the satisfaction of the above-described requirements, the coating film formed by using the metal pigment composition can exhibit higher hiding power and brightness feeling and the like, and the flocculation property of individual particles can be suppressed to be smaller. The number proportion of aggregates constituted by at least four of the composite particles, is understood to be the degree of overlap between the composite particles, that is, the degree of a flocculation property. When the number proportion of aggregates constituted by at least four of the composite particles, is 35% or less with respect to the total number of the composite particles, the orientations of the composite particles in the coating film are ordered, and the proportion of the composite particles aligned in parallel to the surface of the coating film increases. As a result, it is considered that the projected area of the composite particle in the coating film formed by using the metal pigment composition is increased to enhance hiding power and a brightness feeling, and furthermore, it becomes easy to form a uniform and sufficient coating on the individual particle, so that the flocculation property of individual particle is further reduced. Furthermore, since the number proportion of the aggregates constituted by at least four of the composite particles is, small, it is possible to effectively prevent a situation in which the flocculated matters of the composite particles, once formed in the aqueous coating material, may collapse to expose an untreated surface, and the composite particle may react with the water, a solvent of the aqueous coating material, to generate hydrogen gas.

The number proportion of the aggregates constituted by at least four of the composite particles in the metal pigment composition is preferably 30% or less, more preferably 20% or less, even more preferably 15% or less, even further preferably 10% or less, and most preferably 5% or less. The smaller the proportion, the better, but it is not easy to make it completely zero.

The "composite particle" in this physical property requirement is different from the physical property requirements (1) to (3) and (5) described above, and refers to individual composite particles even when a plurality of the composite particles are flocculated/fixed. In addition, the "aggregate" in this physical property requirement refers to a state in which a plurality of the composite particles are flocculated/fixed.

In detail, the number proportion of the aggregates constituted by at least four of the composite particles, in the metal pigment composition can be measured according to the method described in Examples described later. That is, a coating (thin film) is formed by using a metal pigment composition, in which composite particles are dispersed in a mixture of an alcohol-based solvent, such as methoxypropanol, and water, and the degree of overlap between the composite particles can be observed by a scanning electron microscope (SEM). At the time, the presence or absence of flocculation is determined for each composite particle according to the criterion that: a) when the shortest distance d between the surfaces of base metals (metal particles) of the targeted composite particles is two times or more than the average thickness t of the coating layer, there is no flocculation; or b) when the shortest distance d between the surfaces of base metals (metal particles) of the targeted composite particles is smaller than two times the average thickness t of the coating layer, there is flocculation. The proportion of the composite particles, four or more of which are fixed to each other (flocculated), is calculated through observing 300 or more of, preferably 500 or more of the composite particles, which can be regarded as the number proportion of aggregates constituted by at least four of the composite particles. Here, the average thickness of the coating layer is defined as an average thickness of the coating layer at arbitrary positions of arbitrary 50 particles, preferably 100 particles.

The number proportion of the aggregates constituted by at least four of the composite particles, with respect to the total number of the composite particles in the metal pigment composition can be controlled mainly by appropriately adjusting, in the step of coating with the metal oxide film layer, preferably the silicon compound-containing layer (and another coating layer as necessary), the stirring time, the type of a stirring apparatus, the power/degree of the stirring (type and diameter of a stirring blade, rotation speed, presence or absence of external stirring, etc.), and the like.

2. Method for manufacturing metal pigment composition

The metal pigment composition according to the first aspect of the first invention of the present application can be suitably manufactured by a manufacturing method including, for example: forming flaky shaped metal particles by using a method commonly used in the pigment industry; after this step, manufacturing metal particles through steps such as sieving (classification), filtration, washing, and mixing; and then, coating the metal particles with the metal oxide film layer, preferably the silicon compound-containing layer while the metal particles are being stirred in a solvent containing water and/a hydrophilic solvent. More specific examples thereof include, but are not limited to, the following methods.

For example, when the metal oxide film layer is the silicon compound-containing layer, the metal pigment composition according to the first aspect of the first invention of the present application can be suitably manufactured by a method including the step (silicon compound-containing layer forming step) of forming the silicon compound-containing layer on the surface of the metal particle by subjecting an organosilicon compound to hydrolysis/(partial) condensation reactions in a mixed liquid containing (a) metal particles, (b) a silicon-containing raw material containing at least one organosilicon compound, (c) a solvent (water and/or a hydrophilic solvent), and as necessary, other optional components. This step can usually be performed under stirring.

Pulverization and sieving/filtration steps

Here, description will be made by taking a case, where aluminum powder is used as the metal particles, as an example.

The aluminum powder is generally obtained: by pulverizing atomized aluminum powder and/or an aluminum foil in the presence of a pulverization aid or an inert solvent by using a method commonly used in the pigment industry, such as a dry ball mill method, a wet ball mill method, an attritor method, or a stamp mill method, so that the pulverized substances are caused to have a so-called flaky shape; and after this step, performing necessary steps such as sieving (classification), filtration, washing, and mixing.

Examples of the pulverization aid here include fatty acids, aliphatic amines, aliphatic amides, and aliphatic alcohols. In general, oleic acid, stearic acid, stearylamine, and the like are preferable. Examples of the inert solvent include those exhibiting hydrophobicity such as mineral spirit, solvent naphtha, LAWS, HAWS, toluene, and xylene, and these solvents can be used alone or in combination. The pulverization aid and the inert solvent are not limited thereto.

As the pulverization step, pulverization by a wet ball mill method is preferable from the viewpoints of preventing dust explosion and securing safety.

When aluminum particles are adopted as the metal particles in the manufacture of the metal pigment composition according to the first aspect of the first invention of the present application, commercially available paste-like aluminum flakes obtained through such pulverization and sieving/filtration can be used. The paste-like aluminum flakes may be used as they are, or may be used after the fatty acid and the like on the surfaces are removed with an organic solvent or the like in advance.

As the metal particles in the manufacture of the metal pigment composition according to the first aspect of the first invention of the present application, a so-called deposited aluminum pigment, manufactured by peeling a metal layer deposited on a carrier material, such as a resin film, by physical vapor deposition (PVD) from the carrier material and pulverizing the metal layer, can also be used.

Hereinafter, the step of forming the silicon compound-containing layer will be described as a preferred example of the step of forming the metal oxide film layer.

Step of forming silicon compound-containing layer

A mixed liquid, containing the above-described (a) metal particles, (b) silicon-containing raw material containing at least one organosilicon compound, (c) solvent, and as necessary, other optional components, can be prepared by mixing these components. The order of the mixing is not particularly limited.

As the metal particles, the metal particles described above can be used, and in particular, particles of aluminum or an aluminum alloy can be suitably used. As for the particle shape, it is preferable to use flaky shaped metal particles, as described above. As the metal particles, known or commercially available metal particles (typically, paste-like aluminum flakes) can be used.

The content (solid content) of the metal particles in the mixed liquid is not particularly limited, and can be appropriately set according to the type, particle size, and the like of the metal particles to be used.

As the silicon-containing raw material, an organosilicon compound is used. As the organosilicon compound, although not limited, those described above can be preferably used.

At least one of an organosilicon compound represented by the above formula (1) (typically, tetraalkoxysilane) and/or a condensate thereof, and a silane coupling agent represented by any one of the above formulas (2) to (4) can be suitably used.

Hereinafter, description will be made by taking a case, where tetraalkoxysilane is used as the organosilicon compound represented by the above formula (1), as an example. Hereinafter, tetraalkoxysilane and/or a condensate thereof may be simply collectively referred to as "tetraalkoxysilane".

When the tetraalkoxysilane represented by the above formula (1) and the silane coupling agent represented by any one of the above formulas (2) to (4) are used in combination, a method (referred to as a "first method"), in which both are used in mixture, can be adopted. Alternatively, it is also possible to adopt a method (referred to as a "second method") including the step of forming a first silicon compound-containing layer by subjecting the metal particles to one treatment and forming a second silicon compound-containing layer by subjecting the metal particles to the other treatment.

Examples of the first method include a method including the step of forming a silicon compound-containing layer by subjecting a tetraalkoxysilane and a silane coupling agent to hydrolysis/condensation reactions by appropriately adjusting the pH of a mixed liquid containing metal particles, a tetraalkoxysilane represented by the above formula (1), and a silane coupling agent represented by any one of the above formulas (2) to (4).

Examples of the second method include a method including the step of subj ecting tetraalkoxysilane to hydrolysis/condensation reactions by appropriately adjusting the pH of a mixed liquid containing metal particles and tetraalkoxysilane represented by the above formula (1) to form a first silicon compound-containing layer (e.g., a silica film made of amorphous silica) on the surfaces of the metal particles, and a step of subjecting a silane coupling agent represented by any one of the above formulas (2) to (4) to hydrolysis/condensation reactions by adjusting the pH of a mixed liquid containing metal particles and the silane coupling agent to form a second silicon compound-containing layer on the surface of the first silicon compound-containing layer.

The use amount of the tetraalkoxysilane represented by the above formula (1) or the condensate thereof can be appropriately set according to the type of the tetraalkoxysilane to be used, and the like. From the viewpoints of a coating treatment effect and suppressing flocculation of the metal particles or a decrease in brightness feeling, the use amount thereof may be, for example, 2 to 200 parts by mass based on 100 parts by mass of the metal particles (solid content), and more preferably 5 to 100 parts by mass.

The use amount of the silane coupling agent represented by any one of the above formulas (2) to (4) is not particularly limited, but may be usually about 0.1 to 20 parts by mass based on 100 parts by mass of the metal particles (solid content), and is particularly preferably 1 to 10 parts by mass. When the use amount is about 0.1 to 20 parts by mass, a desired coating treatment effect and desired coating film physical properties can be obtained.

The solvent in the mixed liquid, that is, the solvent for the hydrolysis reaction and/or condensation reaction of the organosilicon compound may be appropriately selected according to the type of the silicon-containing raw material to be used, and the like, and usually, water, a hydrophilic organic solvent, or a mixed solvent thereof can be used. When these solvents are used, the uniformity of the reactions and the uniformity of the obtained hydrolysate and/or condensation reaction product can be enhanced. In an aspect in which the silicon compound-containing layer is directly formed on the metal particle, it is particularly preferable from the viewpoint of avoiding rapid progress of the reaction between the metal particle and water that the solvent of the mixed liquid contains a hydrophilic organic solvent. In the first aspect of the first invention of the present application, a mixed solvent of water and a hydrophilic organic solvent can be suitably used.

The hydrophilic organic solvent is not particularly limited, and examples thereof include: alcohols such as methanol, ethanol, propanol, butanol, isopropanol, and octanol; ether alcohols such as ethylene glycol monoethyl ether, ethylene glycol monobutyl ether, diethylene glycol monoethyl ether, diethylene glycol monobutyl ether, propylene glycol monoethyl ether, propylene glycol monomethyl ether, and dipropylene glycol monomethyl ether, and esters thereof; glycols of ethylene glycol, propylene glycol, 1,3-butanediol, 1,4-butanediol, polyoxyethylene glycol, polyoxypropylene glycol, and ethylene propylene glycol; and alkoxyalcohols such as ethyl cellosolve, butyl cellosolve, acetone, methoxypropanol, ethoxypropanol, and others. These can be used alone or in combination of two or more.

When a mixed solvent of water and a hydrophilic organic solvent is used as the solvent, the ratio between the two is not particularly limited. In an aspect in which the silicon compound-containing layer is directly formed on the metal particle, it is preferable from the viewpoint of avoiding rapid progress of the reaction between the metal particle and water that, before the silicon compound is put in, the content of water is set to 20% by mass or less based on 100% by mass of the total of both. The lower limit of the content of water in this case is not limited, but may be usually about 1% by mass.

The use amount of the solvent in the step of forming the silicon compound-containing layer (in a case where pre-dispersion of the metal particles is performed, the amount of a solvent for the dispersion is excluded) is not limited. The use amount is usually sufficient when it is about 100 to 10,000 parts by mass based on 100 parts by mass of the metal particles (solid content), and is particularly preferable when it is 200 to 1,000 parts by mass. When the use amount of the solvent is 100 parts by mass or more, an increase in the viscosity of the mixed liquid (slurry) is suppressed, and appropriate stirring can be performed. In addition, when the use amount of the solvent is 10,000 parts by mass or less, an increase in the recovery and recycling cost of the treatment liquid can be prevented. In the case of the second method, the use amount of the solvent here refers to the total amount of a solvent used for forming the first silicon compound-containing layer and a solvent used for forming the second silicon compound-containing layer.

In the mixed liquid, other additives may be blended as necessary as long as the effects of the first aspect of the first invention of the present application are not impaired. For example, a catalyst such as a hydrolysis catalyst or a dehydration condensation catalyst, a surfactant, a metal corrosion inhibitor, and the like can be cited.

Among them, a hydrolysis catalyst can be suitably used. When a hydrolysis catalyst is blended, the pH of the mixed liquid can be adjusted and the organosilicon compound can be efficiently hydrolyzed, and dehydrated and condensed. As a result, it is possible to efficiently and reliably form the silicon compound-containing layer on the surface of the metal particle.

The hydrolysis catalyst is not particularly limited, and a known or commercially available hydrolysis catalyst may be used. As the hydrolysis catalyst, for example, inorganic acids such as hydrochloric acid, nitric acid, sulfuric acid, and phosphoric acid; organic acids such as benzoic acid, acetic acid, chloroacetic acid, salicylic acid, oxalic acid, picric acid, phthalic acid, and malonic acid; phosphonic acids such as vinyl phosphonic acid, 2-carboxyethane phosphonic acid, 2-aminoethane phosphonic acid, and octane phosphonic acid; and the like can be used. These hydrolysis catalysts may be used alone or in combination of two or more.

In addition, as the hydrolysis catalyst, for example, inorganic alkalis such as ammonia, sodium hydroxide, and potassium hydroxide; inorganic alkali salts such as ammonium carbonate, ammonium hydrogen carbonate, sodium carbonate, and sodium hydrogen carbonate; amines such as monomethylamine, dimethylamine, trimethylamine, monoethylamine, diethylamine, triethylamine, monoethanolamine, diethanolamine, triethanolamine, N,N-dimethylethanolamine, ethylenediamine, pyridine, aniline, choline, tetramethylammonium hydroxide, and guanidine; and salts of organic acids such as ammonium formate, ammonium acetate, monomethylamine formate, dimethylamine acetate, pyridine lactate, guanidinoacetic acid, and aniline acetate can also be used. These hydrolysis catalysts can be used alone or in combination of two or more.

The addition amount of the hydrolysis catalyst is not particularly limited, but may usually be set to 0.01 to 20 parts by mass based on 100 parts by mass of the metal particles (solid content), and is particularly preferably set to 0.02 to 10 parts by mass. When the addition amount is 0.01 parts by mass or more, the precipitation amount of the silicon compound-containing layer can be sufficient. In addition, when the addition amount is 20 parts by mass or less, flocculation of the metal particles can be effectively suppressed.

In preparing the mixed liquid, it is sufficient to uniformly mix these components in a mixed liquid, and the blending order is also not particularly limited.

In the manufacture of the metal pigment composition according to an aspect including the silicon compound-containing layer that is the first aspect of the first invention of the present application, the preparation of the mixed liquid is preferably performed while the liquid is being stirred with appropriate strength.

The temperature of the mixed liquid may be either room temperature or increased temperature. In general, the temperature of the mixed liquid may be set to 20 to 90°C, and it is particularly preferable to control the temperature to be within the range of 30 to 80°C. When the temperature is 20°C or higher, the formation rate of the silicon compound-containing layer is increased, and the treatment time can be shortened. On the other hand, when the temperature is 90°C or lower, the reaction is easily controlled, and the probability that desired composite particles can be obtained can be increased.

A stirrer for stirring the mixed liquid is not particularly limited, and a known stirrer capable of efficiently and uniformly stirring the mixed liquid containing the aluminum particles and the organosilicon compound can be used. Specific examples thereof include a kneader, a kneading apparatus, a rotating container stirrer, a stirring-type reactor, a V-type stirrer, a double conical stirrer, a screw mixer, a sigma mixer, a flash mixer, an airflow stirrer, a ball mill, and an edge runner. Further description of the stirrer will be given later.

When the mixed liquid containing the metal particles and the organosilicon compound is stirred, the temperature of the mixed liquid may usually be set to about 10 to 100°C, and is particularly preferably set to 30 to 80°C. When this temperature is 10°C or higher, the reaction time for obtaining a sufficient treatment effect can be shortened. In addition, when the temperature is 100°C or lower, the reaction for obtaining a desired metal pigment composition is more easily controlled.

The stirring time of the mixed liquid is not particularly limited as long as it is a time sufficient for forming a desired silicon compound-containing layer. The stirring time is preferably set to, for example, 0.5 to 10 hours, and more preferably set to 1 to 5 hours. When the stirring time is 0.5 hours, a sufficient treatment effect can be obtained. In addition, when the stirring time is 10 hours or less, an increase in treatment cost can be suppressed.

When the silicon-containing raw material is subjected to hydrolysis/condensation reactions in the mixed liquid, the silicon compound-containing layer is formed on the surface of the metal particle (or via the second coating layer). This hydrolysis/condensation reactions can be performed particularly by adjusting the pH of the mixed liquid, or the like.

In adjusting the pH, the pH value of the mixed liquid changes particularly at a stage where the silicon compound-containing layer is formed on the surface of the metal particle (or via the second coating layer), and thus it is desirable to appropriately adjust the pH value such that it can be maintained within a certain range. At the time, it is desirable to adjust the pH value by adding a hydrolysis catalyst, but the pH value may be adjusted by using another acidic or alkaline compound as long as the characteristics of the metal pigment composition according to an aspect including the silicon compound-containing layer that also is the first aspect of the first invention of the present application are not impaired.

When a basic hydrolysis catalyst is used as the hydrolysis catalyst, the pH value is preferably set to 7 to 13, more preferably set to 7 to 11, and even more preferably set to 7.5 to 10. When the pH value is 7 or more, the silicon compound-containing layer can be quickly formed. On the other hand, when the pH value is 13 or less, flocculation of the metal particles and a decrease in brightness can be suppressed, and generation of hydrogen gas due to corrosion can be prevented.

When an acidic hydrolysis catalyst is used as the hydrolysis catalyst, the pH value is preferably set to 1.5 to 7, more preferably set to 1.5 to 6, even more preferably set to 2 to 4, and particularly preferably set to 2 to 3. When the pH value is 1.5 or more, the reaction is properly controlled, and it becomes easy to obtain a metal pigment composition containing desired composite particles. On the other hand, when the pH value is 7 or less, the precipitation rate of the silicon compound-containing layer can be kept high.

Even in a case where either the first method or the second method is adopted, the hydrolysate of the organosilicon compound represented by the above general formula (1) and/or the condensate thereof are/is preferably added, in terms of a state in which the hydrolysis and condensation reactions are completed, in an amount of 0.01 to 50 parts by mass based on 100 parts by mass of the metal particles (solid content), and more preferably added in an amount of 1 to 30 parts by mass. In addition, it is preferable to add, in terms of a state in which the hydrolysis and condensation reactions are completed, a hydrolysate derived from the silane coupling agent represented by any one of the above general formulas (2) to (4) and/or from the partial condensate thereof, and/or the condensate thereof in a total amount of 0.01 to 0.8 parts by mass based on 100 parts by mass of the metal particles (solid content), and more preferable to add in an amount of 0.01 to 0.7 parts by mass.

The addition amount of the hydrolysate of the organosilicon compound represented by the general formula (1) and/or the condensate thereof can be calculated by multiplying the mass of the organosilicon compound represented by the general formula (1), used in the manufacture of the metal pigment composition, by the mass ratio between before and after the reactions when all the organosilicon compounds are hydrolyzed and subjected to a condensation reaction.

For example, when tetraethoxysilane (TEOS) is used as the organosilicon compound represented by the general formula (1), the addition amount of the hydrolysate of the organosilicon compound and/or the condensate thereof can be calculated by using the mass ratio between before and after the following hydrolysis and condensation reactions.

(Hydrolysis)

$$Si(OC_2H_5)_4 \text{ (molecular weight: 208)} + 4H_2O \rightarrow Si(OH)_4 \text{ (molecular weight: 96)} + (C_2H_5OH)_4$$

(Condensation)

$$Si(OH)_4 \text{ (molecular weight: 96)} + Si(OH)_4 \text{ (molecular weight: 96)} \rightarrow (SiO_2)_2 \text{ (molecular weight: } 60 \times 2) + 4H_2O$$

Since the mass is 60/208 = 0.288 times between before and after the above hydrolysis and condensation reactions, the addition amount of the hydrolyzate of TEOS and/or the condensate thereof, when, for example, 10 parts by mass of TEOS is used based on 100 parts by mass of the metal particles (solid content), is 0.288 times thereof, that is, 2.88 parts by mass.

Similarly, the addition amount of the hydrolysate of the silane coupling agent represented by any one of the general formulas (2) to (4) and the like and/or the condensate thereof can also be calculated by multiplying the mass of the silane coupling agent, which is used in the manufacture of the metal pigment composition and is represented by any one of the general formulas (2) to (4), and/or the partial condensate thereof by the mass ratio between before and after the reactions when all the silane coupling agent and/or partial condensate thereof are hydrolyzed and subjected to a condensation reaction.

For example, when methyltrimethoxysilane is used as the silane coupling agent represented by the general formula (2), the addition amount of the hydrolysate of the silane coupling agent and/or the condensate thereof can be calculated by using the mass ratio between before and after the following hydrolysis and condensation reactions.

(Hydrolysis)

$$CH_3Si(OCH_3)_3 \text{ (molecular weight: 136)} + 3H_2O \rightarrow CH_3Si(OH)_3 \text{ (molecular weight: 94)} + (CH_3OH)_3$$

(Condensation)

$$CH_3Si(OH)_3 \text{ (molecular weight: 94)} + CH_3Si(OH)_3 \text{ (molecular weight: 94)} \rightarrow (SiCH_3O_{1.5})_2 \text{ (molecular weight: } 67 \times 2) + 3H_2O$$

Since the mass is 67/136 = 0.49 times between before and after the above hydrolysis/condensation reactions, the addition amount of the hydrolysate of methyltrimethoxysilane and/or condensate thereof, for example, when 1.23 parts by mass of methyltrimethoxysilane is used based on 100 parts by mass of the metal particles (solid content), is 0.49 times thereof, that is, 0.60 parts by mass.

Even in a case where either the first method or the second method is adopted, it is preferable that, before combined with an organosilicon compound as a silicon compound source (alternatively, in the case of forming the second coating layer, before combined with a molybdenum compound), the metal particles are sufficiently dispersed in water, a hydrophilic organic solvent, or a mixed solvent thereof. In this pre-dispersion (initial dispersion), the degree of the dispersion can be preferably further enhanced by performing external circulation in which a part of a dispersion (e.g., 0.5 to 30% by mass of the entire dispersion per 1 minute, preferably 1 to 20% by mass, and more preferably 1 to 15% by mass) is once extracted to the outside of a dispersion vessel and then returned to the dispersion vessel again. By performing an ultrasonic treatment outside the dispersion vessel in the middle of a flow path for the external circulation, the dispersibility can be further enhanced.

The ultrasonic treatment is not particularly limited, but can be usually performed at 10 to 1,000 W, and preferably at 50 to 800 W for usually 20 seconds to 10 minutes, and preferably about 30 seconds to 5 minutes. From the viewpoint of appropriately adjusting the strength of the stirring to achieve sufficient dispersion, the use amount of the solvent for the pre-dispersion may be usually about 100 to 10,000 parts by mass based on 100 parts by mass of the metal particles (solid content), preferably 200 to 5,000 parts by mass, and more preferably 300 to 1,000 parts by mass.

Such pre-dispersion of the metal particles can be usually performed at 10 to 80°C, preferably at 15 to 60°C, and most preferably at around room temperature (about 20 to 30°C). The pre-dispersion of the metal particles can also be performed for a period of 5 minutes to 2 hours (including a time for the ultrasonic treatment when performed), and preferably for a period of 10 minutes to 1 hour.

Step of forming second coating layer

In addition to the metal oxide coating layer, the composite particle constituting the composite metal pigment according to the first aspect of the first invention of the present application preferably further contains a coating layer (second coating layer) other than the metal oxide coating layer, preferably a coating layer containing at least one selected from a metal, a metal oxide, a metal hydrate, and a resin.

The second coating layer (when formed) is preferably formed particularly between the metal particle and the metal oxide coating layer, preferably the silicon compound-containing layer. Therefore, a layer configuration of "metal particle/second coating layer/metal oxide coating layer, preferably silicon compound-containing layer" can be suitably adopted.

The second coating layer is not particularly limited, but may be a molybdenum-containing coating film, a phosphoric acid compound coating film, or the like. Preferred examples of the molybdenum-containing material constituting the molybdenum-containing coating film include a mixed coordination type heteropolyanion compound disclosed in JP-A-2019-151678. Examples of the constituent components of the second coating layer, including the mixed coordination type heteropolyanion compound, are as described above.

Hereinafter, description will be made by taking an aspect, in which a molybdenum-containing coating film as the second coating layer film is formed between the metal particle and the metal oxide coating layer, preferably the silicon compound-containing layer, as an example.

When a molybdenum-containing coating film as the second coating layer is formed between the metal particle and the metal oxide coating layer, preferably the silicon compound-containing layer, a mixed liquid, containing the metal particles and a molybdenum compound (typically, the mixed coordination type heteropolyanion compound), is stirred before the metal oxide coating layer, preferably the silicon compound-containing layer is formed, whereby a molybdenum-containing coating film can be formed on the surface of the metal particle.

The method for forming the molybdenum-containing coating film on the surface of the metal particle is not particularly limited, and may be any method as long as it can uniformly stir a mixed liquid containing the metal particles and the molybdenum compound in an aqueous solvent. For example, a mixed liquid, containing the metal particles and the molybdenum compound, is stirred or kneaded in a slurry state or a paste state, whereby the molybdenum-containing coating film can be formed on the surface of the metal particle. In the mixed liquid, the molybdenum compound may be dissolved or dispersed.

The stirrer for stirring the mixed liquid, containing the metal particles and the molybdenum compound, is not particularly limited, and a known stirrer capable of efficiently and uniformly stirring the mixed liquid, containing aluminum particles and a molybdenum compound, can be used. Specific examples thereof include a kneader, a kneading apparatus, a rotating container stirrer, a stirring-type reactor, a V-type stirrer, a double conical stirrer, a screw mixer, a sigma mixer, a flash mixer, an airflow stirrer, a ball mill, and an edge runner. Examples of the stirring blade of the stirrer include, but are not particularly limited to, an anchor blade, a paddle blade, a propeller blade, and a turbine blade.

The use amount of the molybdenum compound can be appropriately set according to the type of the molybdenum compound to be used, and the like. The use amount thereof may be generally set to 0.02 to 20 parts by mass based on 100 parts by mass of the metal particles (solid content), and is particularly preferably set to 0.1 to 10 parts by mass. When the content is 0.02 parts by mass or more, a sufficient treatment effect can be obtained. In addition, when the content is 20 parts by mass or less, the brightness of the resulting metal pigment composition can be kept high.

As the solvent to be used for mixing the metal particles and the molybdenum compound, water, a hydrophilic organic solvent, or a mixed solvent thereof can usually be used.

Examples of the hydrophilic organic solvent include: alcohols, such as methanol, ethanol, propanol, butanol, isopropanol, and octanol; ether alcohols such as ethylene glycol monoethyl ether, ethylene glycol monobutyl ether, diethylene glycol monoethyl ether, diethylene glycol monobutyl ether, propylene glycol monoethyl ether, propylene glycol monomethyl ether, and dipropylene glycol monomethyl ether, and esters thereof; glycols of ethylene glycol, propylene glycol, 1,3-butanediol, 1,4-butanediol, polyoxyethylene glycol, polyoxypropylene glycol, and ethylene propylene glycol; and alkoxyalcohols such as ethyl cellosolve, butyl cellosolve, acetone, methoxypropanol, ethoxypropanol, and others. These can be used alone or in combination of two or more.

The use amount of the solvent in the step of forming the second coating layer (in a case where the pre-dispersion of the metal particles is performed, the use amount of the solvent for the pre-dispersion is excluded) is not particularly limited, but is usually preferably 50 to 5,000 parts by mass based on 100 parts by mass of the metal particles (solid content), and more preferably 100 to 2,000 parts by mass. When the use amount of the solvent is 50 parts by mass or more, uneven distribution of the molybdenum compound and flocculation of the metal particles can be suppressed. In addition, when the use amount of the solvent is 5,000 parts by mass or less, a sufficient treatment effect on the metal particles by the molybdenum compound can be obtained.

When the mixed liquid, containing the metal particles and the molybdenum compound, is stirred, the temperature of the mixed liquid may usually be set to about 10 to 100°C, and is particularly preferably set to 30 to 80°C. When this temperature is 10°C or higher, the reaction time for obtaining a sufficient treatment effect can be shortened. In addition, when the temperature is 100°C or lower, the reaction for obtaining a desired metal pigment composition is more easily controlled.

The stirring time of the mixed liquid is not particularly limited as long as it is a time sufficient for forming a desired molybdenum-containing coating film. The stirring time is preferably set to, for example, 0.5 to 10 hours, and more preferably set to 1 to 5 hours. When the stirring time is 0.5 hours, a sufficient treatment effect can be obtained. In addition, when the stirring time is 10 hours or less, an increase in treatment cost can be suppressed.

After the stirring of the mixed liquid, containing the metal particles and the molybdenum compound, is finished, the particles on which the second coating layer is formed can be recovered. In this case, known washing, solid-liquid separation, and the like can be appropriately performed as necessary. For example, it is preferable that the mixed liquid is washed using a hydrophilic organic solvent, and then filtered using a filter or the like to remove water and unreacted substances from a cake containing the metal particles having the molybdenum-containing coating film. In this way, the molybdenum-containing coating film as the second coating layer can be formed. In a case where another second coating layer is formed, the formation thereof can also be performed in accordance with the above method.

In an aspect in which, after the second coating layer (molybdenum-containing coating film), the metal oxide coating layer, preferably the silicon compound-containing layer is formed on the metal particles, a dispersion, in which a metal oxide coating source, preferably a silicon compound source (typically, at least one of the organosilicon compound represented by the above formula (1), for example, tetraalkoxysilane and/or a condensate thereof, and the silane coupling agent represented by any one of the above formulas (2) to (4)) is dispersed in water and/or a hydrophilic organic solvent, may be directly added to a system of the mixed liquid containing the metal particles and the molybdenum compound, after the stirring of the mixed liquid is finished and without recovering the particles on which the second coating layer has been formed. At this time, a dispersion of the organosilicon compound represented by the above formula (1), for example, tetraalkoxysilane and/or a condensate thereof may be added to a system containing the particles on which the second coating layer has been formed, and then a dispersion of at least one of the silane coupling agent represented by any one of the above formulas (2) to (4) may be added, and the mixture may be stirred (see the second method in the "step of forming silicon compound-containing layer" described above).

Stirring conditions

In the manufacture of the metal pigment composition according to the first aspect of the first invention of the present application, it is necessary to perform at least the step of forming the metal oxide coating layer, preferably the silicon compound-containing layer under stirring. In the manufacture of the metal pigment composition according to the first aspect of the first invention of the present application, it is also preferable to perform not only the step of forming the metal oxide coating layer, preferably the silicon compound-containing layer, but also the step of forming the second coating layer under stirring. In an aspect in which the above-described pre-dispersion of the metal particles is performed, it is more preferable to also perform the pre-dispersion under stirring. In addition, in the manufacture of the metal pigment composition according to the first aspect of the first invention of the present application, it is even more preferable to perform the entire process, including the pre-dispersion of the metal particles, the step of forming the second coating layer, and the step of forming the metal oxide coating layer, preferably the silicon compound-containing layer, under stirring.

In the manufacture of the metal pigment composition according to the first aspect of the first invention of the present application, when at least the step of forming the metal oxide coating layer, preferably the silicon compound-containing layer is performed under appropriately controlled stirring, it is possible to effectively suppress or prevent a phenomenon, in which the composite particles adhere to each other via the metal oxide coating layer, preferably the silicon compound-containing layer, or flocculated particles made of the metal particles are coated, as they are, with the metal oxide coating layer, preferably the silicon compound-containing layer, from occurring. In addition, when the entire process, including the pre-dispersion of the metal particles, the step of forming the second coating layer, and the step of forming the metal oxide coating layer, preferably the silicon compound-containing layer (until when the formation of all the layers to be formed on the surface of the metal particle is completed), is performed under stirring, a metal pigment composition according to the first aspect of the first invention of the present application, which satisfies all the physical property requirements of the above (1) to (6), can be more easily obtained.

The description of the stirring conditions described below can apply to any step in the manufacture of the metal pigment composition according to the first aspect of the first invention of the present application.

The stirring can be performed by a known or commercially available stirring apparatus. For example, at least one of a kneader, a kneading apparatus, a rotating container stirrer, a stirring-type reactor, a V-type stirrer, a double conical stirrer, a screw mixer, a sigma mixer, a flash mixer, an airflow stirrer, a ball mill, an edge runner, and the like can be used.

Among these stirrers, it is preferable to use a stirring vessel-type apparatus that stirs by a stirring blade (impeller). As a result of exerting a circulating action that causes the entire reaction system, including a liquid phase, to flow and a pressure shearing action by the stirring blade, creation of flocculation of the composite particles can be more effectively suppressed.

The shape of the stirring blade is not particularly limited, and for example, an anchor type, a propeller type, a turbine type, an inclined turbine type, a fan turbine type, a paddle type, an inclined paddle type, or a gate type can be used. The Maxblend blade (manufactured by Sumitomo Heavy Industries Process Equipment Co., Ltd.), the Fullzone blade (manufactured by KOBELCO ECO-SOLUTIONS CO., LTD.), and the like are also suitable. In addition, stirring blades having these shapes can be combined in multiple stages.

The stirring speed is preferably set such that the stirring blade is not exposed by vortex created by the stirring. In addition, in order to suppress vortex to be created by the stirring, a cylindrical vessel, a square vessel, a vessel provided with a baffle plate, or the like can be suitably used.

In the manufacture of the metal pigment composition containing the composite particles according to the first aspect of the first invention of the present application, it is desirable to set the optimum sizes of the stirring vessel and the stirring blade and the speed of the stirring blade in relation to the amount and physical properties (density, viscosity, etc.) of the mixed liquid. The size of the stirring vessel is preferably selected such that the maximum amount of the mixed liquid to be used in the series of steps is 20 to 80% of the stirring vessel. In the case of a cylindrical stirring vessel having an internal volume of preferably 100 liters or more, the ratio, L/D, of a height, (L), to an inner diameter, (D), of the stirring vessel is generally in the range of 0.5 to 3.0, and is usually in the range of 1 to 2. The size of the stirring blade is generally set such that the maximum diameter is in the range of 0.2 to 0.9 of the inner diameter of the stirring vessel, and preferably in the range of about 0.4 to 0.6. It is desirable to appropriately select the shape (including the length) of the stirring blade according to the physical properties of the mixed liquid, and it is important that, in the entire steps, stirring is performed in the entire stirring vessel. In order to prevent formation of an unstirred stagnation portion particularly near the liquid surface or the bottom surface of the stirring vessel, it is preferable to combine an inclined paddle type, an inclined turbine type, or a propeller type in multiple stages, or to use the Maxblend blade or the Fullzone blade, which easily creates an up-and-down flow. At this time, the distance between the stirring blade and the inner surface of the stirring vessel (including the baffle plate) is desirably 5 mm or more. This makes it easy to suppress damage or deformation of the metal particles.

The tip speed of the stirring blade is preferably 0.5 to 50 m/s, more preferably 1 to 20 m/s, and even more preferably 2 to 10 m/s. When the tip speed of the stirring blade is within the range of 0.5 to 50 m/s, the dispersibility of the composite particles in the metal pigment composition to be manufactured can be enhanced, and as a result, it becomes easier to obtain a metal pigment composition that has a reduced flocculation property of individual particles, has excellent hiding power and color tone, and generates less gas. In addition, when the linear speed of the stirring is within the above range, damage of the metal particles (e.g., flaky shaped aluminum powder) is prevented, the rates of the hydrolysis/condensation reactions are appropriately controlled, and flocculation of the composite particles can be effectively suppressed.

As an index indicating a stirring state, there is a stirring Reynolds number (hereinafter, abbreviated as a "stirring Re number"). The stirring Re number does not reflect the shapes and sizes, other than diameter, of the stirring vessel and the stirring blade. Therefore, the stirring Re number is only a guide and is not particularly limited, but is preferably 3,000 or more, and more preferably 5,000 or more. The upper limit of the stirring Re number can vary depending on the type, scale, and the like of the stirring apparatus. The upper limit of the stirring Re number may be about 100,000 in a normal lab scale, but in the case of using a scaled-up large apparatus, it may be more than 100,000 as long as the desired effects of the first aspect of the first invention of the present application are not impaired. It is also acceptable even if this upper limit is, for example, about 1 million.

Here, the stirring Re number is calculated by the following equation.

$$\text{Stirring Re number} = (\rho \times n \times d^2)/\mu$$

(wherein, $\rho$ indicates the density (kg/m$^3$) of a mixed liquid to be stirred at 25°C, n indicates a stirring rotation speed (rps), d indicates a stirring blade diameter (m), and $\mu$ indicates the viscosity (Pa · s) of a mixed liquid to be stirred at 25°C.)

Step of recovering composite particles

After the step of forming the metal oxide coating layer, preferably the silicon compound-containing layer (and optionally, the second coating layer) on the metal particles is finished, the obtained composite particles can be recovered. In the recovery, a known treatment, such as washing and solid-liquid separation, can also be performed as necessary. For example, it is preferable that the dispersion is washed using an organic solvent, and then filtered using a filter to remove water and unreacted substances from the cake containing the composite particles. Thereafter, the cake containing the composite particles may be subjected to a heat treatment at a temperature in the range of, for example, 100 to 500°C as necessary. As described later, the composite particles recovered in this way can usually form a metal pigment composition in which a small amount of solvent, containing water/hydrophilic solvent used in the manufacturing process, remains and is entrained.

3. Metal pigment composition

The metal pigment composition according to the first aspect of the first invention of the present application obtained as described above is considered to form a metal pigment composition that comprises composite particles containing metal particles and one or more coating layers formed on the surfaces of the metal particles, and comprises, as a residue of the solid contents (nonvolatile contents), a solvent such as water/hydrophilic solvent used in the manufacturing process.

In a case where the metal particles have a silicon compound layer, there can usually be present, in the metal pigment composition, a silicon compound, which is a hydrolysate of an organosilicon compound (e.g., at least one selected from at least one organosilicon compound represented by the above general formula (1), a silane coupling agent represented by any one of the above general formulas (2), (3), and (4), and partial condensates thereof) and/or a condensate thereof, in an amount of 0.02 to 50 parts by mass based on 100 parts by mass of the metal particles, in terms of a state in which the hydrolysis/condensation reactions are completed.

In the metal pigment composition, there can be present a compound to form the optional second coating layer (in an optional aspect of forming a molybdenum-containing coating film as the second coating layer, a molybdenum-containing compound, e.g., a mixed coordination type heteropolyanion compound) in an amount of 0.01 to 10 parts by mass based on 100 parts by mass of the metal particles.

In the metal pigment composition, there can be present an optional organic oligomer or polymer in an amount of 0.01 to 50 parts by mass based on 100 parts by mass of the metal particles.

In the metal pigment composition, there can be present at least one selected from the group consisting of optional inorganic phosphoric acids and salts thereof and acidic organic (phosphorous) phosphoric acid esters and salts thereof, in an amount of 0.01 to 20 parts by mass based on 100 parts by mass of the metal particles.

In the metal pigment composition, there can be present, as a residue of the above components (nonvolatile contents), water/hydrophilic solvent used in the manufacturing process and/or hydrophilic organic solvent newly added to adjust the composition of the composition. The amount of the solvent containing water/hydrophilic solvent may be, for example, 0.5 to 95% by mass of the metal pigment composition. Alternatively, the amount of the solvent, containing the water/hydrophilic solvent, may be 1 to 90% by mass of the metal pigment composition, 2 to 80% by mass, or 5 to 70% by mass.

The metal pigment composition may optionally contain optional components other than those described above. Examples of the optional components include at least one of a non-hydrophilic organic solvent, a pulverization aid, an antioxidant, a light stabilizer, a polymerization inhibitor, and a surfactant.

Examples of the non-hydrophilic organic solvent include those exhibiting hydrophobicity, such as mineral spirit, solvent naphtha, toluene, and xylene, which are also used in the process of manufacturing metal pigments. Examples of the pulverization aid include a fatty acid, an aliphatic amine, an aliphatic amide, and an aliphatic alcohol.

As the antioxidant, an antioxidant represented by a phenol-based compound, a phosphorus-based compound, or a sulfur-based compound can be used.

As the light stabilizer, those to be used as the above-described antioxidant can also be used, but those represented by a benzotriazole-based compound, a benzophenone-based compound, a salicylate-based compound, a cyanoacrylate-based, an oxalic acid derivative, a hindered amine-based compound (HALS), and a hindered phenol-based compound can be used.

4. Applications of metal pigment composition

Such a metal pigment composition can be used for organic solvent-based coating materials, inks, and the like. In addition, when added to an aqueous coating material or aqueous ink in which resins, which are coating film-forming components (binders), are dissolved or dispersed in a medium mainly containing water, this metal pigment composition can form a metallic aqueous coating material or metallic aqueous ink, which is a resin composition. The metal pigment composition can also be kneaded with a resin or the like to be used as a water-resistant binder or filler. The antioxidant, the light stabilizer, the polymerization inhibitor, and the surfactant may be added when the metal pigment composition is blended in an aqueous coating material, an aqueous ink, a resin, or the like. As a modification, it is also possible to obtain a molded body from a kneaded product of the metal pigment composition and a resin or the like.

When the metal pigment composition is used for a coating material or an ink, the metal pigment composition may be added as it is to a (aqueous) coating material or a (aqueous) ink, but it is preferable to add the metal pigment composition after being dispersed in a solvent in advance. Examples of the solvent to be used include water, texanol, diethylene glycol monobutyl ether, and propylene glycol monomethyl ether. Examples of these resins include acrylic resins, polyester resins, polyether resins, epoxy resins, fluororesins, and rosin resins. Examples of the binder of the coating material or the ink include rubber in addition to the resin.

These resins are preferably emulsified, dispersed, or dissolved in water. Therefore, carboxyl groups, sulfone groups, and the like contained in the resins can be neutralized.

Preferred resins are acrylic resins and polyester resins.

If necessary, a resin, such as a melamine-based curing agent, an isocyanate-based curing agent, or a urethane dispersion, can be used in combination. Furthermore, it may be combined with a coloring pigment such as an inorganic pigment, an organic pigment, or an extender pigment that is generally added to a coating material, a silane coupling agent, a titanium coupling agent, a dispersant, an anti-settling agent, a leveling agent, a thickener, or an antifoaming agent. A surfactant may further be added in order to improve the dispersibility in the coating material, or an antioxidant, a light stabilizer, and a polymerization inhibitor may further be added in order to improve the storage stability of the coating material.

Examples of the coloring pigment include phthalocyanine, quinacridone, isoindolinone, perylene, azo lake, iron oxide, chrome yellow, carbon black, titanium oxide, and pearl mica.

The content of the metal pigment composition according to the first aspect of the first invention of the present application in the aqueous coating material or aqueous ink (resin composition) is not limited, but may usually be set to 0.1 to 50% by mass, and is particularly preferably set to 1 to 30% by mass. When the content is 0.1% by mass or more, a high decorative (metallic) effect can be obtained. In addition, when the content is 50% by mass or less, it is possible to prevent the characteristics of the aqueous coating material or the aqueous ink, for example, weather resistance, corrosion resistance, mechanical strength, and the like, from being impaired.

The content of the solvent is not particularly limited, but may be 20 to 200% by mass with respect to the binder content. When the content of the solvent is within this range, the viscosity of the coating material or ink is adjusted to an appropriate range, and handling and film formation can be facilitated.

A coating method or a printing method of an aqueous coating material or the like is not particularly limited. For example, various coating methods or printing methods can be appropriately adopted in consideration of the form of an aqueous coating material or the like, the surface shape of a material to be coated, and the like. Examples of the coating method include a spray method, a roll coater method, a brush coating method, and a doctor blade method. Examples of the printing method include gravure printing and screen printing.

The coating film formed by an aqueous coating material or the like may be formed on an undercoat layer or an intermediate coat layer by electrodeposition coating or the like. If necessary, a topcoat layer or the like may be formed on a coating film formed by an aqueous coating material or the like.

In the case of these layer configurations, each coating film layer is coated and cured or dried, and then the next coating film layer may be coated; alternatively, each coating film layer is coated by so-called wet-on-wet coating, and then, with the layer uncured or undried, the next coating film layer may be coated. For the aqueous coating material or the like containing the metal pigment composition according to the first aspect of the first invention of the present application, it is preferable from the viewpoint of obtaining a coating film having good mirrorlike brightness to adopt a method including the step of, after an underlayer coating film layer is coated and cured or dried, forming a coating film layer by the aqueous coating material or the like.

The method for curing the coating composition in each coating film layer may be thermal curing or normal temperature curing. The method for drying the coating composition in each coating film layer may be, for example, drying using hot air or natural drying at room temperature.

The thickness of the coating film layer formed by the aqueous coating material or the like is not particularly limited, but may usually be about 2 to 100 $\mu$m. When the thickness of the coating film layer is 2 $\mu$m or more, an effect of hiding the base by an ink or coating material can be sufficiently obtained. In addition, when the thickness of the coating film layer is 100 $\mu$m or less, drying is facilitated, and occurrence of a defect, such as foaming or sagging, can be suppressed.

Second aspect of first invention

A second aspect of the first invention of the present application is
a (composite) metal pigment comprising composite particles having metal particles and a metal oxide coating formed on surfaces of the metal particles,

(1) an average particle size $D_{50}$ based on volume is 3 to 20 $\mu$m when a particle size distribution of the composite particles is measured by a laser diffraction particle size distribution meter,
(2) the composite particles have an average particle thickness of 15 to 160 nm,
(3) the number proportion of primary particles that are not flocculated with respect to the composite particles is 35% or more, and
(4) the number proportion of the composite particles that are bent with respect to the composite particles is 10% or less.

Hereinafter, details of each component and the like of the (composite) metal pigment of the second aspect will be described.

1. Composite particles constituting composite metal pigment

The composite metal pigment according to the second aspect of the first invention of the present application comprises composite particles having metal particles and a metal oxide coating formed on the surfaces of the metal particles.

That is, in the description of the second aspect in the present description, the term "composite metal pigment" contains, as essential components, composite particles having metal particles and a metal oxide coating formed on the surfaces of the metal particles, and may contain other components, for example, an organic treatment agent and a solvent containing water and/or a hydrophilic solvent.

Metal particles

The composite particles constituting the composite metal pigment according to the second aspect of the first invention of the present application contain metal particles and a metal oxide coating formed on the surfaces of the metal particles. That is, one or more metal oxide coatings are formed on the surfaces of metal particles to be the cores of the composite particles. The metal oxide coating usually has a layered structure.

The material of the metal particles (core particles) constituting the composite particles is not particularly limited, and may be any metal used for known or commercially available metal pigments, such as aluminum, an aluminum alloy, zinc, iron, magnesium, nickel, copper, silver, tin, chromium, or stainless steel. In the present description, the metal of the metal particles constituting the composite particles includes not only a metal simple substance but also an alloy and an intermetallic compound.

The metal particles may be used alone or in combination of two or more.

In the second aspect of the first invention of the present application, the metal particles preferably contain aluminum or an aluminum alloy.

The average particle size of the metal particles is not particularly limited, but is preferably such an average particle size that can achieve $D_{50}$ in the particle size distribution of composite particles described later. That is, it is preferable to set the volume average particle size ($D_{50}$) of the metal particles such that, when the volume distribution of the composite particles is measured by a laser diffraction particle size distribution meter, the $D_{50}$ is 3 to 20 $\mu$m or it can be easily achieved.

The average particle size of the metal particles can be controlled by appropriately adjusting, in the step of grinding and sieving/filtering raw material atomized metal powder (e.g., aluminum powder) using a ball mill or the like, the particle size of the raw material atomized metal powder, the mass per one grinding ball in the case of using a ball mill, the rotation speed of a grinder, the degrees of the sieving and filter press, and the like.

The thickness and shape of the metal particles are also not particularly limited, but it is desirable that the particles have an average particle thickness of 10 to 110 nm and a flaky (flake-like) shape. As a result, the composite particles constituting the composite metal pigment according to the second aspect of the first invention of the present application can also have a flaky shape, and as a result, a high hiding power and the like can be more reliably obtained.

The average thickness of the metal particles is preferably such a thickness that can achieve the average thickness of the composite particles described later, and specifically is preferably 10 to 110 nm. As a result, flocculation or deformation of the composite particles is effectively suppressed, and it becomes easy to realize excellent designability and gloss and suppression of seeds in a coating film, stability in an aqueous coating material, and the like. From the above viewpoints, the average thickness of the metal particles is preferably 15 to 100 nm, and more preferably 20 to 80 nm.

Here, the average particle thickness of the metal particles can be measured by a method known in the art, and can be measured, for example, by forming a coating film using a metal pigment comprising composite particles having metal particles and a metal oxide coating on the surfaces of the metal particles, acquiring an FE-SEM image (field emission scanning electron microscope image) of the cross section thereof, and performing image analysis. More specifically, it can be measured by the method described in Examples of the present application.

The aspect ratio (shape factor obtained by dividing an average particle size by an average thickness) of the flaky shaped metal particles is preferably 30 to 700, more preferably 50 to 600, and particularly preferably 80 to 500. When the aspect ratio of the metal particles is 30 or more, a higher brightness feeling can be obtained. In addition, when the aspect ratio of the metal particles is 700 or less, the mechanical strength of the flakes is maintained, and a stable color tone can be obtained.

Similarly to the D50 based on volume, the average thickness of the metal particles can be controlled by, in the method for manufacturing a composite metal pigment described later, appropriately adjusting, in the step of grinding and sieving/filtering raw material atomized metal powder (e.g., aluminum powder) using a ball mill or the like, the particle size of the raw material atomized metal powder, the mass per one grinding ball in the case of using a ball mill, the rotation speed of a grinder, the degrees of the sieving and filter press, and the like.

In addition, the metal particles do not necessarily need to be composed only of metal, and for example, particles of a synthetic resin, particles in which the surfaces of inorganic particles, such as mica or glass, are coated with metal, and the like can also be used as long as the effects of the second aspect of the first invention of the present application are not impaired. In the second aspect of the first invention of the present application, particles containing aluminum or an aluminum alloy are desirable in terms of particularly high weather resistance, small specific gravity, easy availability, and the like.

Particularly suitable as the metal particles constituting the composite particles are aluminum flakes that are generally frequently used for metallic pigments. As the aluminum flakes, those having surface properties, particle sizes, and shapes that are required for metallic pigments, such as surface glossiness, whiteness, and brightness, are suitable. The aluminum flakes are commercially available usually in a paste state. The paste-like aluminum flakes may be used as they are, or may be used after the fatty acid and the like on the surfaces are removed with an organic solvent or the like in advance. In addition, a so-called aluminum-deposited foil, having a volume average particle size ($D_{50}$) of 3 to 20 $\mu$m and an average thickness (t) of 10 to 110 nm, can also be used.

Metal oxide coating

The composite particles constituting the composite metal pigment according to the second aspect of the first invention of the present application have a metal oxide coating formed on the surfaces of the metal particles.

The metal oxide coating is a film formed by a layer containing a metal oxide, and may be formed on the entire surface of the metal particle, or may be formed on only a part of the surface.

The metal oxide coating may be entirely composed of a metal oxide, or only a part thereof may be composed of a metal oxide and contain components other than metal oxide.

The metal oxide constituting the metal oxide coating is a compound containing oxygen and at least one metal element as the constituent elements thereof.

Therefore, the metal oxide may be a metal oxide in a narrow sense having only oxygen and at least one metal element as the constituent elements thereof, but as long as oxygen and at least one metal element are contained as the constituent elements thereof, elements other than the oxygen and the metal element may be contained as the constituent elements thereof. For example, a metal hydroxide, a metal oxide hydrate, a metal oxynitride, or the like may be contained. A compound containing an organic group may also be contained.

The metal oxide may be a so-called single oxide containing only one type of a metal element as the constituent element, or may be a composite oxide containing two or more of metal elements as the constituent elements.

The at least one metal element as the constituent element of the metal oxide may be a typical metal or a transition metal. Furthermore, the metal element may be a so-called metalloid element. Among them, a metal oxide containing silicon as a constituent element is particularly suitable as a metal oxide constituting the metal oxide coating.

Specific examples of the suitable metal oxide constituting the metal oxide coating include silicon oxide, aluminum oxide, boron oxide, zirconium oxide, cerium oxide, iron oxide, titanium oxide, chromium oxide, tin oxide, molybdenum oxide, vanadium oxide, oxide hydrates thereof, hydroxides thereof, and mixtures thereof. Among them, silicon oxide, aluminum oxide, and mixtures thereof, and oxide hydrates and hydroxides thereof are preferably used. Particularly preferably, silicon oxides such as silicon oxide, silicon hydroxide, and/or silicon oxide hydrate, may be used.

The use of a silicon oxide for the metal oxide coating is particularly advantageous from the viewpoints of realizing good storage stability in an aqueous coating material, improving water resistance when a coating film is formed, suppressing gas generation, and the like.

When a silicon oxide is used for a metal oxide coating, the metal oxide coating usually becomes a layer composed of a compound containing a Si-O- bond (siloxane bond). Examples of such a layer include a layer containing at least one of a silane-based compound and a silicon oxide. Examples of such a compound include silane-based compounds $[H_3SiO(H_2SiO)_nSiH_3]$ (wherein, n indicates an arbitrary positive integer), silicon oxides represented by $SiO_2$, $SiO_2\text{-}nH_2O$ (wherein, n indicates an arbitrary positive integer), and the like. These silane-based compounds and silicon oxides may be either crystalline or amorphous, but are particularly preferably amorphous. Therefore, a layer containing, for example, amorphous silica can also be suitably adopted as the layer containing silicon oxide (silica, etc.).

The metal oxide coating using a silicon oxide may be a layer formed using an organosilicon compound (including a silane coupling agent) as a starting material. In this case, the metal oxide coating may contain an unreacted organosilicon compound or a component derived therefrom as long as the effects of the second aspect of the first invention of the present application are not impaired. In a typical example in this case, the metal oxide coating can be formed by hydrolyzing the organosilicon compound.

The mass of the metal oxide coating layer, when a silicon oxide is used, is not particularly limited, but is preferably 1 to 20 parts by mass based on 100 parts by mass of the metal particles, and particularly more preferably 2 to 15 parts by mass. When the content of silicon in the metal oxide coating is 1 part by mass or more based on 100 parts by mass of the metal particles, the corrosion resistance, water dispersibility, stability, and the like of the composite metal pigment can be maintained high. When the content of silicon in the metal oxide coating is 20 parts by mass or less based on 100 parts by mass of the metal particles, flocculation of the composite particles and a decrease in hiding property or color tone, such as and metal gloss feeling, can be prevented.

The metal oxide coating of the composite particles contained in the composite metal pigment according to the second aspect of the first invention of the present application is particularly preferably hydrophilic. The composite particles usually form a composite metal pigment in the form of being dispersed in an aqueous solvent (water or a mixed solvent containing water and an organic solvent), and when the metal oxide coating has a hydrophilic surface, the composite particles can be highly dispersed in such an aqueous solvent. Moreover, since a metal oxide, such as a silicon oxide (amorphous silica or the like), is very stable in an aqueous solvent, it is possible to provide a composite metal pigment comprising composite particles that are highly stable in an aqueous solvent. From such a viewpoint, for the composite particles contained in the composite metal pigment according to the second aspect of the first invention of the present application, at least the outermost layer is desirably a metal oxide film, and is particularly desirably a silicon compound-containing layer (particularly, a layer composed of a compound containing a Si-O bond). When the composite particles have a coating layer composed of a plurality of layers, a metal oxide layer, particularly preferably a silicon compound-containing layer (particularly, Si-O-based coating layer) may be separately formed as a layer other than the outermost layer, particularly preferably a layer to be in contact with the metal particles, in addition to the outermost metal oxide coating, because a metal oxide is also excellent in affinity with the metal particles.

The thickness of the metal oxide coating of individual composite particles is not particularly limited as long as the average thickness of the composite particles is in the range of 15 to 160 nm, as described later. The thickness of the metal oxide coating is usually desirably within the range of about 1 to 70 nm (particularly 2 to 50 nm, and further 5 to 40 nm). When the thickness of the metal oxide coating is 1 nm or more, a coating film, having sufficient water resistance and in which occurrence of corrosion or discoloration of the metal particles in an aqueous coating material is suppressed, can be obtained. On the other hand, when the thickness of the metal oxide coating is about 70 nm or less, the lightness, sharpness, and hiding power of the coating film can be maintained at high levels.

When the metal oxide coating of individual composite particles contains a silicon compound-containing layer, the thickness of the silicon compound-containing layer is also not particularly limited as long as the average thickness of the composite particles is in the range of 15 to 160 nm, as described later. From the viewpoint of exhibiting the function of the silicon compound-containing layer, the thickness of the layer may be usually in the range of 1 to 70 nm, and is particularly preferably in the range of 2 to 50 nm.

Details of an organosilicon compound that can be used in the present embodiment, such as the preferred form thereof and the like, are the same as those described above in relation to the first aspect.

Physical properties of composite metal pigment

The composite metal pigment according to the second aspect of the first invention of the present application is characterized in that metal particles and composite particles constituting the composite metal pigment satisfy the following physical property requirements.

(1) The average particle size $D_{50}$ based on volume is 3 to 20 $\mu$m when the particle size distribution of the composite particles is measured by a laser diffraction particle size distribution meter.
(2) The composite particles have an average particle thickness of 15 to 160 nm.
(3) The number proportion of primary particles that are not flocculated with respect to the composite particles is 35% or more.
(4) The number proportion of the composite particles that are bent with respect to the composite particles is 10% or less.

Each of these physical property requirements will be described below.

(1) The average particle size $D_{50}$ based on volume is 3 to 20 $\mu$m when the particle size distribution of the composite particles is measured by a laser diffraction particle size distribution meter.

The average particle size $D_{50}$ based on volume is 3 to 20 $\mu$m when the particle size distribution of the composite particles is measured by a laser diffraction particle size distribution meter. As a result, flocculation or deformation of the particles can be effectively suppressed, and a coating film formed using a composite metal pigment or a metal pigment composition containing the composite metal pigment can realize excellent designability and gloss, suppression of seeds, stability in an aqueous coating material, and the like. This $D_{50}$ based on volume is also generally referred to as a median diameter.

From the viewpoints of obtaining excellent designability and gloss, suppression of seeds, stability in an aqueous coating material, and the like, the $D_{50}$ based on volume is preferably 4 to 15 $\mu$m when the particle size distribution of the composite particles is measured by a laser diffraction particle size distribution meter, and more preferably 5 to 12 $\mu$m.

When a plurality of the composite particles are flocculated/fixed, the "composite particles" in this physical property requirement refer to flocculated matters (aggregates) thereof.

Here, the $D_{50}$ based on volume, when the particle size distribution of the composite particles is measured by a laser diffraction particle size distribution meter, refers to the particle size at a cumulative frequency of 50% in a volume-based cumulative particle size distribution. The laser diffraction particle size distribution meter is not particularly limited, but "LA-300" (manufactured by HORIBA, Ltd.) or the like can be used. As the measurement solvent, a hydrophilic solvent, such as water, isopropanol, or methoxypropanol, can be used. For example, a composite metal pigment comprising composite particles as a sample is subjected to ultrasonic dispersion for about 2 minutes as a pretreatment, and then it is put into a dispersion vessel. After it is confirmed that the composite metal pigment is properly dispersed, the $D_{50}$ can be measured.

The $D_{50}$ based on volume of the composite particles constituting the composite metal pigment can be controlled by: in a method for manufacturing a composite metal pigment described later, appropriately adjusting, in the step of grinding and sieving/filtering raw material atomized metal powder (e.g., aluminum powder) using a ball mill or the like, the particle size of the raw material atomized metal powder, the mass per one grinding ball in the case of using a ball mill and the input amount, the rotation speed of a grinder, the degrees of the sieving and filter press, and the like; and appropriately adjusting, in the step of coating with the metal oxide coating (and another coating layer as necessary), the pH, concentration, stirring temperature, stirring time, type of a stirring apparatus, power/degree of the stirring (type and diameter of a stirring blade, rotation speed, presence or absence of external stirring, etc.) and the like at the time of the hydrolysis of the raw material such as an organosilicon compound.

The particle size tends to be enlarged due to the flocculation during the coating treatment of the metal oxide, and the enlargement of the particle leads to a decrease in color tone, a decrease in hiding property, and a deterioration in coating film appearance, and thus it is effective to prevent the enlargement of the particle by particularly pretreating a raw material aluminum paste to be used for the treatment.

(2) The composite particles have an average particle thickness of 15 to 160 nm.

The average thickness of the composite particles contained in the composite metal pigment according to the second aspect of the first invention of the present application is 15 to 160 nm. As a result, in combination with the satisfaction of the requirements (1) and (2), flocculation or deformation of the composite particles are effectively suppressed, and excellent designability and gloss and suppression of seeds in a coating film, stability in an aqueous coating material, and the like can be realized.

From the above viewpoints, the average thickness of the composite particles is preferably 20 to 130 nm, more preferably 25 to 110 nm, and even more preferably 30 to 90 m.

When a plurality of the composite particles are flocculated/fixed, the "composite particles" in this physical property requirement refer to flocculated matters (aggregates) thereof.

Here, the average thickness of the composite particles can be calculated by measuring the average particle thickness of the metal particles and the thickness of the metal oxide coating, respectively, and by using them and the following equation.

$$\text{Average particle thickness of composite particles} = \text{average particle thickness of metal particles} + \text{thickness of metal oxide coating} \times 2$$

The average particle thickness of the metal particles can be measured by the method described in the above (2).

The thickness of the metal oxide coating can be measured by a method known in the art, and can be measured by, for example, STEM (scanning transmission electron microscope). More specifically, it can be measured by the method described in Examples of the present application.

Similarly to the $D_{50}$ based on volume, the average thickness of the composite particles contained in the composite metal pigment can be controlled by, in a method for manufacturing a composite metal pigment described later and in the step of coating with the metal oxide coating such as a silicon compound-containing layer (and another coating layer as necessary), appropriately adjusting the pH, concentration, stirring temperature, stirring time, type of a stirring apparatus, power/degree of the stirring (type and diameter of a stirring blade, rotation speed, presence or absence of external stirring, etc.) and the like at the time of the pre-treatment of the raw material aluminum paste and the hydrolysis of the raw material such as an organosilicon compound. The particle size tends to be enlarged due to the flocculation during the coating treatment of the metal oxide, and the enlargement of the particle leads to a decrease in color tone, a decrease in hiding property, and a decrease in coating film appearance, and thus it is effective to prevent the enlargement of the particle by particularly pretreating a raw material aluminum paste to be used for the treatment.

The composite particles contained in the composite metal pigment according to the second aspect of the first invention of the present application preferably have an aspect ratio (shape factor obtained by dividing an average particle size by an average thickness) of 30 to 700. When the aspect ratio of the composite particles is 30 or more, a higher brightness feeling can be easily obtained. In addition, when the aspect ratio of the composite particles is 700 or less, the mechanical strength of the composite particle is maintained, and a stable color tone is easily obtained. The aspect ratio is preferably 50 to 600, and more preferably 80 to 500.

(3) The number proportion of primary particles that are not flocculated with respect to the composite particles is 35% or more.

In the composite metal pigment according to the second aspect of the first invention of the present application, the number proportion of primary particles that are not flocculated with respect to the entire composite particles contained in the composite metal pigment is 35% or more. When the proportion of the primary particles is 35% or more, it means that the flocculation property of individual particles is suppressed, and not only in the primary particles but also in the flocculated particles, the degree of the flocculation is smaller. As a result, a coating film formed by using the composite metal pigment exhibits excellent designability and gloss and suppression of seeds, and the stability in an aqueous coating material and the like can be improved.

In addition, the flocculation property of individual particles is suppressed as described above, and thus the stirring for the dispersion is sufficient even when it is mild, which can greatly reduce the deformation of the particles due to stirring.

From the viewpoint of promoting the above effects, the number proportion of primary particles that are not flocculated with respect to the collective bodies of the composite particles is preferably 40% or more, more preferably 50%or more, even more preferably 60% or more, and particularly preferably 70% or more.

The proportion of primary particles that are not flocculated with respect to the collective bodies of the composite particles is usually preferably as high as possible, and there is no particular upper limit, and it is ideal when the proportion is 100%.

The proportion of primary particles that are not flocculated with respect to the collective bodies of the composite particles can be measured by a method known in the art, and can be measured, for example, by: forming a coating film using a metal pigment made of the collective bodies of composite particles having metal particles and a metal oxide coating formed on the surfaces of the metal particles; acquiring an FE-SEM image (field emission scanning electron microscope image) of the cross section thereof; and performing image analysis, or counting the numbers of the primary particles and flocculated particles in the FE-SEM image by an evaluator. More specifically, it can be measured by the method described in Examples of the present application.

The proportion of primary particles that are not flocculated with respect to the collective bodies of the composite particles can be controlled by selecting or treating the metal particles constituting the composite particles, and by appropriately setting the type of a metal oxide coating to be formed on the metal particles and the manufacturing conditions. As an existing technique, an attempt has been made to enhance mechanical dispersion by increasing the stirring rotation speed at the time of coating treatment and setting a Reynolds number to a certain value or more, but in this method, there is a limit on the dispersion of such fine particles as used in the present application, and there is a problem that, due to strong stress during the stirring, flaky shaped thin particles may be broken or deformed.

On the other hand, when, before a coating treatment with a metal oxide is performed on the metal particle, the metal particle is subjected to a pretreatment for improving dispersibility, it is possible to suppress flocculation of the particles during the coating treatment, which makes it possible to greatly increase the proportion of primary particles that are not flocculated.

For example, in a case where metal particles to be a raw material are dispersed in a solvent and supplied, the solvent is replaced by the same solvent as the solvent to be used for the coating treatment, and further as desired, the solvent is caused to sufficiently spread on the surfaces of the metal particles by performing a heating treatment for a certain period of time, whereby flocculation to be caused during the coating treatment can be greatly suppressed. Furthermore, addition of a small amount of a surfactant at this time is also effective for suppressing the flocculation.

Since the dispersibility of the metal particles themselves is improved by these treatments, it is not necessary to perform excessive stirring during the coating treatment, and primary particles that are not flocculated can be manufactured even with mild stirring. As a result, it becomes possible to greatly reduce the deformation of the particles during the coating treatment, and it becomes easy to realize excellent designability and gloss and suppression of seeds in a coating film, stability in an aqueous coating material, and the like.

In addition to the above, examples of factors that affect the proportion of primary particles that are not flocculated include: in the step of grinding and sieving/filtering raw material atomized metal powder (e.g., aluminum powder) or the like using a ball mill or the like, the particle size of the raw material atomized metal powder or the like, the mass per one grinding ball in the case of using a ball mill, the rotation speed of a grinder, the degrees of the sieving and filter press; in the step of coating with the metal oxide coating such as a silicon compound-containing layer (and another coating layer as necessary), the pH, concentration, stirring temperature, stirring time, type of a stirring apparatus, power/degree of the stirring (type and diameter of a stirring blade, rotation speed, presence or absence of external stirring, etc.) at the time of the hydrolysis of the raw material such as an organosilicon compound; and the like. By appropriately adjusting them, the proportion of primary particles that are not flocculated can also be controlled.

In the composite metal pigment according to the second aspect of the first invention of the present application, the number proportion of aggregates constituted by at least four of the composite particles, is preferably 15% or less with respect to the total number of the composite particles. As a result, in combination with the satisfaction of the above-described requirements, a coating film formed by using the composite metal pigment can exhibit higher hiding power and brightness feeling and the like, and the flocculation property of individual particles can be suppressed to be smaller. The number proportion of aggregates constituted by at least four of the composite particles, is understood to be the degree of overlap between the composite particles, that is, the degree of a flocculation property. When the number proportion of aggregates constituted by at least four of the composite particles, is 15% or less with respect to the total number of the composite particles, the orientations of the composite particles in the coating film are ordered, and the proportion of composite particles aligned in parallel to the surface of the coating film increases. As a result, it is considered that the projected area of the composite particle in the coating film formed by using the metal pigment composition is increased to enhance hiding power and a brightness feeling, and furthermore, it becomes easy to form a uniform and sufficient coating on the individual particle, so that the flocculation property of individual particle is further reduced. Furthermore, since the number proportion of the aggregates constituted by at least four of the composite particles is, small, it is possible to effectively prevent a situation in which the flocculated matters of the composite particles, once formed in the aqueous coating material, may collapse to expose an untreated surface, and the composite particle may react with the water, a solvent of the aqueous coating material, to generate hydrogen gas.

The number proportion of aggregates constituted by at least four of the composite particles, in the composite metal pigment is preferably 10% or less, more preferably 6% or less, and even more preferably 3% or less. The smaller the proportion, the better, but it is not easy to make it completely zero.

(4) The number proportion of the composite particles that are bent with respect to the composite particles is 10% or less.

In the composite metal pigment according to the second aspect of the first invention of the present application, the proportion of composite particles that are bent, with respect to the entire composite particles contained in the composite metal pigment is 10% or less. As a result, in combination with the satisfaction of the above requirements (1) to (3), a coating film formed by using the composite metal pigment exhibits excellent designability and gloss and suppression of seeds, and stability in an aqueous coating material and the like can be improved.

In the coating treatment of aluminum particles, flocculation of particles is likely to occur, and in order to avoid this, a method for applying a shear to the particles by strengthening the stirring during the reaction to prevent the flocculation has conventionally been known. With this method, the flocculation of the particles can be suppressed to some extent, but on the other hand, there has been a problem that the flake-shaped aluminum particles are deformed by the shear and coating film performance is decreased. The proportion of the composite particles that are bent is understood to be an index related to the degree of deformation or damage of the composite particles. When the proportion of composite particles that are bent is 10% or less, the degree of the deformation or damage of the composite particles is small, and thus the proportion of the untreated surfaces (surfaces on which a metal oxide film is not formed) of the respective composite particles is reduced, so that stability in an aqueous coating material is improved, and furthermore it becomes easy to form a uniform and sufficient coating on each particle. As a result, the flocculation property of individual particles is further reduced, so that a coating film, showing excellent designability and gloss and suppression of seeds on the surface of a coating film formed by using the composite metal pigment, can be obtained.

The smaller the proportion of composite particles that are bent with respect to the collective bodies of the composite particles, the better. This proportion is preferably 6% or less, and more preferably 3% or less. Since the smaller the proportion of the composite particles that are bent is, the more preferable it is, there is no particular lower limit thereon, but the proportion is ideally 0%.

The proportion of composite particles that are bent in the composite metal pigment can be measured by a method known in the art, and it can be measured, for example, by forming a coating film using a metal pigment made of collective bodies of composite particles having metal particles and a metal oxide coating formed on the surfaces of the metal particles, acquiring an FE-SEM image (field emission scanning electron microscope image) of the cross section thereof, and performing image analysis. More specifically, a particle, having the ratio of the linear distance between both tips of the cross section of the metal particle in the FE-SEM image to the path length between both tips along the cross section of the metal particle of 1.2 or more, is determined as a particle that is bent, and the number proportion of the particles is obtained, whereby the proportion can be measured. More specifically, it can be measured by, for example, the method described in Examples of the present application.

The proportion of composite particles that are bent in the composite metal pigment can be controlled mainly by, in the step of coating with the metal oxide coating (and another coating layer as necessary), appropriately adjusting the pretreatment for improving the dispersibility of a raw material aluminum paste, the stirring time, the type of a stirring apparatus, the power/degree of the stirring (type and diameter of a stirring blade, rotation speed, presence or absence of external stirring, etc.) and the like.

Furthermore, by improving the dispersibility of the particles themselves during the reaction by the pretreatment of the raw material aluminum paste, the stirring for the dispersion is sufficient even when it is mild, which can greatly reduce the deformation of the particles due to stirring.

Second coating layer

The coating layers of the composite particle contained in the composite metal pigment according to the second aspect of the first invention of the present application are not particularly limited as long as at least one metal oxide coating layer is provided, but a coating layer other than the metal oxide coating (hereinafter, referred to as "second coating layer") can be formed as necessary.

The second coating layer preferably contains, for example, at least one of a metal (alkali metal; alkaline earth metal; metal such as manganese, iron, cobalt, nickel, copper, or silver), a metal oxide (titanium oxide, zirconium oxide, iron oxide, or the like), a metal hydrate, and a resin (synthetic resin such as an acrylic resin, an alkyd resin, a polyester resin, a polyurethane resin, a polyvinyl acetate resin, a nitrocellulose resin, or a fluororesin). As the second coating layer, for example, a molybdenum-containing coating film, a phosphoric acid compound coating film, or the like can be formed. When the second coating layer is provided, the corrosion resistance of the metal particle can be improved, and the formation of the metal oxide coating, such as a silicon compound-containing layer, can be promoted.

The second coating layer (when formed) is preferably formed particularly between the metal particle and the metal oxide coating, such as a silicon compound-containing layer. Therefore, for example, a layer configuration of "metal particle/second coating layer/metal oxide coating" can be suitably adopted. Although not particularly limited, examples of the molybdenum-containing coating film can include those disclosed in JP-A-2003-147226, WO 2004/096921 A, JP-B-5979788, and JP-A-2019-151678. Examples of the phosphoric acid compound coating film include those disclosed in JP-B-4633239. Preferred examples of the molybdenum-containing material constituting the molybdenum-containing coating film include a mixed coordination type heteropolyanion compound disclosed in JP-A-2019-151678.

In another modification, the second coating layer can be formed outside the metal particle and the metal oxide coating such as a silicon compound-containing layer. In yet another modification, the constituent components (such as a molybdenum-containing compound and a phosphoric acid compound) of the second coating layer can be contained in the metal oxide coating, such as a silicon compound-containing layer, together with the silicon compound and the like.

The mixed coordination type heteropolyanion compound preferably used in the aspect of forming the second coating layer (typically, a molybdenum-containing coating film) other than the metal oxide coating of the composite particles contained in the composite metal pigment according to the second aspect of the first invention of the present application is not particularly limited, but the details thereof, such as the preferred form and the like, are the same as those described above in relation to the first aspect.

The second coating layer other than the metal oxide coating of the composite particles contained in the composite metal pigment according to the present embodiment may be a layer containing another corrosion inhibitor in order to further improve the corrosion resistance of the metal particles (preferably, aluminum particles or aluminum alloy particles) to be the cores. The corrosion inhibitor to be added is not particularly limited, and any known corrosion inhibitor can be used. The use amount thereof may be within a range that does not inhibit the desired effects of the second aspect of the first invention of the present application. Examples of such a corrosion inhibitor include metal salts of an acidic phosphoric acid ester, a dimer acid, an organophosphorus compound, and a molybdic acid.

From the viewpoint of adhesion and chemical resistance when a coating film is formed, an organic oligomer or polymer can be further contained in the metal oxide coating and/or the second coating layer of the composite particles contained in the composite metal pigment, or in a separate layer.

In addition, from the viewpoint of storage stability, at least one selected from the group consisting of inorganic phosphoric acids and salts thereof, and acidic organic (phosphorous) phosphoric esters and salts thereof may be contained in the metal oxide coating and/or the second coating layer of the composite particles, or in a separate layer.

These compounds are not particularly limited, but for example, compounds disclosed in JP-A-2019-151678 can be used.

2. Method for manufacturing composite metal pigment

The composite metal pigment according to the second aspect of the first invention of the present application can be suitably manufactured by a manufacturing method including, for example, the step of forming a metal oxide coating on metal particles under stirring using a solvent containing water and/a hydrophilic solvent.

Hereinafter, a specific method will be described by taking a case, where the metal oxide coating is a silicon compound-containing layer, as an example, but the method for manufacturing the composite metal pigment according to the second aspect of the first invention of the present application is not limited thereto. A person skilled in the art can appropriately form a metal oxide coating other than the silicon compound-containing layer with reference to the following description.

In manufacturing the composite metal pigment according to the second aspect of the first invention of the present application, it is preferable to perform a pretreatment described later.

The composite metal pigment, in which the metal oxide coating is a silicon compound-containing layer, can be suitably manufactured by a method including, for example, the step (silicon compound-containing layer forming step) of forming the silicon compound-containing layer on the surface of metal particle by subjecting an organosilicon compound to hydrolysis/(partial) condensation reactions in a mixed liquid containing (a) metal particles, (b) a silicon-containing raw material containing at least one organosilicon compound, (c) a solvent (water and/or a hydrophilic solvent), and as necessary, other optional components. This step can usually be performed under stirring.

Pulverization and sieving/filtration steps

Here, description will be made by taking a case, where aluminum powder is used as (a) metal particles, as an example.

The aluminum powder is generally obtained: by pulverizing atomized aluminum powder and/or an aluminum foil in the presence of a pulverization aid or an inert solvent by using a method commonly used in the pigment industry, such as a dry ball mill method, a wet ball mill method, an attritor method, or a stamp mill method, so that the pulverized substances are caused to have a so-called flaky shape; and after this step, performing necessary steps such as sieving (classification), filtration, washing, and mixing.

Examples of the pulverization aid here include fatty acids, aliphatic amines, aliphatic amides, and aliphatic alcohols. In general, oleic acid, stearic acid, stearylamine, and the like are preferable. Examples of the inert solvent include those exhibiting hydrophobicity such as mineral spirit, solvent naphtha, toluene, and xylene, and these solvents can be used alone or in combination. The pulverization aid and the inert solvent are not limited thereto.

As the pulverization step, pulverization by a wet ball mill method is preferable from the viewpoints of preventing dust explosion and securing safety.

When aluminum particles are adopted as the metal particles in the manufacture of the composite metal pigment according to the second aspect of the first invention of the present application, commercially available paste-like aluminum flakes obtained through such pulverization and sieving/filtration can be used. The paste-like aluminum flakes may be used as they are, or may be used after the fatty acid and the like on the surfaces are removed with an organic solvent or the like in advance.

Pretreatment step

The composite metal pigment according to the second aspect of the first invention of the present application can be suitably manufactured by a manufacturing method including the step of forming a metal oxide coating on metal particles as described above, but it is preferable to perform a pretreatment prior to the step of forming the metal oxide coating in order to improve the dispersibility of the particles in the step.

This makes it possible to suppress flocculation of the particles during the coating treatment, and as a result, the dispersibility of the obtained composite particles is also good, and the proportion of primary particles that are not flocculated can be greatly increased.

As a more specific pretreatment, when metal particles as a raw material are dispersed in an inert solvent and supplied, the solvent can be replaced by the same solvent as the solvent to be used for the coating treatment. Furthermore, if desired, by subjecting the solvent to a heating treatment for a certain period of time to cause the solvent to sufficiently spread on the surfaces of the metal particles, flocculation to be caused during the coating treatment can be greatly suppressed. The heat treatment temperature is preferably about 30 to 60°C, and the treatment time is preferably optimized between 3 hours and 7 days. In the step of performing the coating treatment, a hydrophilic solvent, such as ethanol, isopropanol, or methoxypropanol, is preferably used, and thus the same hydrophilic solvent as that used in the reaction is also preferably used in the pretreatment.

Furthermore, adding a small amount of a surfactant at this time is also effective for suppressing the flocculation during the pretreatment. The surfactant is not particularly limited, but is preferably a nonionic surfactant or an anionic surfactant, and particularly preferably a nonionic surfactant.

In the pretreatment, the dispersibility can be further enhanced by performing an ultrasonic treatment.

The ultrasonic treatment is not particularly limited, but can be usually performed at 10 to 1,000 W, and preferably at 50 to 800 W for usually 20 seconds to 10 minutes, and preferably about 30 seconds to 5 minutes.

Such pre-dispersion of the metal particles can be usually performed at 10 to 80°C, preferably at 15 to 60°C, and most preferably at around room temperature (about 20 to 40°C). The pre-dispersion of the metal particles can also be performed for a period of 5 minutes to 2 hours (including a time for the ultrasonic treatment when performed), and preferably for a period of 10 minutes to 1 hour.

Step of forming silicon compound-containing layer

Subsequently, the step of forming a silicon compound-containing layer can be performed. Details of the step of forming the silicon compound-containing layer, such as the preferred form thereof and the like, are the same as those described above in relation to the first aspect.

Step of forming second coating layer

In addition to the metal oxide coating, preferably the silicon compound-containing layer, the composite particles constituting the composite metal pigment according to the second aspect of the first invention of the present application preferably further contain a coating layer (second coating layer) other than the metal oxide coating, preferably a coating layer containing at least one selected from a metal, a metal oxide, a metal hydrate, and a resin. Details of the step of forming the second coating layer, such as the preferred form thereof and the like, are the same as those described above in relation to the first aspect.

Step of recovering composite particles

After the step of forming the metal oxide coating such as a silicon compound-containing layer (and optionally the second coating layer) on the metal particles is finished, the obtained composite particles can be recovered. In the recovery, a known treatment, such as washing and solid-liquid separation, can also be performed as necessary. For example, it is preferable that the dispersion is washed using an organic solvent, and then filtered using a filter to remove water and unreacted substances from the cake containing the composite particles. Thereafter, the cake containing the composite particles may be subjected to a heat treatment at a temperature in the range of, for example, 100 to 500°C as necessary. As described later, the composite particles recovered in this way can usually form a composite metal pigment (hereinafter, also referred to as "metal pigment composition") in which a small amount of solvent, containing water/hydrophilic solvent used in the manufacturing process, remains and is entrained.

3. Metal pigment composition

The composite metal pigment obtained as described above is understood to form a metal pigment composition: comprising composite particles containing metal particles and one or more metal oxide coatings formed on the surfaces of the metal particles; possibly containing, as residues of the solid contents (nonvolatile contents), an unreacted organosilicon compound, a compound forming the second coating layer, an oligomer or polymer derived from these compounds, and the like; and further, usually containing a solvent such as water/hydrophilic solvent used in the manufacturing process.

In the metal pigment composition, a silicon compound, which is a hydrolysate of an organosilicon compound (e.g., at least one selected from at least one organosilicon compound represented by the above general formula (1), a silane coupling agent represented by any one of the above general formulas (2), (3), and (4), and partial condensates thereof) and/or a condensate thereof, can usually be present in an amount of 0.02 to 50 parts by mass based on 100 parts by mass of the metal particles, in terms of a state in which the hydrolysis/condensation reactions are completed.

In the metal pigment composition, there can be present a compound to form the optional second coating layer (in an optional aspect of forming a molybdenum-containing coating film as the second coating layer, a molybdenum-containing compound, e.g., a mixed coordination type heteropolyanion compound) in an amount of 0.01 to 10 parts by mass based on 100 parts by mass of the metal particles.

In the metal pigment composition, there can be present an optional organic oligomer or polymer in an amount of 0.01 to 50 parts by mass based on 100 parts by mass of the metal particles.

In the metal pigment composition, there can be present at least one selected from the group consisting of optional inorganic phosphoric acids and salts thereof and acidic organic (phosphorous) phosphoric acid esters and salts thereof, in an amount of 0.01 to 20 parts by mass based on 100 parts by mass of the metal particles.

In the metal pigment composition, there can be present a solvent containing water/hydrophilic solvent used in the manufacturing process. The amount of the solvent containing water/hydrophilic solvent may be, for example, 0.5 to 95% by mass of the metal pigment composition. Alternatively, the amount of the solvent, containing the water/hydrophilic solvent, may be 1 to 90% by mass of the metal pigment composition, 2 to 80% by mass, or 5 to 70% by mass.

The metal pigment composition may optionally contain optional components other than those described above. Examples of the optional component include at least one of an antioxidant, a light stabilizer, and a surfactant.

As the antioxidant, an antioxidant represented by a phenol-based compound, a phosphorus-based compound, or a sulfur-based compound can be used.

As the light stabilizer, those to be used as the above-described antioxidant can also be used, but those represented by a benzotriazole-based compound, a benzophenone-based compound, a salicylate-based compound, a cyanoacrylate-based, an oxalic acid derivative, a hindered amine-based compound (HALS), and a hindered phenol-based compound can be used.

Examples of the surfactant include: nonionic surfactants represented by polyoxyalkylene alkyl ethers such as polyoxyethylene lauryl ether, polyoxyethylene cetyl ether, polyoxyethylene stearyl ether, and polyoxyethylene oleyl ether, polyoxyalkylene alkylphenyl ethers such as polyoxyethylene octylphenyl ether and polyoxyethylene nonylphenyl ether, polyoxyalkylene alkylamino ethers such as polyoxyethylene laurylamino ether and polyoxyethylene stearylamino ether, sorbitan fatty acid esters such as sorbitan monolaurate, sorbitan monopalmitate, sorbitan monostearate, and sorbitan monooleate, polyoxyalkylene sorbitan fatty acid esters such as polyoxyethylene sorbitan monolaurate, polyoxyethylene sorbitan monopalmitate, polyoxyethylene sorbitan monostearate, and polyoxyethylene sorbitan monooleate, polyalkylene glycol fatty acid esters such as polyethylene glycol monolaurate, polyethylene glycol monooleate, polyethylene glycol monostearate, polyethylene glycol dilaurate, and polyethylene glycol distearate, glycerin fatty acid esters such as lauric acid monoglyceride, stearic acid monoglyceride, and oleic acid monoglyceride; anionic surfactants represented by

sulfuric acid ester salts such as sodium polyoxyethylene lauryl ether sulfate, sodium polyoxyethylene octylphenyl ether sulfate, sodium polyoxyethylene nonylphenyl ether sulfate, triethanolamine lauryl sulfate, sodium lauryl sulfate, potassium lauryl sulfate, and ammonium lauryl sulfate, sulfuric acid salts such as sodium dodecylbenzene sulfonate, sodium alkylnaphthalene sulfonate, and sodium dialkylsulfosuccinate, phosphoric acid ester salts such as potassium alkylphosphate; and
cationic surfactants represented by quaternary ammonium salts such as lauryltrimethylammonium chloride, cetyltrimethylammonium chloride, and stearyltrimethylammonium chloride, and one or more selected from these surfactants can be used. Among them, particularly preferred examples include polyoxyethylene lauryl ether, polyoxyethylene cetyl ether, polyoxyethylene stearyl ether, polyoxyethylene oleyl ether, and mixtures thereof.

4. Applications of Composite Metal Pigments

The composite metal pigment of the second aspect of the first invention of the present application can be used for organic solvent-based coating materials, inks, and the like. In addition, when added to an aqueous coating material or aqueous ink in which resins, which are coating film-forming components (binders), are dissolved or dispersed in a medium mainly containing water, this composite metal pigment can form a metallic aqueous coating material or metallic aqueous ink. The composite metal pigment can also be kneaded with a resin or the like to be used as a water-resistant binder or filler. The antioxidant, the light stabilizer, or the surfactant may be added when the composite metal pigment is blended in an aqueous coating material, an aqueous ink, a resin, or the like.

When the composite metal pigment is used for a coating material or an ink, the composite metal pigment may be added as it is to a (aqueous) coating material or a (aqueous) ink, but it is preferable to add the composite metal pigment after being dispersed in a solvent in advance. Examples of the solvent to be used include water, texanol, diethylene glycol monobutyl ether, and propylene glycol monomethyl ether. Examples of these resins include acrylic resins, polyester resins, polyether resins, epoxy resins, fluororesins, and rosin resins. Examples of the binder of the coating material or the ink include rubber in addition to the resin.

These resins are preferably emulsified, dispersed, or dissolved in water. Therefore, carboxyl groups, sulfone groups, and the like contained in the resins can be neutralized.

Preferred examples of the resins include acrylic resins and polyester resins.

If necessary, a resin, such as a melamine-based curing agent, an isocyanate-based curing agent, or a urethane dispersion, can be used in combination. Furthermore, it may be combined with a coloring pigment such as an inorganic pigment, an organic pigment, or an extender pigment that is generally added to a coating material, a silane coupling agent, a titanium coupling agent, a dispersant, an anti-settling agent, a leveling agent, a thickener, or an antifoaming agent. A surfactant may further be added in order to improve the dispersibility in the coating material, or an antioxidant, a light stabilizer, and a polymerization inhibitor may further be added in order to improve the storage stability of the coating material.

Examples of the coloring pigment include phthalocyanine, quinacridone, isoindolinone, perylene, azo lake, iron oxide, chrome yellow, carbon black, titanium oxide, and pearl mica.

The content of the composite metal pigment according to the second aspect of the first invention of the present application in the aqueous coating material or aqueous ink (resin composition) is not limited, but may usually be set to 0.1 to 30% by mass, and is particularly preferably set to 1 to 20% by mass. When the content is 0.1% by mass or more, a high decorative (metallic) effect can be obtained. In addition, when the content is 30% by mass or less, it is possible to prevent the characteristics of the aqueous coating material or the aqueous ink, for example, weather resistance, corrosion resistance, mechanical strength, and the like from being impaired.

The content of the solvent is not particularly limited, but may be 20 to 200% by mass with respect to the binder content. When the content of the solvent is within this range, the viscosity of the coating material or ink is adjusted to an appropriate range, and handling and film formation can be facilitated.

A coating method or a printing method of an aqueous coating material or the like is not particularly limited. For example, various coating methods or printing methods can be appropriately adopted in consideration of the form of an aqueous coating material or the like, the surface shape of a material to be coated, and the like. Examples of the coating method include a spray method, a roll coater method, a brush coating method, and a doctor blade method. Examples of the printing method include gravure printing and screen printing.

The coating film formed by an aqueous coating material or the like may be formed on an undercoat layer or an intermediate coat layer by electrodeposition coating or the like. If necessary, a topcoat layer or the like may be formed on a coating film formed by an aqueous coating material or the like.

In the case of these layer configurations, each coating film layer is coated and cured or dried, and then the next coating film layer may be coated; alternatively, each coating film layer is coated by so-called wet-on-wet coating, and then, with the layer uncured or undried, the next coating film layer may be coated. For the aqueous coating material or the like containing the composite metal pigment according to the second aspect of the first invention of the present application, it is preferable from the viewpoint of obtaining a coating film having good mirrorlike brightness to adopt a method including the step of, after an underlayer coating film layer is coated and cured or dried, forming a coating film layer by the aqueous coating material or the like.

The method for curing the coating composition in each coating film layer may be thermal curing or normal temperature curing. The method for drying the coating composition in each coating film layer may be, for example, drying using hot air or natural drying at room temperature.

The thickness of the coating film layer formed by the aqueous coating material or the like is not particularly limited, but is usually preferably about 0.5 to 100 $\mu$m, and more preferably about 1 to 50 $\mu$m. When the thickness of the coating film layer is 0.5 $\mu$m or more, an effect of hiding the base by an ink or coating material can be sufficiently obtained. In addition, when the thickness of the coating film layer is 100 $\mu$m or less, drying is facilitated, and occurrence of a defect, such as foaming or sagging, can be suppressed.

The composite metal pigment according to the second aspect of the first invention of the present application, the coating film obtained by using the composite metal pigment, and the like combine excellent designability and gloss, suppression of seeds, stability in an aqueous coating material, and the like at high levels, so that they can be suitably used in various applications in which metal pigments are conventionally used, such as coating materials, inks, and resin kneading agents; more specifically, automobile bodies, automobile repairing materials, automobile parts, home electric appliances, plastic parts, PCM coating materials, high weather-resistant coating materials, heat-resistant coating materials, anticorrosive coating materials, ship bottom coating materials, offset printing inks, gravure printing inks, screen printing inks, and the like.

Second invention

A second invention of the present application is a (composite) metal pigment comprising composite particles in which metal particles are coated with a polysiloxane layer, in which

1) the proportion of Q4 structures, in which a Si atom has four -O-Si- bonds in the structure of the polysiloxane, is 40 to 90%, and
2) when surfaces of the composite particle are evaluated by XPS, the relative element concentration, ((A/B) $\times$ 100), between the element concentration of metal, A, and the element concentration of Si, B, is 10% by mole or less.

In the metal pigment of the second invention of the present application, when 200 g of an aqueous metallic coating material, containing 12 g of the metal pigment as a nonvolatile content, 18 g of methoxypropanol, 110 g of an aqueous acrylic resin, 18 g of a melamine resin, and 12 g of water, is collected in a flask and a cumulative amount of generated hydrogen gas is measured in a constant-temperature water bath at 60°C for up to 24 hours, gas generation is preferably 10 ml or less.

The metal pigment of the second invention of the present application is preferably used in a metal pigment composition containing the metal pigment.

The metal pigment of the second invention of the present application is preferably used in an aqueous coating material composition containing the metal pigment. The metal pigment of the second invention of the present application is particularly preferably used in an aqueous metallic coating material, and when 200 g of an aqueous metallic coating material, containing the metal pigment, is collected in a flask and a cumulative amount of generated hydrogen gas is measured in a constant-temperature water bath at 60°C for up to 24 hours, gas generation is preferably 10 ml or less.

The metal pigment of the second invention of the present application is preferably used in an aqueous ink composition containing the metal pigment.

The metal pigment of the second invention of the present application is preferably used in a coating film containing the metal pigment.

Hereinafter, details of the second invention will be described.

The second invention of the present application relates to a composite metal pigment comprising composite particles in which metal particles are coated with polysiloxane, and satisfies the following requirements.

1) The proportion of Q4 structures, in which a Si atom has four -O-Si- bonds in the structure of the polysiloxane, is 40 to 90%.
2) When the surfaces of the composite particles are evaluated by XPS, the relative element concentration, ((A/B) × 100), between the element concentration of metal, A, and the element concentration of Si, B, is 10% by mole or less.

Metal particles

The composite particles constituting the metal pigment of the second invention of the present application comprise metal particles and a polysiloxane layer formed on the surfaces of the metal particles.

The material of the metal particles (core particles) constituting the composite particles is not particularly limited, and may be any metal used for known or commercially available metal pigments, such as aluminum, an aluminum alloy, zinc, iron, magnesium, nickel, copper, silver, tin, chromium, or stainless steel. In the present description, the metal of the metal particles constituting the composite particles includes not only a metal simple substance but also an alloy and an intermetallic compound.

The metal particles may be used alone or in combination of two or more.

The metal particles in the second invention of the present application preferably contain aluminum or an aluminum alloy, and it is more preferable that 95% by mass or more of the metal particles contain an aluminum element.

The average particle size of the metal particles is not particularly limited, but is preferably such an average particle size that can achieve $D_{50}$ in the particle size distribution of composite particles described later. That is, it is preferable to set the volume average particle size ($D_{50}$) of the metal particles such that, when the volume distribution of the composite particles is measured by a laser diffraction particle size distribution meter, the $D_{50}$ is 1 to 30 $\mu$m or it can be easily achieved.

The average particle size of the metal particles can be controlled by appropriately adjusting, in the step of grinding and sieving/filtering raw material atomized metal powder (e.g., aluminum powder) using a ball mill or the like, the particle size of the raw material atomized metal powder, the mass per one grinding ball in the case of using a ball mill, the rotation speed of a grinder, the degrees of the sieving and filter press, and the like.

The thickness and shape of the metal particles are also not particularly limited, but it is desirable that the metal particles have a flaky shape (flake-like shape) having an average particle thickness of 10 to 400 nm, more preferably 10 to 300 nm. As a result, the composite particles constituting the composite metal pigment according to the second invention of the present application can also easily have a flaky shape, so that high hiding power and the like can be more reliably obtained.

The average thickness of the metal particles is preferably such a thickness that can achieve the average thickness of the composite particles described later, and specifically is preferably 20 to 400 nm. As a result, flocculation or deformation of the composite particles is effectively suppressed, and it becomes easy to realize excellent designability and gloss and suppression of seeds in a coating film, stability in an aqueous coating material, and the like. From the above viewpoints, the average thickness of the metal particles is preferably 25 to 350 nm, and more preferably 30 to 300 nm.

Here, the average particle thickness of the metal particles can be measured by a method known in the art, and can be measured, for example, by forming a coating film using a metal pigment comprising composite particles having metal particles and a metal oxide coating on the surfaces of the metal particles, acquiring an FE-SEM image (field emission scanning electron microscope image) of the cross section thereof, and performing image analysis. More specifically, it can be measured by the method described in Examples of the present application.

The aspect ratio (shape factor obtained by dividing an average particle size by an average thickness) of the metal particles is preferably 20 to 400, more preferably 30 to 350, and particularly preferably 40 to 300. When the aspect ratio of the metal particles is 20 or more, a higher brightness feeling can be obtained. In addition, when the aspect ratio of the metal particles is 400 or less, the mechanical strength of the flakes is maintained, and a stable color tone can be obtained.

Similarly to the $D_{50}$ based on volume, the average thickness of the metal particles can be controlled by appropriately adjusting, in the step of grinding and sieving/filtering raw material atomized metal powder (e.g., aluminum powder) using a ball mill or the like, the particle size of the raw material atomized metal powder, the mass per one grinding ball in the case of using a ball mill, the rotation speed of a grinder, the degrees of the sieving and filter press, and the like.

In addition, the metal particles do not necessarily need to be composed only of metal, and for example, particles of a synthetic resin, particles in which the surfaces of inorganic particles, such as mica or glass, are coated with metal, and the like can also be used as long as the effects of the second invention of the present application are not impaired. In the invention of the present application, particles containing aluminum or an aluminum alloy are desirable in terms of particularly high weather resistance, small specific gravity, easy availability, and the like.

Particularly suitable as the metal particles are aluminum flakes that are generally frequently used for metallic pigments. As the aluminum flakes, those having surface properties, particle sizes, and shapes that are required for metallic pigments, such as surface glossiness, whiteness, and brightness, are suitable. The aluminum flakes are commercially available usually in a paste state. The paste-like aluminum flakes may be used as they are, or may be used after the fatty acid and the like on the surfaces are removed with an organic solvent or the like in advance. In addition, a so-called aluminum-deposited foil, having a volume average particle size ($D_{50}$) of 3 to 20 $\mu$m and an average thickness (t) of 10 to 110 nm, can also be used.

Composite particles

The composite particles contained in the metal pigment of the second invention of the present application have a structure in which the metal particles are placed at centers and coated with polysiloxane.

Polysiloxane is composed of a compound containing a siloxane bond (Si-O-Si) composed of silicon atoms (Si) and an oxygen atom (O). These compounds may be either crystalline or amorphous, but are particularly preferably amorphous.

In addition, the polysiloxane may be formed from an organosilicon compound (including a silane coupling agent) as a starting material. In this case, an organosilicon compound or a component derived from the organosilicon compound may be contained as long as the effects of the second invention of the present application are not impaired. In a typical example, polysiloxane can be formed by hydrolyzing an organosilicon compound.

The polysiloxane layer may contain additives other than the silicon compound, impurities, and the like as long as the characteristics of the second invention of the present application are not impaired.

Specific examples of the polysiloxane that can be used in the second invention of the present application will be further described below, but the polysiloxane is not limited to these specific examples.

Details of preferred examples and the like of the polysiloxane of the second invention of the present application are the same as those of the compound having a siloxane bond described as the preferred form of the "organosilicon compound" in the first aspect of the first invention.

The polysiloxane layer may contain additives other than polysiloxane, impurities, and the like as long as the characteristics of the second invention of the present application are not impaired.

<Structure of polysiloxane layer>

In the conventional techniques, the structure of the polysiloxane in the polysiloxane layer constituting the coating layer of the composite particle is not controlled, and it is assumed that Q4 structures in which a Si atom has four -O-Si- bonds, Q3 structures in which a Si atom has three bonds, Q2 structures in which a Si atom has two bonds, and Q1 structures in which a Si atom has one bond, are randomly present. Therefore, the mechanical stability of the composite particles contained in the metal pigment is not sufficient.

In the second invention of the present application, the proportion of the Q4 structures in the structure of the polysiloxane layer of the composite particles needs to be set to 40 to 90%. When the proportion of the Q4 structures is 40% or more, sufficient mechanical strength of the composite particles contained in the metal pigment of the polysiloxane layer can be obtained. It is very difficult to set the upper limit of the Q4 structures to 90% or more because of its three-dimensional structure, and by setting the proportion to 90% or less, the flexibility of the polysiloxane layer can be secured, and the mechanical strength of the composite particles contained in the metal pigment can be increased.

In the second invention of the present application, a hydrophilicity, A, defined by the sum of the proportion of the Q1 structures × 3 + the proportion of the Q2 structures × 2 + the proportion of the Q3 structures is preferably 10 to 80%. Its binding site has a hydrophobic structure of -Si-O-Si- (silanol bond), whereas its unreacted site (terminal) has a silanol structure of -Si-OH in which the Q1 structure has three silanol groups, the Q2 structure has two silanol groups, and the Q3 structure has one silanol group. Therefore, the above calculation formula is an index indicating the total amount of silanol groups. When the sum is 10% or more, the surface of the polysiloxane layer has high hydrophilicity, and the dispersibility in an aqueous coating material becomes sufficient. In addition, when the sum is 80% or less, it is possible to suppress excessive increase in hydrophilicity and to prevent deterioration in water resistance and weather resistance when the metal pigment forms a coating film.

In the second invention of the present application, the average thickness of the polysiloxane layer can be set to 5 to 100 nm, and is preferably set to 15 to 80 nm. When the average thickness is 5 nm or more and when a coating material is formed, sufficient storage stability, in which gas generation is prevented, can be obtained. When the average thickness is 100 nm or less, a decrease in light reflectance can be suppressed. In addition, the polysiloxane in the composite particles has excellent mechanical strength, and thus has an effect of further improving the mechanical strength of the composite particles coated therewith.

In the second invention of the present application, the amount of the polysiloxane in the composite particles is not particularly limited as long as the above thickness is achieved, but is preferably 0.1 to 50 parts by mass in total based on 100 parts by mass of the metal particles, and more preferably 1 to 40 parts by mass.

In the composite particles contained in the metal pigment of the second invention of the present application, when the relative element concentration between metal and silicon at the surfaces of the particles is measured by XPS (X-ray Photoelectron Spectroscopy, also known as ESCA), the element concentration of metal is 10% by mole or less with respect to the element concentration of silicon. When the element concentration of metal is indicated by A and the element concentration of silicon is by B, this numerical value can be calculated from the formula of ((A/B) × 100).

In XPS, the proportion of an element present in a layer up to a certain depth from the surface can be determined. Therefore, when the value of the relative element concentration between metal and silicon at the surfaces of the composite particles is equal to or less than the upper limit of 10% by mole, it is indicated that the exposure of the metal pigment is less and the composite particles are sufficiently coated with the polysiloxane layer, that is, the polysiloxane layer has a sufficient thickness and there are few portions that are not covered with the polysiloxane layer. As a result, a decrease in the storage stability of the pigment and a decrease in stability when an aqueous coating material is formed can be effectively suppressed. The value of the relative element concentration between metal and silicon is preferably 8% by mole or less, more preferably 6% by mole or less, and the smaller the value, the better. In order to form such a polysiloxane layer, it is important to form a coating layer by an appropriate amount of polysiloxane under appropriate conditions as described later.

<XPS analysis method>

Regarding a method for confirming the composition of the composite particles contained in the metal pigment of the second invention of the present application by XPS, the method will be described by taking a case, where aluminum is used as the metal particles, as an example. When aluminum is used as the metal particles, silicon and aluminum (including an aluminum compound such as an oxide), constituting the polysiloxane, are present on the surface of the composite metal powder particles of the second invention of the present application or in the vicinity up to several nm from the surface. The proportion between these two elements can be confirmed by measuring the relative element concentration by XPS.

XPS is an analysis method in which the surface of a solid is excited by X-rays under high vacuum and photoelectrons emitted from the surface are measured. By this analysis method, information on the type, oxidation state, and concentration of an element present in the vicinity up to several nm from the surface are obtained, and the relative concentration between silicon and aluminum, present as aluminum metal or aluminum oxide, at the surface can be specified.

In the second invention of the present application, the relative element concentration between the total amount of aluminum/silicon at the surface of the composite particle whose surface is coated with the polysiloxane layer is measured.

For example, when aluminum is used as the metal particles, the concentration of silicon and the concentration of aluminum can be measured under the following conditions. In XPS, one kind of element may be detected in a plurality of states such as an oxide, but in the second invention of the present application, the sum value in the plurality of states is assumed to be the concentration of the element.

- Measuring apparatus: ULVAC-PHI Versa Probe II
- Excitation source: mono. AlKα 20 kV × 5 mA 100 W
- Analysis size: 100 μm φ × 1.4 mm 100 μm φ X-ray beam is vibrated with 1.4 mm width
- Photoelectron extraction angle: 45°
- Intake region

    Survey scan: 0 to 1,100 eV
    Narrow scan: Al 2p, Si 2p, O 1s, C 1s

- Pass energy

    Survey scan: 117.4 eV
    Narrow scan: 46.95 eV

The shape of the composite particles contained in the metal pigment according to the second invention of the present application is preferably a flaky shape (flak-like shape). As a result, a coating film formed by using the metal pigment can exhibit high light luminance, high flip-flop feeling, high hiding power, and the like. In the present description, the fact that the shape of the composite particles is a "flaky shape" (flake-like shape) refers to that the average aspect ratio (shape factor obtained by dividing an average particle size by an average thickness) of the composite particles is 20 or more. From the viewpoints of obtaining high light luminance, high flip-flop feeling, and high hiding-property, and the like, the average aspect ratio of the flaky shaped composite particles is preferably 20 or more and 400 or less. When the average aspect ratio is 20 or more, a sufficient brightness feeling can be exhibited, whereas when the average aspect ratio is 400 or less, the mechanical strength of the flakes is maintained, and a stable color tone can be obtained. The aspect ratio is more preferably 25 or more, and even more preferably 30 or more. In addition, the aspect ratio is more preferably 350 or less, and even more preferably 300 or less.

When a plurality of the composite particles are flocculated/fixed, the "composite particles" in the second invention of the present application refers to flocculated matters (aggregates) thereof.

Here, the average particle size for calculating the average aspect ratio of the composite particles is $D_{50}$ based on volume referred to as a median diameter, and this point and the average thickness for calculating the average aspect ratio of the composite particles will be described later.

In the composite particles of the second invention of the present application, the $D_{50}$ based on volume is preferably 1 $\mu$m or more and 30 $\mu$m or less when the particle size distribution of the composite particles is measured by a laser diffraction particle size distribution meter. As a result, the coating film formed by using the metal pigment exhibits high light luminance, high flip-flop feeling, high hiding power, and the like, and the flocculation of individual particles constituting the metal pigment is suppressed, so that the flocculation property thereof can be reduced. This $D_{50}$ based on volume is also generally referred to as a median diameter.

From the viewpoints of obtaining such high light luminance, high flip-flop feeling, high hiding power, and a small flocculation property of individual particles, the $D_{50}$ based on volume is preferably 1 $\mu$m or more as a lower limit, more preferably 2 $\mu$m or more, and even more preferably 3 $\mu$m or more, and preferably 30 $\mu$m or less as an upper limit, more preferably 25 $\mu$m or less, and even more preferably 20 $\mu$m or less when the particle size distribution of the composite particles is measured by a laser diffraction particle size distribution meter.

When a plurality of the composite particles are flocculated/fixed, the "composite particles" in the second invention of the present application refers to flocculated matters (aggregates) thereof.

Here, the $D_{50}$ based on volume, when the particle size distribution of the composite particles is measured by a laser diffraction particle size distribution meter, refers to the particle size at a cumulative frequency of 50% in a volume-based cumulative particle size distribution. The laser diffraction particle size distribution meter is not particularly limited, but for example, "LA-300" (manufactured by HORIBA, Ltd.) can be used. As the measuring solvent, isopropanol or mineral spirit can be used. For example, a metal pigment comprising composite particles as a sample is subjected to ultrasonic dispersion for 2 minutes as a pretreatment, and then it is put into a dispersion vessel. After it is confirmed that the metal pigment is properly dispersed, the $D_{50}$ can be measured.

The particle size of composite particles in a resin composition described later cannot be measured by this method. Therefore, as an alternative method in this case, for example, a method can be adopted in which: the composite particles in the resin composition are photographed from the surface of a coating film by an optical microscope, a laser microscope, or the like; and an equivalent circle diameter distribution is obtained by using commercially available image analysis software, whereby the particle size is determined.

The $D_{50}$ based on volume of the composite particles contained in the metal pigment can be controlled by: in the manufacturing method described later, appropriately adjusting, in the step of grinding and sieving/filtering raw material atomized metal powder (e.g., aluminum powder) using a ball mill or the like, the particle size of the raw material atomized metal powder, the mass per one grinding ball in the case of using a ball mill, the rotation speed of a grinder, the degrees of the sieving and filter press, and the like; and appropriately adjusting, in the step of coating with the polysiloxane layer (and another coating layer as necessary), the type of the polysiloxane to be used, and the pH, concentration, stirring temperature, stirring time, type of a stirring apparatus, power/degree of the stirring (type and diameter of a stirring blade, rotation speed, presence or absence of external stirring, etc.) and the like in the coating step (when an organosilicon compound is hydrolyzed and used, the step thereof is also included).

The average thickness of the composite particles, contained in the metal pigment of the second invention of the present application and having metal particles and one or more coating layers formed on the surfaces of the metal particles, is desirably 20 nm or more and 400 nm or less. As a result, in combination with the satisfaction of the above requirements (1) to (2), a coating film formed by using the metal pigment exhibits high light luminance, high flip-flop feeling, high hiding property, and the like.

From the above viewpoints, the average thickness of the composite particles is 20 nm or more as a lower limit, preferably 25 nm or more, and more preferably 30 nm or more. The upper limit thereof is 400 nm or less, preferably 350 nm or less, and more preferably 300 nm or less.

When a plurality of the composite particles are flocculated/fixed, the "composite particles" in the second invention of the present application refers to flocculated matters (aggregates) thereof.

Here, the average thickness of the composite particles can be calculated from the water surface diffusion area and density of the composite particles. The water surface diffusion area refers to an area occupied by dry composite particles per unit mass when composite particles that are dried by using a leafing phenomenon are uniformly diffused on a water surface to cover the surface without a gap. The water surface diffusion area can be measured in accordance with JIS K 5906: 1998.

However, when the hydrophilicity of the surfaces of the composite particle according to the second invention of the present application is strong, it may be difficult to obtain the water surface diffusion area. In this case, the average thickness of the composite particles can be measured according to the method described in Examples described later. That is, a coating film (thin film) is formed by using a metal pigment in which composite particles are dispersed in a mixture of an alcohol-based solvent, such as methoxypropanol, and water, and the thicknesses of the composite particles (50 or more, preferably 100 or more) are observed by a scanning electron microscope (SEM), whereby the average thickness of the composite particles can be determined.

Similarly to the $D_{50}$ based on volume, the average thickness of the composite particles contained in the metal pigment can be controlled by: in the method for manufacturing a metal pigment described later and in the step of grinding and sieving/filtering raw material atomized metal powder (e.g., aluminum powder) using a ball mill or the like, appropriately adjusting the particle size of the raw material atomized metal powder, the mass per one grinding ball in the case of using a ball mill, the rotation speed of a grinder, the degrees of the sieving and filter press, and the like; and appropriately adjusting, in the step of coating with the polysiloxane layer (and another coating layer as necessary), the type of the organosilicon compound to be used, and the pH, concentration, stirring temperature, stirring time, type of a stirring apparatus, power/degree of the stirring (e.g., type and diameter of a stirring blade, rotation speed, presence or absence of external stirring) and the like in the coating step (when an organosilicon compound is hydrolyzed and used, the step thereof is also included).

In the coating layer of the composite particle contained in the metal pigment according to the second invention of the present application, at least one layer is a polysiloxane layer, but a coating layer other than the polysiloxane layer (hereinafter, referred to as "another coating layer") may be formed alone or together with the polysiloxane layer.

The another coating layer may contain, for example, at least one of a metal (alkali metal; alkaline earth metal; or metal such as manganese, iron, cobalt, nickel, copper, or silver), a metal oxide (titanium oxide, zirconium oxide, iron oxide, or the like), a metal hydrate, and a resin (synthetic resin such as an acrylic resin, an alkyd resin, a polyester resin, a polyurethane resin, a polyvinyl acetate resin, a nitrocellulose resin, or a fluororesin). As the "another coating layer", for example, a molybdenum-containing coating film, a phosphoric acid compound coating film, or the like can be formed. When the another coating layer is provided, the corrosion resistance of the metal particle can be improved.

The "another coating layer" is preferably formed between the metal particle and the polysiloxane layer. Therefore, for example, a layer configuration of "metal particle/another coating layer/polysiloxane layer" can be suitably adopted. Although not particularly limited, examples of the molybdenum-containing coating film can include those disclosed in JP-A-2003-147226, WO 2004/096921 A, JP-B-5979788, and JP-A-2019-151678. Examples of the phosphoric acid compound coating film include those disclosed in JP-B-4633239. Preferred examples of the molybdenum-containing material constituting the molybdenum-containing coating film include a mixed coordination type heteropolyanion compound disclosed in JP-A-2019-151678.

In another modification, the "another coating layer" can be formed outside the metal particle and the polysiloxane layer. In yet another modification, the constituent components (such as a molybdenum-containing compound or a phosphoric acid compound) of the polysiloxane layer can be contained in the polysiloxane layer together with the silicon compound.

The mixed coordination type heteropolyanion compound to be used in the aspect of forming the another coating layer (typically, a molybdenum-containing coating film) other than the polysiloxane layer of the composite particles contained in the metal pigment according to the second invention of the present application is not particularly limited, but the details thereof, such as the preferred form and the like, are the same as those described above in relation to the first aspect of the first invention of the present application.

The another coating layer other than the polysiloxane layer of the composite particles contained in the metal pigment according to the second invention of the present application may be a layer containing another corrosion inhibitor in order to further improve the corrosion resistance of the metal particles (preferably, aluminum particles or aluminum alloy particles) to be the cores. The corrosion inhibitor to be added is not particularly limited, and any known corrosion inhibitor can be used. The use amount thereof may be within a range that does not inhibit the desired effects of the second invention of the present application. Examples of such a corrosion inhibitor include metal salts of an acidic phosphoric acid ester, a dimer acid, an organophosphorus compound, and a molybdic acid.

From the viewpoint of adhesion and chemical resistance when a coating film is formed, an organic oligomer or polymer can be further contained in the polysiloxane layer and/or the another coating layer of the composite particles contained in the metal pigment, or in a separate layer.

In addition, from the viewpoint of storage stability, at least one selected from the group consisting of inorganic phosphoric acids and salts thereof, and acidic organic (phosphorous) phosphoric acid esters and salts thereof may be contained in the polysiloxane layer and/or the another coating layer of the composite particles, or in a separate layer.

These compounds are not particularly limited, but for example, compounds disclosed in JP-A-2019-151678 can be used.

In the second invention of the present application, it is preferable that the cumulative amount of generated hydrogen gas is 10 ml or less when the metal pigment forms an aqueous metallic coating material, 200 g of the coating material is collected in a flask, and held in a constant-temperature water bath at 60°C for 24 hours. The fact that the amount of generated gas is 10 ml means that the metal pigment is tightly covered with the polysiloxane layer, so that the storage stability of the coating material becomes good and the mechanical stability is improved. The amount of generated gas is preferably 10 ml or less, more preferably 5 ml or less, and particularly preferably 2 ml or less. There is no lower limit, and the smaller the amount, the better. A method for creating an aqueous metallic coating material and a method for measuring an amount of generated gas will be described in detail in Examples.

Method for manufacturing metal pigment

The metal pigment according to the second invention of the present application can be suitably manufactured by a manufacturing method including, for example, the step of forming flaky shaped metal particles using a method commonly used in the pigment industry, and after this step, performing steps such as sieving (classification), filtration, washing, and mixing to produce metal particles, and then forming a coating layer under stirring using a solvent containing water and/a hydrophilic solvent. More specific examples thereof include, but are not limited to, the following methods.
The metal pigment according to the second invention of the present application can be suitably manufactured by a method including, for example, the step of (polysiloxane layer forming step) of forming a polysiloxane layer on the surfaces of metal particles by subjecting an organosilicon compound to hydrolysis/(partial) condensation reactions in a mixed liquid containing (a) metal particles, (b) a silicon-containing raw material containing at least one organosilicon compound, (c) a solvent (water and/or a hydrophilic solvent), and as necessary, other optional components. This step can usually be performed under stirring.

<Pulverization and sieving/filtration step>

Here, description will be made by taking a case, where aluminum powder is used as the metal particles, as an example.
The aluminum powder is generally obtained: by pulverizing atomized aluminum powder and/or an aluminum foil in the presence of a pulverization aid or an inert solvent by using a method commonly used in the pigment industry, such as a dry ball mill method, a wet ball mill method, an attritor method, or a stamp mill method, so that the pulverized substances are caused to have a so-called flaky shape; and after this step, performing necessary steps such as sieving (classification), filtration, washing, and mixing.
Examples of the pulverization aid here include fatty acids, aliphatic amines, aliphatic amides, and aliphatic alcohols. In general, oleic acid, stearic acid, stearylamine, and the like are preferable. Examples of the inert solvent include those exhibiting hydrophobicity such as mineral spirit, solvent naphtha, LAWS, HAWS, toluene, and xylene, and these solvents can be used alone or in combination. The pulverization aid and the inert solvent are not limited thereto.
As the pulverization step, pulverization by a wet ball mill method is preferable from the viewpoints of preventing dust explosion and securing safety.
When aluminum particles are adopted as the metal particles in the manufacture of the metal pigment according to the second invention of the present application, commercially available paste-like aluminum flakes obtained through such pulverization and sieving/filtration can be used. The paste-like aluminum flakes may be used as they are, or may be used after the fatty acid and the like on the surfaces are removed with an organic solvent or the like in advance.
As the metal particles in the manufacture of the metal pigment according to the second invention of the present application, a so-called deposited aluminum pigment, manufactured by peeling a metal layer deposited on a carrier material, such as a resin film, by physical vapor deposition (PVD) from the carrier material and pulverizing the metal layer, can also be used.

<Step of forming polysiloxane layer>

A mixed liquid, containing the above-described (a) metal particles, (b) silicon-containing raw material containing at least one organosilicon compound, (c) solvent, and as necessary, other optional components, can be prepared by mixing these components. The order of the mixing is not particularly limited.
As the metal particles, the metal particles described above can be used, and in particular, particles of aluminum or an aluminum alloy can be suitably used. As for the particle shape, it is preferable to use flaky shaped metal particles, as described above. As the metal particles, known or commercially available metal particles (typically, paste-like aluminum flakes) can be used.
The content (solid content) of the metal particles in the mixed liquid is not particularly limited, and can be appropriately set according to the type, particle size, and the like of the metal particles to be used.

As the silicon-containing raw material, an organosilicon compound is used. As the organosilicon compound, although not limited, those described above can be preferably used.

At least one of an organosilicon compound represented by the above formula (1) (typically, tetraalkoxysilane) and/or a condensate thereof, and a silane coupling agent represented by any one of the above formulas (2) to (4) can be suitably used.

Hereinafter, description will be made by taking a case, where tetraalkoxysilane is used as the organosilicon compound represented by the above formula (1), as an example. Hereinafter, tetraalkoxysilane and/or a condensate thereof may be simply collectively referred to as "tetraalkoxysilane".

When the tetraalkoxysilane represented by the above formula (1) and the silane coupling agent represented by any one of the above formulas (2) to (4) are used in combination, a method (referred to as a "first method"), in which both are used in mixture, can be adopted. Alternatively, it is also possible to adopt a method (referred to as a "second method") including the step of subjecting the metal particles to one treatment to form a first polysiloxane layer, and subjecting the metal particles to the other treatment to form a second polysiloxane layer.

Examples of the first method include a method including the step of subjecting the tetraalkoxysilane represented by the above formula (1) and the silane coupling agent represented by any one of the above formulas (2) to (4) to hydrolysis/condensation reactions by appropriately adjusting the pH of a mixed liquid containing metal particles, the tetraalkoxysilane, and the silane coupling agent to form a polysiloxane layer.

Examples of the second method include a method including: the step of subjecting the tetraalkoxysilane represented by the above formula (1) to hydrolysis/condensation reactions by appropriately adjusting the pH of a mixed liquid containing the metal particles and the tetraalkoxysilane to form a fist polysiloxane layer (e.g., a silica coating film made of amorphous silica) on the surfaces of the metal particles; and the step of subjecting the silane coupling agent represented by any one of the above formulas (2) to (4) to hydrolysis/condensation reactions by adjusting the pH of a mixed liquid containing metal particles and the silane coupling agent to form a second polysiloxane layer on the surface of the first polysiloxane layer.

The use amount of the tetraalkoxysilane represented by the above formula (1) or the condensate thereof can be appropriately set according to the type of the tetraalkoxysilane to be used, and the like. From the viewpoints of a coating treatment effect and suppressing flocculation of the metal particles or a decrease in brightness feeling, the use amount thereof may be, for example, 2 to 200 parts by mass based on 100 parts by mass of the metal particles (solid content), and more preferably 5 to 100 parts by mass.

The use amount of the silane coupling agent represented by any one of the above formulas (2) to (4) is not particularly limited, but may be usually about 0.1 to 20 parts by mass based on 100 parts by mass of the metal particles (solid content), and is particularly preferably 1 to 10 parts by mass. When the use amount is about 0.1 to 20 parts by mass, a desired coating treatment effect and desired coating film physical properties can be obtained.

The solvent in the mixed liquid, that is, the solvent for the hydrolysis reaction and/or condensation reaction of the organosilicon compound may be appropriately selected according to the type of the silicon-containing raw material to be used, and the like, and usually, water, a hydrophilic organic solvent, or a mixed solvent thereof can be used. When these solvents are used, the uniformity of the reactions and the uniformity of the obtained hydrolysate and/or condensation reaction product can be enhanced. In an aspect in which the polysiloxane layer is directly formed on the metal particle, it is particularly preferable that the solvent of the mixed liquid contains a hydrophilic organic solvent, from the viewpoint of avoiding rapid progress of the reaction between the metal particle and water. In the second invention of the present application, a mixed solvent of water and a hydrophilic organic solvent can be suitably used.

The hydrophilic organic solvent is not particularly limited, and examples thereof include: alcohols such as methanol, ethanol, propanol, butanol, isopropanol, and octanol; ether alcohols such as ethylene glycol monoethyl ether, ethylene glycol monobutyl ether, diethylene glycol monoethyl ether, diethylene glycol monobutyl ether, propylene glycol monoethyl ether, propylene glycol monomethyl ether, and dipropylene glycol monomethyl ether, and esters thereof; glycols of ethylene glycol, propylene glycol, 1,3-butanediol, 1,4-butanediol, polyoxyethylene glycol, polyoxypropylene glycol, and ethylene propylene glycol; and alkoxyalcohols such as ethyl cellosolve, butyl cellosolve, acetone, methoxypropanol, ethoxypropanol, and others. These can be used alone or in combination of two or more.

When a mixed solvent of water and a hydrophilic organic solvent is used as the solvent, the ratio between the two is not particularly limited. In an aspect in which the polysiloxane layer is directly formed on the metal particles, it is preferable from the viewpoint of avoiding rapid progress of the reaction between the metal particle and water that the content of water is set to 20% by mass or less based on 100% by mass of the total of both, before the silicon compound is put in. In this case, there is no lower limit on the content of water.

The use amount of the solvent in the step of forming the polysiloxane layer (in a case where pre-dispersion of the metal particles is performed, the amount of a solvent for the dispersion is excluded) is not limited. The use amount is usually sufficient when it is about 100 to 10,000 parts by mass based on 100 parts by mass of the metal particles (solid content), and is particularly preferable when it is 200 to 1,000 parts by mass. When the use amount of the solvent is 100 parts by mass or more, an increase in the viscosity of the mixed liquid (slurry) is suppressed, and appropriate stirring can be performed. In addition, when the use amount of the solvent is 10,000 parts by mass or less, an increase in the recovery and recycling cost of the treatment liquid can be prevented. The use amount of the solvent here refers, in the case of the second method, to the total of the solvents used to form the first polysiloxane layer and the second polysiloxane layer.

In the mixed liquid, other additives may be blended as necessary as long as the effects of the second invention of the present application are not impaired. For example, a catalyst such as a hydrolysis catalyst or a dehydration condensation catalyst, a surfactant, a metal corrosion inhibitor, and the like can be cited.

Among them, a hydrolysis catalyst can be suitably used. When a hydrolysis catalyst is blended, the pH of the mixed liquid can be adjusted and the organosilicon compound can be efficiently hydrolyzed, and dehydrated and condensed. As a result, it is possible to efficiently and reliably form the polysiloxane layer on the surface of the metal particle.

In order to strengthen the polysiloxane layer in the second invention of the present application, it is preferable to use a catalyst having high catalytic ability, that is, a catalyst having a pH greatly separated from a neutral range, or to increase the temperature, but under such conditions, the metal particles may corrode. Therefore, the surfaces of the metal particles are first covered with a polysiloxane layer by a reaction under mild conditions, and then the reaction is performed under conditions that can increase a reaction rate to form a strong structure, whereby metal corrosion can be suppressed, and a decrease in storage stability in circulation and a decrease in color tone can be suppressed.

In the reaction under the first mild conditions in which the surfaces of the metal particles are covered with the polysiloxane layer without the metal particles corroding, it is preferable to use, as the catalyst, a known weak base compound, such as ammonia, in an amount of 0.1% by mole or more and 100% by mole or less with respect to the silicon-containing compound and to perform the reaction in the range of 10 to 55°C. The amount of the catalyst is more preferably 1% by mole or more and 80% by mole or less, and the temperature is more preferably in the range of 15 to 50°C, and even more preferably in the range of 20 to 45°C.

As the catalyst, a known or commercially available catalyst may be used, and is not particularly limited. As the hydrolysis catalyst, for example, inorganic alkalis such as ammonia, and amines such as monomethylamine, dimethylamine, trimethylamine, pyridine, and aniline, can also be used. These catalysts can be used alone or in combination of two or more.

Alternatively, it is also a preferred method to use, as the catalyst, a compound composed of a pair of a weak acid and a weak base. Such a catalyst is preferably a compound composed of a weak acid having a pKa of 3.5 to 5.5 and a weak base having a pKb of 3.5 to 5.5. When the pKa and/or the pKb of the acid/base constituting the compound are/is 3.5 or more, which is the lower limits of these ranges, that is, when a compound derived from a substance other than a strong acid or a strong base is used, the hydrolysis and condensation reactions of the silicon-containing compound can proceed in the same mechanism as in acidic or basic conditions, corrosion of the metal particles can be suppressed, and high catalytic activity can be exhibited. On the other hand, when the pKa and/or the pKb of the acid/base constituting the compound are/is 5.5 or less, which is the upper limits of these ranges, sufficient catalytic activity is obtained, and it is possible to avoid a decrease in color tone resulting from flocculation or enlargement of the metal particles due to continuous contact of the particles with water for a long time in an uncoated state.

Preferred examples of the compound composed of a pair of these weak acid/weak base include ammonium benzoate, ammonium p-toluate, ammonium m-toluate, ammonium o-toluate, ammonium phenylacetate, ammonium citrate, ammonium oxalate, ammonium acetate, ammonium propionate, ammonium acrylate, ammonium butyrate, ammonium isobutyrate, ammonium valerate, ammonium isovalerate, ammonium pivalate, ammonium carbonate, ammonium hydrogen carbonate, ammonium carbamate, and ammonium lactate. Among them, ammonium benzoate, ammonium p-toluate, ammonium m-toluate, and ammonium o-toluate derived from an aromatic carboxylic acid, and ammonium acetate, ammonium propionate, ammonium carbonate, ammonium hydrogen carbonate, and ammonium carbamate having a short carbon chain, are particularly preferable.

Such a catalyst is preferably used in an amount of 1% by mole or more and 200% by mole or less with respect to the silicon compound, and more preferably used in an amount of 2% by mole or more and 150% by mole or less.

The reaction temperature is preferably in the range of 10 to 55°C, more preferably in the range of 15 to 50°C, and even more preferably in the range of 20 to 45°C.

Among the conditions as described above, it is desirable to appropriately adjust the reaction time in addition to the catalyst amount and the temperature, so that corrosion does not occur depending on the type of the metal particles and an appropriate coated state is obtained.

The reaction time may be, for example, 10 minutes to 10 hours, preferably 20 minutes to 5 hours, and even more preferably 30 to 3 hours.

In addition, it is preferable to proceed under neutral to weakly basic conditions having a pH of 6 to 9. When the pH is equal to or higher than the lower limit of this range, the progress of hydrolysis and condensation reactions in a course under acidic conditions can be suppressed. In addition, when the pH is equal to or lower than the upper limit of this range, the same reaction as in the conventional techniques can be suppressed from proceeding in a course under basic conditions. The pH range may be more preferably 6.5 to 9, and even more preferably 7 to 8.5.

In a reaction for forming a strong structure, which is performed after the reaction under the mild conditions described above, it is preferable to use, as a catalyst, a known weak base compound, such as ammonia, in an amount of 100% by mole or more and 1,000% by mole or less with respect to the silicon-containing compound and 2 to 10 times the amount used in the mild reaction, and to perform the reaction in the range of 40 to 80°C. The amount of the catalyst is more preferably used in an amount of 110% by mole or more and 5,000% by mole or less and 3 to 7 times the amount used in the mild reaction, and the temperature is more preferably in the range of 45 to 75°C, even more preferably in the range of 50 to 70°C, and particularly preferably in the range of 55 to 65°C.

The catalyst is not particularly limited. For example, inorganic acids such as hydrochloric acid, nitric acid, sulfuric acid, and phosphoric acid; organic acids such as benzoic acid, acetic acid, and chloroacetic acid; phosphonic acids such as vinyl phosphonic acid, 2-carboxyethane phosphonic acid, 2-aminoethane phosphonic acid, and octane phosphonic acid; and the like can be used. These hydrolysis catalysts may be used alone or in combination of two or more.

As the catalyst, for example, inorganic alkalis such as ammonia, sodium hydroxide, and potassium hydroxide; inorganic alkali salts such as ammonium carbonate, ammonium hydrogen carbonate, sodium carbonate, and sodium hydrogen carbonate; amines such as monomethylamine, dimethylamine, trimethylamine, pyridine, and aniline; and salts of organic acids such as ammonium formate, ammonium acetate, monomethylamine formate, and aniline acetate, can also be used. These hydrolysis catalysts can be used alone or in combination of two or more.

Also in the reaction for forming a strong structure, it is a preferred method to use a compound composed of a pair of a weak acid and a weak base.

The reaction time may be, for example, 30 minutes to 20 hours, preferably 40 minutes to 10 hours, and more preferably 60 to 5 hours.

As the specific method for increasing a reaction rate by suppressing corrosion of the metal particles, a method can be cited in which a small amount of an $NH_3$ catalyst is first added and reacted at a low temperature, and then a sufficient amount of an $NH_3$ catalyst is added and reacted by raising the temperature. In order to increase the reaction rate, it is also preferable to use two or more catalysts having different basicities in combination. A method can also be cited in which: in particular, in the initial stage of the reaction, the pH is suppressed to be low by a catalyst having weak basicity to cause the hydrolysis reaction of silane and dehydration condensation to proceed; and when the reaction proceeds to some extent, the pH is increased by a catalyst having stronger basicity to cause the remaining hydrolysis reaction and dehydration condensation reaction to proceed. As a result, a higher reaction rate is obtained than in the conventional polysiloxane forming techniques, and a strong polysiloxane layer can be formed.

A weak acid/a weak base satisfying the pKa and pKb may be used in combination, and the compound generated in the system may be used as a catalyst. For example, when a compound preferable as the above-described catalyst is generated in the system, any one of benzoic acid, p-toluic acid, m-toluic acid, o-toluic acid, acetic acid, propionic acid, and carbamic acid, and ammonia may each be added to the system. In addition, acidic or basic salts may be used in combination, and examples thereof include a combination of sodium benzoate and ammonium chloride and a combination of sodium acetate and ammonium chloride.

<Step of forming another coating layer>

As described above, the another coating layer (when formed) is formed particularly between the metal particle and the polysiloxane layer. Therefore, a layer configuration of "metal particle/another coating layer/polysiloxane layer" can be suitably adopted.

The another coating layer is not particularly limited, but may be a molybdenum-containing coating film, a phosphoric acid compound coating film, or the like. Preferred examples of the molybdenum-containing material constituting the molybdenum-containing coating film include a mixed coordination type heteropolyanion compound disclosed in JP-A-2019-151678. Examples of the constituent components of the another coating layer, including the mixed coordination type heteropolyanion compound, are as described above.

Hereinafter, description will be made by taking an aspect, in which a molybdenum-containing coating film is formed, as the another coating layer, between the metal particle and the polysiloxane layer, as an example.

When a molybdenum-containing film is formed as the another coating layer between the metal particle and the polysiloxane layer, a mixed liquid, containing the metal particles and a molybdenum compound (typically, the mixed coordination type heteropolyanion compound), is stirred prior to the formation of the polysiloxane layer, whereby the molybdenum-containing coating film can be formed on the surface of the metal particle.

A method for forming the molybdenum-containing coating film on the surface of the metal particle is not particularly limited, and may be any method as long as it can uniformly stir a mixed liquid containing the metal particles and the molybdenum compound in an aqueous solvent. For example, a mixed liquid, containing the metal particles and the molybdenum compound, is stirred or kneaded in a slurry state or a paste state, whereby the molybdenum-containing coating film can be formed on the surface of the metal particle. In the mixed liquid, the molybdenum compound may be dissolved or dispersed.

A stirrer for stirring the mixed liquid, containing the metal particles and the molybdenum compound, is not particularly limited, and a known stirrer capable of efficiently and uniformly stirring the mixed liquid, containing aluminum particles and a molybdenum compound, can be used. Specific examples thereof include a kneader, a kneading apparatus, a rotating container stirrer, a stirring-type reactor, a V-type stirrer, a double conical stirrer, a screw mixer, a sigma mixer, a flash mixer, an airflow stirrer, a ball mill, and an edge runner. Examples of the stirring blade of the stirrer include, but are not particularly limited to, an anchor blade, a paddle blade, a propeller blade, and a turbine blade.

When the molybdenum-containing coating film is formed as the another coating layer, the use amount of the molybdenum compound can be appropriately set according to the type of the molybdenum compound to be used, and the like. The use amount thereof may be generally set to 0.02 to 20 parts by mass based on 100 parts by mass of the metal particles (solid content), and is particularly preferably set to 0.1 to 10 parts by mass. When the content is 0.02 parts by mass or more, a sufficient treatment effect can be obtained. In addition, when the content is 20 parts by mass or less, the brightness of the resulting metal pigment can be kept high.

As the solvent to be used for mixing the metal particles and the molybdenum compound, water, a hydrophilic organic solvent, or a mixed solvent thereof can usually be used.

Examples of the hydrophilic organic solvent include: alcohols such as methanol, ethanol, propanol, butanol, isopropanol, and octanol; ether alcohols such as ethylene glycol monoethyl ether, ethylene glycol monobutyl ether, diethylene glycol monoethyl ether, diethylene glycol monobutyl ether, propylene glycol monoethyl ether, propylene glycol monomethyl ether, and dipropylene glycol monomethyl ether, and esters thereof; glycols of ethylene glycol, propylene glycol, 1,3-butanediol, 1,4-butanediol, polyoxyethylene glycol, polyoxypropylene glycol, and ethylene propylene glycol; and alkoxyalcohols such as ethyl cellosolve, butyl cellosolve, acetone, methoxypropanol, ethoxypropanol, and others. These can be used alone or in combination of two or more.

The use amount of the solvent in the step of forming the another coating layer (in a case where the pre-dispersion of the metal particles is performed, the amount of a solvent for the pre-dispersion is excluded) is not particularly limited, but is usually preferably 50 to 5,000 parts by mass based on 100 parts by mass of the metal particles (solid content), and more preferably 100 to 2,000 parts by mass. When the use amount of the solvent is 50 parts by mass or more, uneven distribution of the molybdenum compound and flocculation of the metal particles can be suppressed. In addition, when the use amount of the solvent is 5,000 parts by mass or less, a sufficient treatment effect on the metal particles by the molybdenum compound can be obtained.

When the mixed liquid, containing the metal particles and the molybdenum compound, is stirred, the temperature of the mixed liquid may usually be set to about 10 to 80°C, and is particularly preferably set to 30 to 70°C. When this temperature is 10°C or higher, the reaction time for obtaining a sufficient treatment effect can be shortened. In addition, when this temperature is 80°C or lower, the reaction for obtaining a desired metal pigment is more easily controlled.

The stirring time of the mixed liquid is not particularly limited as long as it is a time sufficient for forming a desired molybdenum-containing coating film. The stirring time is preferably set to, for example, 0.5 to 10 hours, and more preferably set to 1 to 5 hours. When the stirring time is 0.5 hours or more, a sufficient treatment effect can be obtained. In addition, when the stirring time is 10 hours or less, an increase in treatment cost can be suppressed.

After the stirring of the mixed liquid, containing the metal particles and the molybdenum compound, is finished, the particles on which the another coating layer has been formed can be recovered. In this case, known washing, solid-liquid separation, and the like can be appropriately performed as necessary. For example, it is preferable that the mixed liquid is washed using a hydrophilic organic solvent, and then filtered using a filter or the like to remove water and unreacted substances from a cake containing the metal particles having the molybdenum-containing coating film. In this way, the molybdenum-containing coating film that is the "another coating layer" can be formed. In a case where a yet another coating layer is formed, the formation thereof can also be performed in accordance with the above method.

In an aspect in which, after the another coating layer (molybdenum-containing coating film), the polysiloxane layer is formed on the metal particle, the particles, on which the another coating layer has been formed, are not recovered after the stirring of the mixed liquid, containing the metal particles and the molybdenum compound, is finished, and a dispersion, in which a silicon compound source (typically, at least one of the organosilicon compound represented by the above formula (1), e.g., tetraalkoxysilane and/or a condensate thereof, and the silane coupling agent represented by any one of the above formulas (2) to (4)) is dispersed in water and/or a hydrophilic organic solvent, may be directly added to the system and stirred. At this time, a dispersion of the organosilicon compound represented by the above formula (1), for example, tetraalkoxysilane and/or a condensate thereof may be added to the system containing the particles on which the another coating layer has been formed, and then a dispersion of at least one of the silane coupling agent represented by any one of the above formulas (2) to (4) may be added and stirred (see the second method in the "step of forming polysiloxane layer" described above).

<Stirring conditions>

In the manufacture of the metal pigment according to the second invention of the present application, it is desirable to perform at least the step of forming a coating layer of composite particles, typically a polysiloxane layer, under stirring. In the manufacture of the metal pigment according to the second invention of the present application, not only the step of forming the polysiloxane layer but also the step of forming the another coating layer are preferably performed under stirring. In an aspect in which the above-described pre-dispersion of the metal particles is performed, it is more preferable to also perform the pre-dispersion under stirring. In the manufacture of the metal pigment according to the second invention of the present application, the entire process, including the pre-dispersion of the metal particles, the step of forming the "another coating layer", and the step of forming the polysiloxane layer, is more preferably performed under stirring.

In the manufacture of the metal pigment according to the second invention of the present application, when at least the step of forming a coating layer of the composite particles, typically the polysiloxane layer, is performed under appropriately controlled stirring, it is possible to effectively suppress or prevent a phenomenon in which the composite particles adhere to each other via the polysiloxane layer or flocculated particles made of the metal particles are coated as they are with the polysiloxane layer. When the entire process, including the pre-dispersion of the metal particles, the step of forming the another coating layer, and the step of forming the polysiloxane layer, is performed under stirring (until when the formation of all the layers to be formed on the surface of the metal particle is completed), the metal pigment according to the second invention of the present application, which satisfies all the above physical property requirements, can be more easily obtained.

The description of the stirring conditions described below can apply to any step in the manufacture of the metal pigment according to the second invention of the present application.

The stirring can be performed by a known or commercially available stirring apparatus. For example, at least one of a kneader, a kneading apparatus, a rotating container stirrer, a stirring-type reactor, a V-type stirrer, a double conical stirrer, a screw mixer, a sigma mixer, a flash mixer, an airflow stirrer, a ball mill, an edge runner, and the like can be used.

Among these stirrers, it is preferable to use a stirring vessel-type apparatus that stirs by a stirring blade (impeller). As a result of exerting a circulating action that causes the entire reaction system, including a liquid phase, to flow and a pressure shearing action by the stirring blade, creation of flocculation of the composite particles can be more effectively suppressed.

The shape of the stirring blade is not particularly limited, and for example, an anchor type, a propeller type, a turbine type, an inclined turbine type, a fan turbine type, a paddle type, an inclined paddle type, or a gate type can be used. The Maxblend blade (manufactured by Sumitomo Heavy Industries Process Equipment Co., Ltd.), the Fullzone blade (manufactured by KOBELCO ECO-SOLUTIONS CO., LTD.), and the like are also suitable. In addition, stirring blades having these shapes can be combined in multiple stages.

The stirring speed is preferably set such that the stirring blade is not exposed by vortex created by the stirring. In addition, in order to suppress vortex to be created by the stirring, a cylindrical vessel, a square vessel, a vessel provided with a baffle plate, or the like can be suitably used.

In the manufacture of the metal pigment containing the composite particles according to the second invention of the present application, it is desirable to set the optimum sizes of the stirring vessel and the stirring blade and the speed of the stirring blade in relation to the amount and physical properties (density, viscosity, etc.) of the mixed liquid. The size of the stirring vessel is preferably selected such that the maximum amount of the mixed liquid to be used in the series of steps is 20 to 80% of the stirring vessel. In the case of a cylindrical stirring vessel, the ratio, L/D, of a height, (L), to an inner diameter, (D), of the stirring vessel is generally in the range of 0.5 to 3.0, and is usually in the range of 1 to 2. The size of the stirring blade is generally set such that the maximum diameter is in the range of 0.2 to 0.9 of the inner diameter of the stirring vessel, and preferably in the range of about 0.4 to 0.6. It is desirable to appropriately select the shape (including the length) of the stirring blade according to the physical properties of the mixed liquid, and it is important that, in the entire steps, stirring is performed in the entire stirring vessel. In order to prevent formation of an unstirred stagnation portion particularly near the liquid surface or the bottom surface of the stirring vessel, it is preferable to combine an inclined paddle type, an inclined turbine type, or a propeller type in multiple stages, or to use the Maxblend blade or the Fullzone blade, which easily creates an up-and-down flow. At this time, the distance between the stirring blade and the inner surface of the stirring vessel (including the baffle plate) is desirably 5 mm or more. This makes it easy to suppress damage or deformation of the metal particles.

The tip speed of the stirring blade is preferably 0.5 to 50 m/s, more preferably 1 to 20 m/s, and even more preferably 2 to 10 m/s. When the tip speed of the stirring blade is within the range of 0.5 to 50 m/s, the dispersibility of the composite particles in the metal pigment to be created can be enhanced, and as a result, it becomes easier to obtain a metal pigment that has a reduced flocculation property of individual particles, has excellent hiding power and color tone, and generates less gas. In addition, when the linear speed of the stirring is within the above range, damage of the metal particles (e.g., flaky shaped aluminum powder) is prevented, the rates of the hydrolysis/condensation reactions are appropriately controlled, and flocculation of the composite particles can be effectively suppressed.

<Recovery of composite particles>

After the surface coating step with polysiloxane is finished, the composite particles can be recovered. In the recovery, a known treatment, such as washing and solid-liquid separation, can also be performed as necessary. For example, it is preferable that the obtained slurry is washed with water/organic solvent (preferably a hydrophilic solvent) and then filtered using a filter to remove water and unreacted substances from the slurry containing the coated composite particles. Thereafter, if necessary, the filtered slurry may be subjected to a heat treatment at a temperature in the range of, for example, 100 to 500°C. As described later, the composite particles recovered in this way can usually constitute a metal pigment in which a solvent, containing water/organic solvent used in the manufacturing process, remains and is entrained.

Metal pigment composition

The metal pigment of the second invention of the present application obtained as described above can be obtained in the form of a metal pigment composition that comprises composite particles containing metal particles (and a surface modifier when present) and a polysiloxane coating formed on the surfaces thereof, and comprises, as a residue of the solid contents (nonvolatile contents), a solvent containing water/organic solvent (preferably hydrophilic solvent) and the like used in the manufacturing process.

In the metal pigment composition, a silicon compound, which is a hydrolysate of an organosilicon compound (e.g., at least one selected from at least one organosilicon compound represented by the above general formula (1), a silane coupling agent represented by any one of the above general formulas (2), (3), and (4), and partial condensates thereof) and/or a condensate thereof, can usually be present in an amount of 0.02 to 50 parts by mass based on 100 parts by mass of the metal particles, in terms of a state in which the hydrolysis/condensation reactions are completed.

In the metal pigment composition, there can be present an optional compound to form the optional another coating layer (in an optional aspect of forming a molybdenum-containing coating film as the another coating layer, a molybdenum-containing compound, e.g., a mixed coordination type heteropolyanion compound) in an amount of 0.01 to 10 parts by mass based on 100 parts by mass of the metal particles.

In the metal pigment composition, there can be present an optional organic oligomer or polymer in an amount of 0.01 to 50 parts by mass based on 100 parts by mass of the metal particles.

In the metal pigment composition, there can be present at least one selected from the group consisting of optional inorganic phosphoric acids and salts thereof and acidic organic (phosphorous) phosphoric acid esters and salts thereof, in an amount of 0.01 to 20 parts by mass based on 100 parts by mass of the metal particles.

In the metal pigment composition, there can be present, as a residue of the components (nonvolatile contents), a solvent containing the water/hydrophilic solvent used in the manufacturing process. The amount of the solvent containing water/hydrophilic solvent may be, for example, 0.5 to 95% by mass of the metal pigment composition. Alternatively, the amount of the solvent, containing the water/hydrophilic solvent, may be 1 to 90% by mass of the metal pigment composition, 2 to 80% by mass, or 5 to 70% by mass.

The metal pigment composition may optionally contain optional components other than those described above. Examples of the optional component include at least one of an antioxidant, a light stabilizer, a polymerization inhibitor, and a surfactant.

As the antioxidant, an antioxidant represented by a phenol-based compound, a phosphorus-based compound, or a sulfur-based compound can be used.

As the light stabilizer, those to be used as the above-described antioxidant can also be used, but those represented by a benzotriazole-based compound, a benzophenone-based compound, a salicylate-based compound, a cyanoacrylate-based, an oxalic acid derivative, a hindered amine-based compound (HALS), and a hindered phenol-based compound can be used.

Examples of the surfactant include: nonionic surfactants represented by polyoxyalkylene alkyl ether, polyoxyalkylene alkylphenyl ether, oxyalkylene alkylamino ether, sorbitan fatty acid ester, polyalkylene glycol fatty acid ester, and glycerin fatty acid ester; anionic surfactants represented by sulfuric acid ester salt, sulfonic acid salt, and phosphoric acid ester salt; and cationic surfactants represented by quaternary ammonium salt, and one or more selected from these surfactants can be used. Among them, particularly preferred examples include polyoxyethylene lauryl ether, polyoxyethylene cetyl ether, polyoxyethylene stearyl ether, polyoxyethylene oleyl ether, and mixtures thereof.

(Moisture content)

The moisture content of the metal pigment composition of the second invention of the present application is preferably 0 ppm or more and 2000 ppm or less with respect to the metal pigment composition on a mass basis. When the moisture content is set as described above, it is possible to further suppress the progress of flocculation and color tone change of the composite particles of the metal pigment composition in a package in which the metal pigment composition is put in a metal container and sealed. The moisture content is more preferably 1,000 ppm or less, even more preferably 500 ppm or less, and particularly preferably 300 ppm or less. There is no lower limit on the moisture content, and the lower the moisture content, the better.

In order to achieve such a moisture content, it is preferable that, after the step of forming the polysiloxane layer (and/or optionally the another coating layer) on the metal particles is finished in the step of manufacturing the metal pigment, known treatments, such as washing and solid-liquid separation, are performed, and at this time, the dispersion is washed using an organic solvent having a moisture content of, for example, 2,000 ppm or less and then filtered using a filter, and in some cases, this operation is repeated multiple times to remove water and unreacted substances from the composition containing the composite particles. Thereafter, if necessary, the cake containing the composite particles may be subjected to a heat treatment in a gas atmosphere, such as nitrogen, having a low moisture content, at a temperature in the range of, for example, 100 to 500°C. As described above, the composite particles recovered in this way can usually form a metal pigment composition in which a solvent containing a small amount of solvent, containing water/hydrophilic solvent used in the manufacturing process, remains and is entrained.

Also, in the case of adjusting the solid content ratio of the composition, it is desirable to use an organic solvent having a moisture content of 2,000 ppm or less (e.g., the hydrophilic solvent described above).

The moisture content of the organic solvent to be used for these washing and solid content adjustment is preferably 2,000 ppm or less, more preferably 1,000 ppm or less, even more preferably 500 ppm or less, and particularly preferably 300 ppm or less.

(pH)

The metal pigment composition of the second invention of the present application preferably has a pH in the range of 5 to 9. When the pH is in this range, the progress of flocculation and color tone change of the composite particles of the metal pigment composition in the package can be suppressed. The pH of the metal pigment composition is more preferably in the range of 6 to 8, and even more preferably in the range of 6.5 to 7.5.

In order to achieve such a pH of the metal pigment composition, it is desirable that, after the step of forming the polysiloxane layer (and/or optionally the another coating layer) on the metal particles is finished, known treatments, such as washing with a sufficient amount of an organic solvent and solid-liquid separation, are repeated to sufficiently wash and remove polar compounds such as a catalyst used for forming the coating layer.

The metal pigment of the second invention of the present application can be used for organic solvent-based coating materials, inks, and the like. At this time, when the metal pigment of the second invention of the present application is added to an aqueous coating material or aqueous ink in which resins as coating film-forming components are dissolved or dispersed in a medium mainly containing water, a metallic aqueous coating material or a metallic aqueous ink can be obtained. The metal pigment of the second invention of the present application can also be used as a water-resistant binder or filler by being kneaded with a resin or the like. For example, an optional additive, such as an antioxidant, a light stabilizer, a polymerization inhibitor, or a surfactant, may be added when the metal pigment is blended in an aqueous coating material, an aqueous ink, a resin, or the like.

When the metal pigment of the second invention of the present application is used in a coating material or an ink, the metal pigment may be added to the (aqueous) coating material or the (aqueous) ink as it is, but it is preferable to add the metal pigment after being dispersed in a solvent in advance. Examples of the solvent used at this time include water, texanol, diethylene glycol monobutyl ether, and propylene glycol monomethyl ether. Examples of the above resins include acrylic resins, polyester resins, polyether resins, epoxy resins, fluororesins, and rosin resins.

The content of the metal pigment of the second invention of the present application in the aqueous coating material composition or aqueous ink composition is not limited, but may be usually 0.1 to 50% by mass, and is particularly preferably 1 to 30% b mass. When the content is 0.1% by mass or more, a high decorative (metallic) effect can be obtained. In addition, when the content is 50% by mass or less, it is possible to prevent the characteristics of the aqueous coating material composition or the aqueous ink composition, for example, weather resistance, corrosion resistance, mechanical strength, and the like from being impaired. The content of the solvent at this time is not particularly limited, but may be 20 to 200% by mass with respect to the content of the resin binder. When the content of the solvent is within this range, the viscosity of the coating material or ink is adjusted to an appropriate range, and handling and film formation can be facilitated.

Preferred resins are acrylic resins and polyester resins. If necessary, a resin, such as a melamine-based curing agent, an isocyanate-based curing agent, or a urethane dispersion, can be used in combination. Furthermore, these resins may be combined with an inorganic pigment, an organic pigment, an extender pigment, a silane coupling agent, a titanium coupling agent, a dispersant, an anti-settling agent, a leveling agent, a thickener, or an antifoaming agent, which are generally added to a coating material. In order to improve the dispersibility of the resins in the coating material, a surfactant may further be added. In order to improve the storage stability of the coating material, an antioxidant, a light stabilizer, or a polymerization inhibitor may further be added.

Third invention

A third invention of the present application is a method for manufacturing a metal pigment (composition), using a stirring vessel-type reaction apparatus and comprising following steps (1) to (3):

> (1) dispersing metal particles in a solvent;
> (2) coating the metal particles with a silicon compound; and
> (3) filtering/washing the metal particles, wherein
> the stirring vessel-type reaction apparatus:
>
> > includes a reactor having a volume of 100 L or more; and
> > has the ratio of the maximum diameter of a stirring blade to the diameter of the reactor is in a range of 0.2 to 1.0, and the shortest distance between an inner surface of the reactor and a tip of the stirring blade is 10 mm or more; and
> > has the tip speed of the stirring blade, while being stirred, is 1 to 20 m/s.

Hereinafter, details of the third invention of the present application will be described.

Reactor-type reaction apparatus

In the method for manufacturing a metal pigment (also referred to as "metal pigment composition") of the third invention of the present application, a stirring vessel-type reaction apparatus is used. The stirring vessel-type reaction apparatus is an apparatus of a stirring vessel-type that stirs by a stirring blade (impeller). As a result of exerting a circulating action that causes the entire reaction system, including a liquid phase, to flow and a pressure shearing action by the stirring blade, creation of flocculation of the composite particles can be more effectively suppressed.

The shape of the stirring blade is not particularly limited, and for example, an anchor type, a propeller type, a turbine type, an inclined turbine type, a fan turbine type, a paddle type, an inclined paddle type, or a gate type can be used. The Maxblend blade (manufactured by Sumitomo Heavy Industries Process Equipment Co., Ltd.), the Fullzone blade (manufactured by KOBELCO ECO-SOLUTIONS CO., LTD.), and the like are also suitable. In addition, stirring blades having these shapes can be combined in multiple stages.

The stirring speed is preferably set such that the stirring blade is not exposed by vortex created by the stirring. In addition, in order to suppress vortex to be created by the stirring, a cylindrical vessel, a square vessel, a vessel provided with a baffle plate, or the like can be suitably used.

In the manufacturing method of the third invention of the present application, it is desirable to set the optimum sizes of the reactor (also referred to as a "stirring vessel") and the stirring blade and the speed of the stirring blade in relation to the amount and physical properties (density, viscosity, etc.) of the mixed liquid. The size of the reactor may be selected such that the maximum amount of the mixed liquid to be used in the series of the steps is 20 to 80% of the reactor, and the volume of the reactor is desirably 100 L or more in order to prepare an industrially necessary amount of a pigment having a small quality variation. In one embodiment, the volume of the reactor may be desirably 150 or more, or may be desirably 200 L or more. The shape of the reactor is preferably a cylindrical shape in order to reduce a stagnation portion and uniformly stir the whole. In the case of a cylindrical reactor, the ratio, L/D, of a height (L) to an inner diameter (D) of the reactor is generally in the range of 0.5 to 3.0, and is usually in the range of 1 to 2. As for the size of the stirring blade, the ratio of the maximum diameter of the stirring blade to the inner diameter of the reactor is in the range of 0.2 to 1.0, and is preferably about 0.4 to 0.6. It is desirable to appropriately select the shape (including the length) of the stirring blade according to the physical properties of the mixed liquid, and it is important that, in the entire steps, stirring is performed in the entire reactor. In order to prevent formation of an unstirred stagnation portion particularly near the liquid surface or the bottom surface of the reactor, it is preferable to combine an inclined paddle type, an inclined turbine type, or a propeller type in multiple stages, or to use the Maxblend blade or the Fullzone blade, which easily creates an up-and-down flow. When the volume of the reactor is 100 L or more, the shortest distance, at this time, between the inner surface of the reactor (including the baffle plate) and the stirring blade is desirably 10 mm or more. The shortest distance between the inner surface of the reactor (including the baffle plate) and the stirring blade is more preferably 20 mm or more, even more preferably 40 mm or more, yet even more preferably 60 mm or more, and even further preferably 100 mm or more. This makes it easy to suppress damage or deformation of the metal particles.

When the volume of the reactor is 100 L or more, the tip speed (linear speed) of the stirring blade is preferably 1 to 20 m/s, more preferably 1.5 to 10 m/s, and particularly preferably 2 to 8 m/s. When the tip speed of the stirring blade is within the range of 1 to 20 m/s, the dispersibility of the composite particles in the metal pigment composition to be manufactured can be enhanced, and as a result, it becomes easier to obtain a metal pigment composition that has a reduced flocculation property of individual particles, has excellent hiding power and color tone, and generates less gas. In addition, when the tip speed (linear speed) of the stirring is within the above range, damage of the metal particles (e.g., flaky shaped aluminum powder) is prevented, the rates of the hydrolysis/condensation reactions are appropriately controlled, and flocculation of the composite particles can be effectively suppressed.

As an index indicating a stirring state, a stirring Reynolds number (hereinafter, abbreviated as a "stirring Re number") is used. The stirring Re number does not reflect the shapes and sizes, other than diameter, of the reactor and the stirring blade. Therefore, the stirring Re number is only a guide and is not particularly limited, but is preferably 3,000 or more, and more preferably 5,000 or more. The upper limit of the stirring Re number can vary depending on the type, scale, and the like of the stirring apparatus. The upper limit of the stirring Re number may be about 100,000 in a normal lab scale, but in the case of using a scaled-up large apparatus, it may be more than 100,000 as long as the desired effects of the third invention of the present application are not impaired. It is also acceptable even if this upper limit is, for example, about 1 million.

Here, the stirring Re number is calculated by the following equation.

$$\text{Stirring Re number} = (\rho \times n \times d^2)/\mu$$

(wherein, $\rho$ indicates the density (kg/m$^3$) of a mixed liquid to be stirred at 25°C, n indicates a stirring rotation speed (rps), d indicates a stirring blade diameter (m), and $\mu$ indicates the viscosity (Pa · s) of a mixed liquid to be stirred at 25°C.)

Metal pigment composition

The metal pigment composition manufactured according to the third invention of the present application contains a composite particle, and the composite particle contains a metal particle and one or more coating layers formed on the surface of the metal particle. That is, one or more coating layers are formed on the surfaces of a metal particle to be a core.

Metal particles

The material of the metal particles (core particles) is not particularly limited, and may be any metal used for known or commercially available metal pigments, such as aluminum, an aluminum alloy, zinc, iron, magnesium, nickel, copper, silver, tin, chromium, or stainless steel. In the present description, the metal of the metal particles contained in the metal pigment composition includes not only a metal simple substance but also an alloy and an intermetallic compound. The metal particles may be used alone or in combination of two or more.

The average particle size of the metal particles is not particularly limited, but may be such an average particle size that can achieve $D_{50}$ in the particle size distribution of the composite particles. That is, the volume average particle size ($D_{50}$) of the metal particles may be set such that the $D_{50}$ is 0.1 to 30 $\mu$m when the volume distribution of the composite particles is measured by a laser diffraction particle size distribution meter. Here, the $D_{50}$ based on volume, when the particle size distribution of the composite particles is measured by a laser diffraction particle size distribution meter, refers to the particle size at a cumulative frequency of 50% in a volume-based cumulative particle size distribution. The laser diffraction particle size distribution meter is not particularly limited, but "LA-300" (manufactured by HORIBA, Ltd.) or the like can be used. As the measuring solvent, mineral spirit can be used. For example, a metal pigment composition comprising composite particles as a sample is subjected to ultrasonic dispersion for 2 minutes as a pretreatment, and then it is put into a reactor. After it is confirmed that the metal pigment composition is properly dispersed, the $D_{50}$ can be measured.

The average particle size of the metal particles can be controlled by appropriately adjusting, in the step of grinding and sieving/filtering raw material atomized metal powder (e.g., aluminum powder) using a ball mill or the like, the particle size of the raw material atomized metal powder, the specific gravity and mass per one grinding ball in the case of using a ball mill, the rotation speed of a grinder, the degrees of the sieving and filter press, and the like.

The shape of the metal particles is not limited, but is particularly desirably a flaky shape (flake-like shape). As a result, the composite particles contained in the metal pigment composition manufactured according to the third invention of the present application can also have a flaky shape, and as a result, high hiding power and the like can be more reliably obtained. From such a viewpoint, the aspect ratio (shape factor obtained by dividing an average particle size by an average thickness) of the flaky shaped metal particles is preferably 1 to 1,000, and particularly preferably 15 to 500. When the aspect ratio of the metal particles is 1 or more, a higher brightness feeling can be obtained. In addition, when the aspect ratio of the metal particles is 1,000 or less, the mechanical strength of the flakes is maintained, and a stable color tone can be obtained. Here, the average thickness of the metal particles used in the third invention of the present application can be calculated from the water surface diffusion area and density of the metal particles.

In addition, the metal particles do not necessarily need to be composed only of metal, and for example, particles of a synthetic resin, particles in which the surfaces of inorganic particles, such as mica or glass, are coated with metal, and the like can also be used as long as the effects of the third invention of the present application are not impaired. In the third invention of the present application, particles formed from aluminum or an aluminum alloy are desirable in terms of particularly high weather resistance, small specific gravity, easy availability, and the like.

Particularly suitable as the metal particles constituting the composite particles are aluminum flakes that are generally frequently used for metallic pigments. As the aluminum flakes, those having surface properties, particle sizes, and shapes that are required for metallic pigments, such as surface glossiness, whiteness, and brightness, are suitable. The aluminum flakes are commercially available usually in a paste state. The paste-like aluminum flakes may usually contain flaky shaped aluminum powder, mineral spirit (aliphatic hydrocarbon) used at the time of pulverization, a residual content of fatty acid, and an organic solvent such as solvent naphtha or xylene. The paste-like aluminum flakes may be used as they are, or may be used after the fatty acid and the like on the surfaces are removed with an organic solvent or the like in advance. In addition, a so-called aluminum-deposited foil, having a volume-based average particle size ($D_{50}$) of 3 to 30 $\mu$m and an average thickness (t) of 5 to 50 nm, can also be used.

Coating layer

The composite particle contained in the metal pigment composition manufactured according to the third invention of the present application has one or more coating layers formed on the surface of a metal particle to be the core of the composite particle. At least one of the coating layers is a silicon compound-containing layer. When at least one of the coating layers is a silicon compound-containing layer, gas generation in an aqueous coating material can be suppressed, good storage stability can be obtained, and water resistance, when a coating film is formed, is excellent. The coating layer of the composite particle may have another coating layer (hereinafter, referred to as a "second coating layer") in addition to the silicon compound-containing layer. Such a second coating layer will be further described later.

Silicon compound-containing layer

The silicon compound-containing layer is desirably a layer composed of a compound containing particularly a Si-O- bond (siloxane bond). Examples of such a layer include a layer containing at least one of a silane-based compound and a silicon oxide. Examples of such a compound include silane-based compounds [$H_3SiO(H_2SiO)_nSiH_3$] (wherein, n indicates an arbitrary positive integer) and silicon oxides represented by $SiO_2$, $SiO_2 \cdot nH_2O$ (wherein, n indicates an arbitrary positive integer), and the like. These silane-based compounds and silicon oxides may be either crystalline or amorphous, but are particularly preferably amorphous. Therefore, for example, a layer containing amorphous silica can also be suitably adopted as the layer containing silicon oxide (silica, etc.).

In addition, the layer composed of a compound containing a Si-O bond may be a layer formed by using an organosilicon compound (including a silane coupling agent) as a starting material. In this case, the silicon compound-containing layer may contain an organosilicon compound or a component derived from the organosilicon compound as long as the effects of the third invention of the present application are not impaired. In a typical example, a layer composed of a compound containing a Si-O bond can be formed by hydrolyzing an organosilicon compound.

The silicon compound-containing layer may contain additives other than the silicon compound, impurities, and the like as long as the characteristics of the third invention of the present application are not impaired.

The content of silicon contained in the silicon compound-containing layer is not particularly limited, but is preferably 1 to 30 parts by mass based on 100 parts by mass of the metal particles, and particularly more preferably 2 to 20 parts by mass. When the silicon content of the silicon compound-containing layer is 1 part by mass or more based on 100 parts by mass of the metal particles, the corrosion resistance, water dispersibility, stability, and the like of the metal pigment composition can be maintained high. When the silicon content of the silicon compound-containing layer is 30 parts by mass or less based on 100 parts by mass of the metal particles, flocculation of the composite particles and a decrease in hiding property or color tone, such as a metallic gloss feeling, can be prevented.

The coating layer of the composite particle contained in the metal pigment composition manufactured according to the third invention of the present application is particularly preferably hydrophilic. The composite particles usually form a metal pigment composition in the form of being dispersed in an aqueous solvent (water or a mixed solvent containing water and an organic solvent), and when the coating layer has a hydrophilic surface, the composite particles can be highly dispersed in such an aqueous solvent. Moreover, the silicon oxide (amorphous silica, etc.) is very stable in an aqueous solvent, so that it is possible to provide a metal pigment composition comprising composite particles that are highly stable in an aqueous solvent. From such a viewpoint, in the composite particle contained in the metal pigment composition manufactured according to the third invention of the present application, at least the outermost layer is desirably a silicon compound-containing layer (particularly, a layer composed of a compound containing a Si-O bond). When the coating layer is composed of a plurality of layers, in addition to the outermost silicon compound-containing layer, a silicon compound-containing layer (particularly, a Si-O-based coating layer) may be separately formed as a layer other than the outermost layer.

Second coating layer

The coating layers of the composite particle contained in the metal pigment composition manufactured according to the third invention of the present application are not particularly limited as long as at least one layer is a silicon compound-containing layer, but a coating layer other than the silicon compound-containing layer can be formed as necessary.

The second coating layer may contain, for example, at least one of a metal (alkali metal; alkaline earth metal; metal such as manganese, iron, cobalt, nickel, copper, or silver), a metal oxide (titanium oxide, zirconium oxide, iron oxide, or the like), a metal hydrate, and a resin (synthetic resin such as an acrylic resin, an alkyd resin, a polyester resin, a polyurethane resin, a polyvinyl acetate resin, a nitrocellulose resin, or a fluororesin). As the second coating layer, for example, a molybdenum-containing coating film, a phosphoric acid compound coating film, or the like can be formed. When the second coating layer is provided, the corrosion resistance of the metal particle can be improved, and the formation of the silicon compound-containing layer can be promoted.

The second coating layer (when formed) is preferably formed particularly between the metal particle and the silicon compound-containing layer. Therefore, for example, a layer configuration of "metal particle/second coating layer/silicon compound-containing layer" can be suitably adopted. Although not particularly limited, examples of the molybdenum-containing coating film can include those disclosed in JP-A-2003-147226, WO 2004/096921 A, JP-B-5979788, and JP-A-2019-151678. Examples of the phosphoric acid compound coating film include those disclosed in JP-B-4633239. Preferred examples of the molybdenum-containing material constituting the molybdenum-containing coating film include a mixed coordination type heteropolyanion compound disclosed in JP-A-2019-151678.

The second coating layer may be formed outside the metal particle and the silicon compound-containing layer. Alternatively, the constituent components (such as a molybdenum-containing compound and a phosphoric acid compound) of the second coating layer may be contained in the silicon compound-containing layer together with the silicon compound.

The second coating layer may be a layer containing another corrosion inhibitor in order to further improve the corrosion resistance of the metal particle (preferably aluminum particle or aluminum alloy particle) to be a core. The corrosion inhibitor to be added is not particularly limited, and any known corrosion inhibitor can be used. The use amount thereof may be within a range that does not inhibit the desired effects of the third invention of the present application. Examples of such a corrosion inhibitor include metal salts of an acidic phosphoric acid ester, a dimer acid, an organophosphorus compound, and a molybdic acid.

From the viewpoint of adhesion and chemical resistance when a coating film is formed, an organic oligomer or polymer can be further contained in the silicon compound-containing layer and/or the second coating layer of the composite particle contained in the metal pigment composition, or in a separate layer.

In addition, from the viewpoint of storage stability, at least one selected from the group consisting of inorganic phosphoric acids and salts thereof, and acidic organic (phosphorous) phosphoric acid esters and salts thereof may be contained in the silicon compound-containing layer and/or the second coating layer of the composite particle, or in a separate layer. These compounds are not particularly limited, but for example, compounds disclosed in JP-A-2019-151678 can be used.

Method for manufacturing metal pigment composition

The method for manufacturing a metal pigment composition of the third invention of the present application includes the following steps (1) to (3):

(1) dispersing the metal particles in a solvent;
(2) coating the metal particles with a silicon compound; and
(3) filtering/washing the metal particles.

Step (1)

The step (1) is a step of dispersing metal particles in a solvent. In order to obtain a metal pigment composition with less flocculation, the metal particles and the solvent are stirred in this step to sufficiently disperse the metal particles in the solvent. In addition, an ultrasonic treatment described later may be performed.

The solvent to be used in the manufacturing method of the third invention of the present application, that is, the solvent for the hydrolysis reaction and/or condensation reaction of the organosilicon compound may be appropriately selected according to the type of the silicon-containing raw material to be used, and in general, water, a hydrophilic organic solvent, or a mixed solvent thereof can be used. When these solvents are used, the uniformity of the reactions and the uniformity of the obtained hydrolysate and/or condensation reaction product can be enhanced. In an aspect in which the silicon compound-containing layer is directly formed on the metal particle, it is particularly preferable from the viewpoint of avoiding rapid progress of the reaction between the metal particle and water that the solvent of the mixed liquid contains a hydrophilic organic solvent. In the third invention of the present application, a mixed solvent of water and a hydrophilic organic solvent can be suitably used.

The hydrophilic organic solvent is not particularly limited, and examples thereof include: alcohols such as methanol, ethanol, propanol, butanol, isopropanol, and octanol; ether alcohols such as ethylene glycol monoethyl ether, ethylene glycol monobutyl ether, diethylene glycol monoethyl ether, diethylene glycol monobutyl ether, propylene glycol monoethyl ether, propylene glycol monomethyl ether, and dipropylene glycol monomethyl ether, and esters thereof; glycols of ethylene glycol, propylene glycol, 1,3-butanediol, 1,4-butanediol, polyoxyethylene glycol, polyoxypropylene glycol, and ethylene propylene glycol; and alkoxyalcohols such as ethyl cellosolve, butyl cellosolve, acetone, methoxypropanol, ethoxypropanol, and others. These can be used alone or in combination of two or more.

When a mixed solvent of water and a hydrophilic organic solvent is used as the solvent, the ratio between the two is not particularly limited. In an aspect in which the silicon compound-containing layer is directly formed on the metal particle, it is preferable from the viewpoint of avoiding rapid progress of the reaction between the metal particle and water that, before the silicon compound is put in, the content of water is set to 20% by mass or less based on 100% by mass of the total of both. The lower limit of the content of water in this case is not limited, but may be usually about 1% by mass.

The use amount of the solvent in the manufacturing method of the third invention of the present application (in a case where pre-dispersion of the metal particles is performed, the amount of a solvent for the dispersion is excluded) is not limited. The use amount is usually sufficient when it is about 100 to 10,000 parts by mass based on 100 parts by mass of the metal particles (solid content), and is particularly preferable when it is 200 to 1,000 parts by mass. When the use amount of the solvent is 100 parts by mass or more, an increase in the viscosity of the mixed liquid (slurry) is suppressed, and appropriate stirring can be performed. In addition, when the use amount of the solvent is 10,000 parts by mass or less, an increase in the recovery and recycling cost of the treatment liquid can be prevented.

In the step (1), when external circulation is preferably performed in which a part (e.g., 0.5 to 30% by mass of the entire dispersion per 1 minute, preferably 1 to 20% by mass, and more preferably 1 to 15% by mass) of the solvent (hereinafter, referred to as a "dispersion") to which the metal particles have been added is once extracted to the outside of the reactor and then returned to the reactor again, the degree of the dispersion can be more enhanced. When an ultrasonic treatment is performed outside the reactor in the middle of the flow path for the external circulation, the dispersibility can be further enhanced.

The ultrasonic treatment is not particularly limited, but can be usually performed at 10 to 1,000 W, and preferably at 50 to 800 W for usually 20 seconds to 10 minutes, and preferably about 30 seconds to 5 minutes. From the viewpoint of appropriately adjusting the strength of the stirring to achieve sufficient dispersion, the use amount of the solvent for the pre-dispersion may be usually about 100 to 10,000 parts by mass based on 100 parts by mass of the metal particles (solid content), preferably 200 to 5,000 parts by mass, and more preferably 300 to 1,000 parts by mass.

Such pre-dispersion of the metal particles can be usually performed at 10 to 80°C, preferably at 15 to 60°C, and most preferably at around room temperature (about 20 to 30°C). The pre-dispersion of the metal particles can also be performed for a period of 5 minutes to 2 hours (including a time for the ultrasonic treatment when performed), and preferably for a period of 10 minutes to 1 hour.

In the step (1), the average particle size ($D_{50}$) of the metal particles in the dispersion is preferably 1.2 times or less the average particle size ($D_{50}$) of the metal particles as a raw material. When the average particle size is suppressed to 1.2 times or less the average particle size of the metal particles as a raw material, the flocculation property of individual particles is suppressed to be small and a uniform silicon compound-containing layer and the like are easily obtained, and thus gas generation in an aqueous coating material can be suppressed and good storage stability is easily obtained. In addition, the finally obtained coating film formed by using the metal pigment composition comprising composite particles also easily exhibits high hiding power and brightness feeling and the like. This ratio is more preferably 1.1 times or less.

Step (2)

The step (2) is a step in which, in a mixed liquid obtained by adding a silicon-containing raw material containing at least one organosilicon compound and, if necessary, other optional components to the dispersion of the step (1), the organosilicon compound is subjected to hydrolysis/(partial) condensation reactions under stirring, whereby the metal particles are coated with a silicon compound.

As the silicon-containing raw material, an organosilicon compound can be used. The organosilicon compound is not limited, but preferably, at least one of an organosilicon compound represented by the following formula (1) (typically, tetraalkoxysilane) and/or a condensate thereof, and a silane coupling agent represented by any one of the following formulas (2) to (4) can be suitably used. Details of preferred forms and the like of these organosilicon compounds are the same as those described above in relation to the first aspect of the first invention of the present application.

In the mixed liquid, other additives may be blended as necessary as long as the effects of the third invention of the present application are not impaired. For example, a catalyst such as a hydrolysis catalyst or a dehydration condensation catalyst, a surfactant, a metal corrosion inhibitor, and the like can be cited.

Among them, a hydrolysis catalyst can be suitably used. When a hydrolysis catalyst is blended, the pH of the mixed liquid can be adjusted and the organosilicon compound can be efficiently hydrolyzed, and dehydrated and condensed. As a result, it is possible to efficiently and reliably form the silicon compound-containing layer on the surface of the metal particle.

The hydrolysis catalyst is not particularly limited, and a known or commercially available hydrolysis catalyst may be used. As the hydrolysis catalyst, for example, inorganic acids such as hydrochloric acid, nitric acid, sulfuric acid, and phosphoric acid; organic acids such as benzoic acid, acetic acid, chloroacetic acid, salicylic acid, oxalic acid, picric acid, phthalic acid, and malonic acid; phosphonic acids such as vinyl phosphonic acid, 2-carboxyethane phosphonic acid, 2-aminoethane phosphonic acid, and octane phosphonic acid; and the like can be used. These hydrolysis catalysts may be used alone or in combination of two or more.

In addition, as the hydrolysis catalyst, for example, inorganic alkalis such as ammonia, sodium hydroxide, and potassium hydroxide; inorganic alkali salts such as ammonium carbonate, ammonium hydrogen carbonate, sodium carbonate, and sodium hydrogen carbonate; amines such as monomethylamine, dimethylamine, trimethylamine, monoethylamine, diethylamine, triethylamine, monoethanolamine, diethanolamine, triethanolamine, N,N-dimethylethanolamine, ethylenediamine, pyridine, aniline, choline, tetramethylammonium hydroxide, and guanidine; and salts of organic acids such as ammonium formate, ammonium acetate, monomethylamine formate, dimethylamine acetate, pyridine lactate, guanidinoacetic acid, and aniline acetate can also be used. These hydrolysis catalysts can be used alone or in combination of two or more.

The addition amount of the hydrolysis catalyst is not particularly limited, but may usually be set to 0.01 to 20 parts by mass based on 100 parts by mass of the metal particles (solid content), and is particularly preferably set to 0.02 to 10 parts by mass. When the addition amount is 0.01 parts by mass or more, the precipitation amount of the silicon compound-containing layer can be sufficient. In addition, when the addition amount is 20 parts by mass or less, flocculation of the metal particles can be effectively suppressed.

In preparing the mixed liquid, it is sufficient to uniformly mix these components in a mixed liquid, and the blending order is also not particularly limited.

The temperature of the mixed liquid may be either room temperature or increased temperature. In general, the temperature of the mixed liquid may be set to 20 to 90°C, and it is particularly preferable to control the temperature to be within the range of 30 to 80°C. When the temperature is 20°C or higher, the formation rate of the silicon compound-containing layer is increased, and the treatment time can be shortened. On the other hand, when the temperature is 90°C or lower, the reaction is easily controlled, and the probability that desired composite particles can be obtained can be increased.

When the mixed liquid containing the metal particles and the organosilicon compound is stirred, the temperature of the mixed liquid may usually be set to about 10 to 100°C, and is particularly preferably set to 30 to 80°C. When this temperature is 10°C or higher, the reaction time for obtaining a sufficient treatment effect can be shortened. In addition, when the temperature is 100°C or lower, the reaction for obtaining a desired metal pigment composition is more easily controlled.

The stirring time of the mixed liquid is not particularly limited as long as it is a time sufficient for forming a desired silicon compound-containing layer. The stirring time is, for example, 0.5 to 20 hours, is preferably set to 2 to 10 hours, and more preferably set to 3 to 6 hours. When the stirring time is 0.5 hours or more, a sufficient treatment effect can be obtained. In addition, when the stirring time is 20 hours or less, deterioration, such as corrosion, of the metal pigment during the reaction can be suppressed, and an increase in treatment cost can be suppressed.

When the silicon-containing raw material is subjected to hydrolysis/condensation reactions in the mixed liquid, the silicon compound-containing layer is formed on the surface of the metal particle (or via the second coating layer). This hydrolysis/condensation reactions can be performed particularly by adjusting the pH of the mixed liquid, or the like.

In adjusting the pH, the pH value of the mixed liquid changes particularly at a stage where the silicon compound-containing layer is formed on the surface of the metal particle (or via the second coating layer), and thus it is desirable to appropriately adjust the pH value such that it can be maintained within a certain range. At that time, it is desirable to adjust the pH value by adding a hydrolysis catalyst, but the pH value may be adjusted by using another acidic or alkaline compound as long as the characteristics of the metal pigment composition according to the third invention of the present application are not impaired.

When a basic hydrolysis catalyst is used as the hydrolysis catalyst, the pH value is preferably set to 7 to 11, and particularly preferably set to 7.5 to 10. When the pH value is 7 or more, the silicon compound-containing layer can be quickly formed. On the other hand, when the pH value is 11 or less, flocculation of the metal particles and a decrease in brightness can be suppressed, and generation of hydrogen gas due to corrosion can be prevented.

When an acidic hydrolysis catalyst is used as the hydrolysis catalyst, the pH value is preferably set to 1.5 to 4, and particularly preferably set to 2 to 3. When the pH value is 1.5 or more, the reaction is properly controlled, and it becomes easy to obtain a metal pigment composition containing desired composite particles. On the other hand, when the pH value is 4 or less, the precipitation rate of the silicon compound-containing layer can be kept high.

In the step (2), a mixed coordination type heteropolyanion compound may be added in order to form the second coating layer (typically, a molybdenum-containing coating film). The mixed coordination type heteropolyanion compound is not particularly limited, but the details thereof, such as the preferred form and the like, are the same as those described above with respect to the first aspect of the first invention of the present application.

In the step (2), when external circulation is preferably performed in which a part of the dispersion (e.g., 0.5 to 30% by mass of the entire dispersion per 1 minute, preferably 1 to 20% by mass, and more preferably 1 to 15% by mass) is once extracted to the outside of the reactor and then returned to the reactor again, unevenness of the reaction treatment can be reduced.

In the step (2), it is also preferable to wash a liquid contact portion between the reactor and the mixed liquid after the silicon-containing raw material and the above-described optional component are added. The washing can be performed by showering the mixed liquid or solvent circulated outside at the vicinity of the liquid contact portion and/or by raising the liquid level. When deposits, which are attached to the vicinity of the liquid contact portion of the reactor, and stagnant matters, (containing unreacted raw material, formed composite particles, the catalyst, the solvent, or the like), are returned to the mixed liquid by the washing, unevenness of the reaction treatment can be reduced.

Step 3

The step (3) is a step of recovering the composite particles formed in the step (2) by performing filtration/washing.

After the step (2) is finished, the obtained composite particles can be recovered in the step (3). In the step (3), the silicon compound, the catalyst, the water, and other additives, which are not attached to the composite particles contained in the mixed liquid obtained in the step (2), are removed, and the solvent content can be adjusted to be desired for the final product. Therefore, the composite particles may be filtered/washed, and if necessary, a solvent may be added.

A known method can be used for the filtration, and for example, a pressure filtration apparatus to be usually used industrially, such as a rotary press or a filter press; a vacuum filtration apparatus, such as a Nutsche filter or a Moore filter; or the like can be used. At the time of the filtration, washing may be performed by adding a solvent or water to the filtered substance, or may be performed by repeating work to disperse the obtained filtered substance in the solvent again for filtration.

Thereafter, the cake containing the composite particles may be subjected to a heat treatment at a temperature in the range of, for example, 100 to 500°C as necessary. The composite particles recovered in this way can usually form a metal pigment composition in which a small amount of solvent, containing water/hydrophilic solvent used in the manufacturing process, remains and is entrained.

The step (3) is desirably performed promptly after the step (2) is finished (i.e., after the stirring is finished). When the reaction liquid is left to stand after the stirring is finished, sedimentation and flocculation of the composite particles in the reaction liquid proceed, and thus the steps (2) and (3) are preferably performed continuously. Here, "continuously" includes a case where the mixed liquid obtained in the step (2) is once transferred to a vessel or the like, but the time before the next step (3) is performed is preferably within 24 hours, more preferably within 6 hours, and even more preferably within 3 hours.

The average particle size ($D_{50}$) of the composite particles contained in the resulting metal pigment composition is preferably 1.3 times or less the average particle size ($D_{50}$) of the metal particles as a raw material. When the average particle size is suppressed to 1.3 times or less the average particle size ($D_{50}$) of the metal particles as a raw material, the flocculation property of individual particles is suppressed to be small and a uniform silicon compound-containing layer and the like are easily obtained, and thus gas generation in an aqueous coating material can be suppressed and good storage stability can be easily obtained. In addition, a coating film formed by using the metal pigment composition can exhibit high hiding power and brightness feeling and the like, and the flocculation property of individual particles can be suppressed to be small. This ratio is more preferably 1.2 times or less, and particularly preferably 1.1 times or less.

The type of the metal pigment (composition), to which the manufacturing method of the third invention of the present application is applied, is not particularly limited, but is preferably used in the manufacture of the metal pigment (composition) of the first invention or second invention of the present application, and is particularly preferably used in the manufacture of the metal pigment (composition) of the first invention or second invention of the present application.

The metal pigment composition manufactured by the third invention of the present application can be used for organic solvent-based coating materials, inks, and the like. In addition, when added to an aqueous coating material or aqueous ink in which resins, which are coating film-forming components (binders), are dissolved or dispersed in a medium mainly containing water, this metal pigment composition can form a metallic aqueous coating material or metallic aqueous ink, which is a resin composition. The metal pigment composition can also be kneaded with a resin or the like to be used as a water-resistant binder or filler. The antioxidant, the light stabilizer, the polymerization inhibitor, and the surfactant may be added when the metal pigment composition is blended in an aqueous coating material, an aqueous ink, a resin, or the like. As a modification, it is also possible to obtain a molded body from a kneaded product of the metal pigment composition and a resin or the like.

When the metal pigment composition is used for a coating material or an ink, the metal pigment composition may be added as it is to a (aqueous) coating material or a (aqueous) ink, but it is preferable to add the metal pigment composition after being dispersed in a solvent in advance. Examples of the solvent to be used include water, texanol, diethylene glycol monobutyl ether, and propylene glycol monomethyl ether. Examples of these resins include acrylic resins, polyester resins, polyether resins, epoxy resins, fluororesins, and rosin resins. Examples of the binder of the coating material or the ink include rubber in addition to the resin. These resins are preferably emulsified, dispersed, or dissolved in water. Therefore, carboxyl groups, sulfone groups, and the like contained in the resins can be neutralized.

Preferred resins are acrylic resins and polyester resins. If necessary, a resin, such as a melamine-based curing agent, an isocyanate-based curing agent, or a urethane dispersion, can be used in combination. Furthermore, it may be combined with a coloring pigment such as an inorganic pigment, an organic pigment, or an extender pigment that is generally added to a coating material, a silane coupling agent, a titanium coupling agent, a dispersant, an anti-settling agent, a leveling agent, a thickener, or an antifoaming agent. A surfactant may further be added in order to improve the dispersibility in the coating material, or an antioxidant, a light stabilizer, and a polymerization inhibitor may further be added in order to improve the storage stability of the coating material.

Examples of the coloring pigment include phthalocyanine, quinacridone, isoindolinone, perylene, azo lake, iron oxide, chrome yellow, carbon black, titanium oxide, and pearl mica.

The content of the metal pigment composition manufactured according to the third invention of the present application in the aqueous coating material or aqueous ink (resin composition) is not limited, but may usually be set to 0.1 to 50% by mass, and is particularly preferably set to 1 to 30% by mass. When the content is 0.1% by mass or more, a high decorative (metallic) effect can be obtained. In addition, when the content is 50% by mass or less, it is possible to prevent the characteristics of the aqueous coating material or aqueous ink, for example, weather resistance, corrosion resistance, mechanical strength, and the like from being impaired.

The content of the solvent is not particularly limited, but may be 20 to 200% by mass with respect to the binder content. When the content of the solvent is within this range, the viscosity of the coating material or ink is adjusted to an appropriate range, and handling and film formation can be facilitated.

A coating method or a printing method of an aqueous coating material or the like is not particularly limited. For example, various coating methods or printing methods can be appropriately adopted in consideration of the form of an aqueous coating material or the like, the surface shape of a material to be coated, and the like. Examples of the coating method include a spray method, a roll coater method, a brush coating method, and a doctor blade method. Examples of the printing method include gravure printing and screen printing.

The coating film formed by an aqueous coating material or the like may be formed on an undercoat layer or an intermediate coat layer by electrodeposition coating or the like. If necessary, a topcoat layer or the like may be formed on a coating film formed by an aqueous coating material or the like.

In the case of these layer configurations, each coating film layer is coated and cured or dried, and then the next coating film layer may be coated; alternatively, each coating film layer is coated by so-called wet-on-wet coating, and then, with the layer uncured or undried, the next coating film layer may be coated. For the aqueous coating material or the like containing the metal pigment composition, it is preferable from the viewpoint of obtaining a coating film having good mirror-like brightness to adopt a method including the step of, after an underlayer coating film layer is coated and cured or dried, forming a coating film layer by the aqueous coating material or the like. The method for curing the coating composition in each coating film layer may be thermal curing or normal temperature curing. The method for drying the coating composition in each coating film layer may be, for example, drying using hot air or natural drying at room temperature.

The thickness of the coating film layer formed by the aqueous coating material or the like is not particularly limited, but may usually be about 2 to 100 $\mu$m. When the thickness of the coating film layer is 2 $\mu$m or more, an effect of hiding the base by an ink or coating material can be sufficiently obtained. In addition, when the thickness of the coating film layer is 100 $\mu$m or less, drying is facilitated, and occurrence of a defect, such as foaming or sagging, can be suppressed.

Each of the following is a preferred aspect and/or embodiment of the present inventions.

[1a-1] A metal pigment composition comprising composite particles having metal particles and one or more coating layers formed on surfaces of the metal particles, wherein

(1) the composite particles have a flaky shape,

(2) $D_{50}$ based on volume is 0.1 to 30 $\mu$m when a particle size distribution of the composite particles is measured by a laser diffraction particle size distribution meter,

(3) the composite particles have an average thickness of 20 to 300 nm,

(4) at least one layer of the coating layer is a silicon compound-containing layer,

(5) the proportion of the composite particles that are bent is 10% or less, and

(6) a number proportion of aggregates constituted by at least four of the composite particles, is 35% or less with respect to a total number of the composite particles.

[1a-2] The metal pigment composition according to [1a-1], wherein the $D_{50}$ based on volume is 0.1 to 15 $\mu$m when the particle size distribution of the composite particles is measured by a laser diffraction particle size distribution meter.

[1a-3] The metal pigment composition according to [1a-1] or [1a-2], wherein the metal particles are aluminum or an aluminum alloy.

[1a-4] The metal pigment composition according to any one of [1a-1] to [1a-3], further comprising a coating layer containing at least one of a metal, a metal oxide, a metal hydrate, and a resin.

[1a-5] The metal pigment composition according to any one of [1a-1] to [1a-4], wherein the at least silicon compound-containing layer is disposed as an outermost layer.

[1b-1] A composite metal pigment comprising composite particles having metal particles and a metal oxide coating formed on surfaces of the metal particle, wherein

(1) an average particle size $D_{50}$ based on volume is 3 to 20 $\mu$m when a particle size distribution of the composite particles is measured by a laser diffraction particle size distribution meter,

(2) the composite particles have an average particle thickness of 15 to 160 nm,

(3) the number proportion of primary particles that are not flocculated with respect to the composite particles is 35% or more, and

(4) the number proportion of the composite particles that are bent with respect to the composite particles is 10% or less.

[1b-2] The composite metal pigment according to [1b-1], wherein the metal particles have an average particle thickness of 10 to 110 nm.

[1b-3] The composite metal pigment according to [1b-1] or [1b-2], wherein the metal particles contain aluminum or an aluminum alloy.

[1b-4] The composite metal pigment according to any one of [1b-1] to [1b-3], further comprising a coating layer in which the composite particles contain at least one selected from a metal, a metal oxide, a metal hydrate, and a resin.

[1b-5] A metal pigment composition comprising the composite metal pigment according to any one of [1b-1] to [1b-4].

[2-1] A composite metal pigment comprising composite particles in which metal particles are coated with a polysiloxane layer, wherein

1) the proportion of Q4 structures, in which a Si atom has four -O-Si- bonds in the structure of the polysiloxane, is 40 to 90%, and

2) when surfaces of the composite particles are evaluated by XPS, the relative element concentration, ((A/B) $\times$ 100), between the element concentration of metal, A, and the element concentration of Si, B, is 10% by mole or less.

[2-2] The composite metal pigment according to [2-1], wherein the polysiloxane layer has an average thickness of 5 to 100 nm.

[2-3] The composite metal pigment according to [2-1] or [2-2], wherein a hydrophilicity A, defined by the sum of (the proportion of Q1 structures, in which a Si atom has one -O-Si- bond, $\times$ 3) + (the proportion of Q2 structures, in which a Si atom has two -O-Si- bonds, $\times$ 2) + (the proportion of Q3 structures, in which a Si atom has three -O-Si-bonds), is 10 to 80%.

[2-4] The composite metal pigment according to any one of [2-1] to [2-3], wherein the composite particles have an average aspect ratio of 20 to 400.

[2-5] The composite metal pigment according to any one of [2-1] to [2-4], wherein, when 200 g of an aqueous metallic coating material is collected in a flask and a cumulative amount of generated hydrogen gas is measured in a constant-temperature water bath at 60°C for up to 24 hours, gas generation is 10 ml or less.

[2-6] A metal pigment composition comprising the composite metal pigment according to any one of [2-1] to [2-5].

[2-7] An aqueous coating material composition comprising the composite metal pigment according to any one of [2-1] to [2-5].

[2-8] An aqueous ink composition comprising the composite metal pigment according to any one of [2-1] to [2-5].

[2-9] A coating film comprising the composite metal pigment according to any one of [2-1] to [2-5].

[3-1] A method for manufacturing a metal pigment composition, using a stirring vessel-type reaction apparatus and comprising following steps (1) to (3):

> (1) dispersing metal particles in a solvent;
> (2) coating the metal particles with a silicon compound; and
> (3) filtering/washing the metal particles, wherein
> the stirring vessel-type reaction apparatus:
>
>> includes a reactor having a volume of 100 L or more; and
>> has the ratio of the maximum diameter of a stirring blade to the diameter of the reactor is in a range of 0.2 to 1.0, and the shortest distance between an inner surface of the reactor and a tip of the stirring blade is 10 mm or more; and
>> has the tip speed of the stirring blade, while being stirred, is 1 to 20 m/s.

[3-2] The manufacturing method according to [3-1], wherein

> in the step (1), the average particle size of the metal particles in a dispersion is 1.2 times or less the average particle size of the metal particles as a raw material, and the metal particles in the dispersion are uniformly dispersed in the solvent;
> in the step (2), stirring is performed to not form a stagnation portion in a surface layer and a bottom; and
> the average particle size of composite particles contained in the metal pigment composition obtained after the step (3) is 1.3 times or less the average particle size of the metal particles as a raw material.

[3-3] The manufacturing method according to [3-1] or [3-2], wherein in the step (1) and/or (2), a treatment liquid extracted from a vicinity of the bottom of the reactor is returned to the reactor at an upper portion of the reactor for circulation.

[3-4] The manufacturing method according to any one of [3-1] to [3-3], wherein in the step (2), after a silicon-containing raw material and a catalyst are put in, an inner wall of the reactor near a liquid contact portion between the reactor and a mixed liquid is washed with a reaction liquid or the solvent to reduce deposits or stagnant matters.

[3-5] The manufacturing method according to any one of [3-1] to [3-4], wherein the step (2) is performed for 2 hours or more.

[3-6] A metal pigment composition obtained by the manufacturing method according to any one of [3-1] to [3-5].

[3-7] A stirring vessel-type reaction apparatus to be used in the manufacturing method according to any one of [3-1] to [3-5].

EXAMPLES

Hereinafter, the present inventions will be described more specifically by way of examples, but it should be noted that these examples are merely illustrative, and the present inventions are not limited at all by the description of these examples.

Example 1

In a reactor having a diameter of 1 m and an internal volume of 1 m$^2$ with 2 inclined paddle-type stirring blades having a blade diameter of 0.5 m at positions of 0.3 m and 0.6 m from the bottom surface, respectively, 465 kg of methoxypropanol (hereinafter, abbreviated as "PM") was added to 135 kg of commercially available aluminum paste (manufactured by Asahi Kasei Corporation, product name: "GX-3100", average particle size: 11 $\mu$m, nonvolatile content: 74%), and the aluminum paste was uniformly dispersed in PM while the mixture was being stirred with the stirring blades at 100 rpm and external circulation, in which 40 L/min of the dispersion extracted from the bottom was returned to the reactor at an upper portion of the reactor, was performed. In the external circulation, ultrasonic waves of 500 W were emitted in the middle of the flow path for 1 minute to improve the dispersibility of the particles.

Next, a liquid, prepared by dissolving 1 kg of phosphotungstic molybdic acid ($H_3PW_6Mo_6O_{40}$) hydrate in 5 kg of methoxypropanol, was gradually added thereto, and the mixture was stirred for 1 hour while the temperature of the slurry was maintained at 40°C. Thereafter, 10 kg of tetraethoxysilane was added as an organosilicon compound, and then 10 kg of 25% aqueous ammonia and 200 kg of purified water were added for 3 hours. Thereafter, 1.3 kg of methyltrimethoxysilane was further added as a silane coupling agent, and the mixture was stirred for 2 hours. After the reaction was finished, the reaction mixture was cooled, and then the slurry was filtered to obtain an aluminum pigment composition containing a nonvolatile content of 60%. During the reaction, the external circulation with emission of the ultrasonic waves was continued.

In the present example and each of the following examples, the $D_{50}$ based on volume of the composite particles contained in a metal pigment composition was measured using a laser diffraction type particle size distribution meter "LA-300" (manufactured by HORIBA, Ltd.). Isopropanol was used as a measurement solvent, and a metal pigment composition containing the composite particles as a sample was subjected to ultrasonic dispersion for 2 minutes as a pretreatment, then it was put into a dispersion vessel until it was confirmed that an appropriate concentration was obtained, and then the $D_{50}$ was measured.

In the present example and each of the following examples, the average thickness of the composite particles (in a case where multiple composite particles are flocculated or fixed to each other, flocculated matters/aggregates thereof) was calculated from the water surface diffusion area and the density of the composite particles. The water surface diffusion area is an area occupied by dry composite particles per unit mass when dry composite particles are uniformly diffused on a water surface by using a leafing phenomenon and the surface is covered without a gap. The area was measured according to the provision of JIS K 5906: 1998.

However, when the hydrophilicity of the surface was strong and it was difficult to determine the water surface diffusion area, a film (thin film) was formed using a metal pigment composition, in which composite particles were dispersed in a mixture of methoxypropanol and water, in the same way as that described in the evaluation of flocculation and deformation of composite particles described later, and the thickness of the composite particles (500 or more) was observed by a scanning electron microscope (SEM) to determine the average thickness of the composite particles.

Example 2

An aluminum pigment composition having a nonvolatile content of 60% was obtained in the same operations as in Example 1 except that an aluminum paste (manufactured by Asahi Kasei Corporation, product name: "GX-4100", average particle size: 10 μm, nonvolatile content: 74%) was used instead of the aforementioned aluminum paste.

Example 3

An aluminum pigment composition having a nonvolatile content of 60% was obtained in the same operations as in Example 1 except that an aluminum paste (manufactured by Asahi Kasei Corporation, product name: "FD-5090", average particle size: 9 μm, nonvolatile content: 75%) was used instead of the aforementioned aluminum paste.

Comparative Example 1

While a slurry, in which 465 kg of PM was added to 135 kg of a commercially available aluminum paste (manufactured by Asahi Kasei Corporation, product name: "GX-3100", average particle size: 11 μm, nonvolatile content: 74%) and then dispersed, was being stirred using the same apparatus as in Example 1, a liquid, in which1 kg of phosphotungstic molybdic acid ($H_3PW_6Mo_6O_{40}$) hydrate was dissolved in 5 kg of PM, was gradually added, and the mixture was stirred for 1 hour while the temperature of the slurry was maintained at 40°C. Thereafter, the mixture was cooled, and then the slurry was filtered to obtain an aluminum pigment composition having a nonvolatile content of 60%.

Example 4

An aluminum pigment composition having a nonvolatile content of 60% was obtained by performing the same operations as in Example 1 except that the diameter of a stirring blade was set to 0.25 m, the rotation speed was set to 100 rpm, and the external circulation with emission of ultrasonic waves was not performed from the pre-dispersion (initial dispersion) of the aluminum flakes to the end of the reaction.

Example 5

An aluminum pigment composition having a nonvolatile content of 60% was obtained by performing the same operations as in Example 1 except that the diameter of a stirring blade was set to 0.25 m, the rotation speed was set to 800 rpm, and the external circulation with emission of ultrasonic waves was not performed from the pre-dispersion (initial dispersion) of the aluminum flakes to the end of the reaction.

The compositions and manufacturing conditions of the aforementioned Examples and Comparative Example are summarized in Table 1.

Using the aluminum pigment composition obtained in each of the above Examples and Comparative Example, an aqueous metallic coating material was prepared with the following composition, and evaluated as a coating material by the following method. The results are shown in Table 1.

An aqueous metallic coating material having the following components was prepared.

- Aluminum pigment composition: 12.0 g in terms of nonvolatile content
- Methoxypropanol: 18.0 g
- Polyoxyethylene lauryl ether (nonionic surfactant, manufactured by Matsumoto Yushi-Seiyaku Co., Ltd., product name: "Actinol L5"): 6.0 g
- Purified water: 12.0 g
- Water-soluble acrylic resin (*1): 110.0 g
- Melamine resin (*2): 18.0 g

     * 1: manufactured by Mitsui Chemicals, Inc., ALMATEX WA 911
     *2: manufactured by Nippon Cytec Industries, Inc., CYMEL 350

After the above components were mixed, the pH was adjusted from 7.7 to 7.8 with dimethylethanolamine, and the viscosity was adjusted from 650 to 750 mPa · s (B-type viscometer, No. 3 low, rotated 60 times, measured at 25°C) with a carboxylic acid-based thickener and purified water.

• Evaluation 1 (Coating material stability)

For the aqueous metallic coating material prepared according to the above formulation, a change in condition after being left to stand at 23°C for 24 hours was visually evaluated.

     ○: No particular change was observed.
     △: Flocculation of aluminum pigment (composite particles) was slightly observed.
     ×: Flocculation of aluminum pigment (composite particles) was observed.

• Evaluation 2 (Storage stability (gas generation) evaluation)

200 g of the aqueous metallic coating material prepared according to the above formulation was collected in a flask, and a cumulative amount of generated hydrogen gas was observed in a constant-temperature water bath at 60°C for up to 24 hours. The amount of generated gas was evaluated as follows and used as an index of the storage stability in a coating material.

     ○: less than 5 ml
     △: 5 ml or more and less than 20 ml
     ×: 20 ml or more

• Evaluation 3 (Coating film color tone evaluation)

The aqueous metallic coating material prepared according to the above formulation was applied to an intermediately coated 12 cm × 6 cm steel plate by air spray coating so as to have a dry film thickness of 4 $\mu$m, and pre-dried at 90°C for 10 minutes. Thereafter, an organic solvent type topcoat coating material was applied by air spray coating so as to have a dry film thickness of 20 $\mu$m, and dried at 140°C for 30 minutes to prepare a coated plate, and evaluations of luminance and hiding property were performed.

The organic solvent type topcoat coating material was prepared as follows: the following components were mixed and dispersed with a spatula for 3 to 4 minutes; and then the viscosity of the coating material was adjusted to 20.0 seconds with a Ford Cup No. 4.

- A 345 (manufactured by DIC Corporation, acrylic clear resin) 420 g
- L-117-60 (manufactured by DIC Corporation, melamine resin) 165 g
- Solvesso 100 (manufactured by EXXON Chemical Co., Ltd, aromatic solvent) 228 g

Luminance

The luminance of the coating film was evaluated using a laser type metallic feeling measuring apparatus ALCOPE LMR-200 manufactured by Kansai Paint Co., Ltd. As an optical condition, a laser light source is provided at an incident angle of 45 degrees, and optical receivers at light receiving angles of 0 degrees and -35 degrees. As a measurement value, an IV value was obtained at a light receiving angle of -35 degrees at which the maximum light intensity was obtained except for, among laser reflected light, the light in a mirror reflection area that reflected on the surface of the coating film. The IV value is a parameter proportional to the intensity of regularly reflected light from the coating film, and indicates the magnitude of light luminance. The determination method is as follows.

○: The decrease from Comparative Example 1 was less than 20.
△: The decrease from Comparative Example 1 was 20 or more and less than 40.
✕: The decrease from Comparative Example 1 was 40 or more.

Hiding property

The coating film applied to a PET sheet was visually evaluated.

○: From the same level as the standard (Comparative Example 1) to slightly lower level
△: Lower than the standard (Comparative Example 1)
✕: Significantly lower than the standard (Comparative Example 1)

• Evaluation 4 (Evaluation of flocculation and deformation of composite particles)

In order to prepare a test piece for observation, the aqueous metallic coating material prepared according to the above formulation was first applied onto a polyethylene terephthalate film (PET film) with a 9 mil applicator, left to stand at room temperature for 20 minutes, and then baked at 140°C for 20 minutes to prepare a coated plate. The coated plate was divided into pieces each having a size of 2 cm square with scissors, and then the cross section of the coating film was repeatedly cut using a large rotary microtome (manufactured by YAMATO KOHKI INDUSTRIAL CO., LTD./RV-240) to expose the cross section of the coating film, and then ion milling processing was performed using an ion milling apparatus (manufactured by JEOL Ltd./IB-09010CP) with a setting such that ion beam irradiation was possible up to a portion 20 $\mu$m away from the cross section of the coating film to prepare a test piece for cross-section observation. The test piece was observed by FE-SEM (manufactured by HITACHI/S-4700) to observe the degree of overlap between particles (presence or absence of flocculation or fixation) and the degree of deformation of particles (presence or absence of bending). In the observation, particles having a particle size in the range of 90% from the center, when a particle size distribution was measured, were targeted.

First, those in which the degree of overlap (presence or absence of flocculation or fixation) could be easily determined were observed at a magnification of about 1,000 to 3,000 times. When the degree of overlap could not be determined at this magnification, the degree of overlap was evaluated by appropriately changing the magnification. In this observation method, observation was performed at a magnification of about 30,000 times at the maximum. A plurality of fields of view were observed from the cross section of the same test piece, so that the number of the observed particles was 500 or more.

When it was still difficult to determine the aggregates (flocculated state) even by the observation method as described above, the presence or absence of flocculation was classified according to the following criteria a) to b).

a) When the minimum distance, d, between the surfaces of the base metals of the targeted particles (metal particles) was twice or more the average thickness of the coating layer, t, it was classified that the particles were not flocculated.
b) When the minimum distance, d, between the surfaces of the base metals of the targeted particles (metal particles) was less than twice the average thickness of the coating layer, t, it was classified that the particles were not flocculated.

Here, the average thickness of the coating layer was defined as an average coating layer thickness at arbitrary positions of 100 arbitrary particles.

In addition, the degree of deformation (presence or absence of bending) that could be easily determined was observed at a magnification of about 1,000 to 3,000 times. When deformation could not be determined at this magnification, the degree of deformation was evaluated by appropriately changing the magnification. In this observation method, observation was performed at a magnification of about 30,000 times at the maximum. A plurality of fields of view were observed from the cross section of the same test piece, so that the number of the observed particles was 500 or more. For the presence or absence of deformation, a case where the shortest distance between both ends of a particle was 0.8 times or less the length of the particle was determined as being deformed (being bent).

[Table 1]

Table 1

|  | Example 1 | Example 2 | Example 3 | Comparative Example 1 | Example 4 | Example 5 |
|---|---|---|---|---|---|---|
| Raw material • Aluminum flake product name | GX3100 | GX4100 | FD5090 | GX3100 | GX3100 | GX3100 |
| D50 based on volume | 12 | 11 | 10 | 11 | 14 | 12 |
| Thickness: 20 to 300 nm | 230 | 220 | 170 | 170 | 230 | 230 |
| Proportion of particles bent (%) Evaluation 4 | 3 | 5 | 8 | 0 | 5 | 20 |
| Proportion of flocculated particles of four or more particles (%) Evaluation 4 | 5 | 10 | 15 | 0 | 40 | 7 |
|  |  |  |  |  |  |  |
| Evaluation 1 (Coating material stability) | ○ | ○ | ○ | × | ○ | ○ |
| Evaluation 2 (Storage stability (gas generation) evaluation) | ○ | ○ | ○ | × | △ | △ |
| Evaluation 3 (Coating film color tone evaluation) |  |  |  |  |  |  |
| • Luminance | ○ | ○ | ○ | - | × | △ |
| • Hiding property | ○ | ○ | ○ | - | △ | △ |

The metal pigment composition according to the first aspect of the first invention of the present application, which satisfied all of the physical property requirements of the above items (1) to (6), obtained in Examples 1 to 3 had good stability as a coating material, generated less gas (had good storage stability), and was excellent in luminance and hiding property. This is considered to be because the initial dispersion of the aluminum flakes was sufficiently performed and stirring conditions, in which the aluminum flakes were not damaged and flocculation at the time of the condensation of the organosilicon compound was suppressed, were adopted, the silica resin layer was firmly attached to the surfaces of the aluminum particles.

Example 6

As a pretreatment, 1,000 g of isopropanol and 1.0 g of a nonionic dispersant Marpon L-5 (manufactured by Matsumoto Yushi-Seiyaku Co., Ltd.) were added to 135 g of an aluminum paste (nonvolatile content 75%) having an average particle size $D_{50}$ of 9 $\mu$m and a particle thickness of 90 nm and containing 25% of mineral spirit as a volatile content, and the mixture was well stirred and dispersed, and then filtered with a Nutsche filter to obtain 135 g of an aluminum paste having a solid content of 75%. Next, this was sealed in a 300 cc sealed can, and heated and cured in a drying furnace at 60°C for 8 hours.

This was cooled to room temperature, and then, as a coating treatment, a slurry obtained by adding 465 g of isopropanol to 135 g of the aluminum paste and dispersing it was put in a 2 L cylindrical glass reaction vessel, and while the slurry was being stirred at 150 rpm with a 7 cm long inclined paddle type stirring blade disposed at a position of 3 cm from the bottom surface, a liquid, obtained by dissolving 1.0 g of phosphotungstic molybdic acid ($H_3PW_6Mo_6O_{40}$) hydrate in 5 g of isopropanol, was gradually added, and the mixture was stirred for 1 hour while the temperature of the slurry was maintained at 40°C. Thereafter, 10 g of tetraethoxysilane as an organic silicon compound was added, and then 10 g of 25% aqueous ammonia and 200 g of purified water were added for 3 hours. Thereafter, 1.23 g of methyltrimethoxysilane was further added as a silane coupling agent, and the mixture was stirred for 2 hours. After the reaction was finished, the slurry was cooled and then filtered.

As a result, a composite metal pigment, containing silicon oxide-coated aluminum particles as composite particles and having a nonvolatile content of 60%, was obtained.

(Average particle size: $D_{50}$)

In the present example and each of the following examples, the average particle size ($D_{50}$) of the composite particles (silicon oxide-coated aluminum particles) in the obtained composite metal pigment was measured using a laser diffraction/scattering type particle size distribution measuring apparatus (LA-300/manufactured by HORIBA, Ltd.).

As the measurement solvent, isopropanol was used.

The measurement was performed in accordance with the instruction manual of the instrument. As a matter of note, the composite metal pigment as a sample was subjected to ultrasonic dispersion for 2 minutes as a pretreatment, and then the composite metal pigment was put in a dispersion vessel and confirmed to be dispersed at an appropriate concentration, and then the measurement was started.

After the measurement was finished, the $D_{50}$ was calculated by the software of the instrument and displayed automatically.

Example 7

A composite metal pigment was obtained in the same manner as in Example 6 except that an aluminum paste, having an average particle size D50 of 10 $\mu$m and a particle thickness of 40 nm, was used.

Example 8

A composite metal pigment was obtained in the same manner as in Example 6 except that an aluminum paste, having an average particle size $D_{50}$ of 10 $\mu$m and a particle thickness of 60 nm, was used.

Example 9

A composite metal pigment was obtained in the same manner as in Example 6 except that the use amount of tetraethoxysilane as an organic silicon compound was changed to 25 g.

Example 10

A composite metal pigment was obtained in the same manner as in Example 6 except that the use amount of isopropanol to be used in the pretreatment was changed to 400 g.

Example 11

A composite metal pigment was obtained in the same manner as in Example 6 except that the stirring speed for the slurry in the coating treatment was changed to 230 rpm.

Example 12

A composite metal pigment was obtained in the same manner as in Example 6 except that an aluminum paste, having an average particle size D50 of 9 $\mu$m and a particle thickness of 110 nm, was used.

Example 13

A composite metal pigment was obtained in the same manner as in Example 6 except that the pretreatment was not performed.

Example 14

A composite metal pigment was obtained in the same manner as in Example 6 except that the stirring speed for the slurry in the coating treatment was changed to 350 rpm.

Example 15

A composite metal pigment was obtained in the same manner as in Example 6 except that an aluminum paste, having an average particle size $D_{50}$ of 10 $\mu$m and a particle thickness of 170 nm, was used.

Example 16

A composite metal pigment was obtained in the same manner as in Example 6 except that the use amount of tetraethoxysilane as an organic silicon compound was changed to 30 g.

(Evaluation of coating material and coating film)

An aqueous metallic coating material with the following composition was prepared by using each of the composite metal pigments obtained in Examples 6 to 16, and the coating material and the coating film obtained therefrom were evaluated by the following method. The results are shown in Table 2.
An aqueous metallic coating material having the following components was prepared.

- Composite metal pigment: 36 g in terms of nonvolatile content
- Isopropanol: 180 g
- Polyoxyethylene lauryl ether (nonionic surfactant, manufactured by Matsumoto Yushi-Seiyaku Co., Ltd., product name "Marpon L5"): 6.0 g
- Purified water: 120 g
- Water-soluble acrylic resin (*1): 110.0 g
- Melamine resin (*2): 18.0 g

    * 1: manufactured by Mitsui Chemicals, Inc., ALMATEX WA 911
    *2: manufactured by Nippon Cytec Industries, Inc., CYMEL 350

After the above components were mixed, the pH was adjusted from 7.7 to 7.8 with dimethylethanolamine, and the viscosity was adjusted from 650 to 750 mPa · s (B-type viscometer, No. 3 low, rotated 60 times, measured at 25°C) with a carboxylic acid-based thickener and purified water.
The aqueous metallic coating material thus prepared was used to perform the following evaluations.

• Evaluation 1 (Storage stability (gas generation))

200 g of the aqueous metallic coating material prepared according to the above formulation was collected in a flask, and a cumulative amount of generated hydrogen gas was measured in a constant-temperature water bath at 60°C for up to 24 hours.

• Evaluation 2 (Designability 1: luminance L5)

The aqueous metallic coating material prepared according to the above formulation was applied to an intermediately coated 12 cm × 6 cm steel plate (manufactured by Miki Coating Co., Ltd.) by air spray coating so as to have a dry film thickness of 6 $\mu$m, and pre-dried at 90°C for 10 minutes. Thereafter, an organic solvent type topcoat coating material having the following composition was dispersed with a spatula for 3 minutes, the viscosity of the coating material was adjusted to 20.0 seconds with a Ford Cup No. 4, and the aqueous metallic coating material was applied by air spray coating so as to have a dry film thickness of 20 $\mu$m, and dried at 140°C for 30 minutes to prepare a coated plate.
For the obtained coated plate, luminance was measured using a variable angle colorimeter manufactured by Suga Test Instruments Co., Ltd. The light source is incident on the coated plate at an angle of 45 degrees, but in order to remove the influence of glossy light reflected on the coating film clear surface, a reflected light brightness (L5) at 50 degrees shifted from the regular reflected light by 5 degrees was used as an index of luminance.

(Composition of organic solvent type topcoat coating material)

- Acridic 44-179 (manufactured by DIC Corporation, acrylic clear resin): 141 g
- Super Beccamine J-820 (manufactured by DIC Corporation, melamine resin): 35.3 g
- Toluene: 123.5 g

• Evaluation 3 (Designability 2: gloss)

For the coating film on the coated plate prepared in Evaluation 2, 60 degree gloss was measured using a digital variable angle gloss meter UGV-5D manufactured by Suga Test Instruments Co., Ltd.

• Evaluation 4 (Coating film seeds)

The number of seeds on the entire surface of the top coat of the coated plate prepared in Evaluation 2 was measured, and evaluated by the following indices.

⊙: No seed was visible.
○: 3 or less seeds
△: 10 or less seeds
✕: The number of seeds was more than 10.

(Evaluation of composite particle)

(1) preparation of coated plate

A coating material was prepared under the same conditions except that, in order to facilitate the determination of a flocculated state and the like of particles, the amount of the aluminum paste, in the blending of the coating material to be used for preparing the coated plate in Evaluation 2, was set to 1/10, and a coated plate was prepared under the conditions in Evaluation 2.

(2) Polishing of cross section of coated plate

The coated plate was cut into pieces each having a size of 1 cm square by using a shearing machine.
The cross section of the obtained coating film was set such that ion beam irradiation was possible up to a portion 20 $\mu$m away from the coating film cross section, and a fine polished cross section sample was prepared by ion milling processing using an ion milling apparatus (manufactured by JEOL Ltd./IB-09010CP).

(3) Acquisition of FE-SEM image

The coating film cross section (coated plate) obtained in ((2) Creation of cross section of coating film) was adhered to be parallel to a SEM sample stage, and a FE-SEM image of the coating film cross section was acquired by using a field emission type FE-SEM (manufactured by HITACHI/S-4700).
As the conditions for FE-SEM observation/acquisition, an accelerating voltage was adjusted to 5.0 kV, and an image magnification was set to 10,000 times and 5, 000 times. The thickness of the particles was measured at a high magnification of 10,000 times.
In addition, before a FE-SEM image was acquired, (captured), an electronic axis alignment process was performed to prevent distortion from occurring at the boundary line between the aluminum particle and the acrylic resin in the FE-SEM image.

• Evaluation 5 (Average particle thickness of metal particles)

The thickness of the particle in the cross section of an aluminum particle was measured using the FE-SEM image (10,000 times) obtained by the procedure for acquiring the particle cross section (FE-SEM image) of the above ((1) - (3)) and image analysis software, Win Roof version 5.5 (manufactured by MITANI CORPORATION), and the average thickness was calculated.
The FE-SEM image of an aluminum particle whose cross-sectional particle thickness was to be measured was displayed, an ROI line was selected to match with the 5 $\mu$m scale of the image, and the length and unit were input from the registration and change.
Next, an image of an aluminum particle whose cross-sectional thickness was to be measured was displayed, a rectangular ROI was selected such that it matched the cross section of the particle, and binary processing was performed.
Next, a measurement item for a vertical chord length to be measured was selected, the measurement was then executed, and an automatic measurement value (vertical chord length value) by image analysis software was displayed on the image.

As described above, 300 particles were selected using the image analysis software, Win Roof version 5.5, and the thicknesses and long diameters in the cross sections of the aluminum particles were automatically measured. Next, the arithmetic average value of the thicknesses of the 300 particles was calculated, and the average thickness, t, of the particles was determined. The thickness uniformity of the aluminum particles is high, and the difference in thickness among the cutting sites of the particles is small. Therefore, the influence of the differences among the cutting sites of the particles on the average particle thickness measurement can be ignored.

• Evaluation 6 (Average particle thickness of composite particles)

For the coated plate used for acquiring the FE-SEM image in Evaluation 5, the average thickness of the particle coating layer was measured at a magnification of 200,000 times using STEM (scanning transmission electron microscope). When the surface of the coating layer had irregularities, the area of the coating layer was measured using image analysis software, Win Roof version 5.5, and divided by the peripheral length of the coated particle to determine the average thickness of the coating layer. When the particle is large, it is not always necessary to measure the areas of all the coating layers, and the area of the coating layer in a region of about 1 μm along the particle surface was measured and the area was divided by the particle surface length, whereby the thickness of the coating layer can be obtained with sufficient accuracy. Since the average thickness of the coating layer was substantially uniform regardless of the particles, an average value was obtained for 10 particles. In addition, from the thickness of the particle coating layer and the average particle thickness of the metal particles obtained above, the average thickness of the composite particles was determined according to the following calculation formula.

$$\text{Average particle thickness of composite particles} = \text{average particle thickness of metal particles} + \text{thickness of coating layer} \times 2$$

• Evaluation 7 (Proportion of primary particles and proportion of 4 or more flocculated particles)

The proportion (based on number) of primary particles not flocculated and the proportion (based on number) of 4 or more flocculated particles were measured using the cross-sectional photograph of the coated plate (FE-SEM image, 5000x) obtained in Evaluation 5. In the measurement, the proportions of primary particles not flocculated and four or more flocculated particles with respect to the total number of particles in a field of view were determined. At this time, in order to avoid intentional selection of particles, all particles other than the particles interrupted at the field end in the field of view were measured. When the number of measurements was less than 300, all particles in another field of view were measured, and the measurement was performed until the number of particles reached 300 or more. When the particles were so close to each other that it was difficult to determine flocculation, it was determined that there was no flocculation when the length of the contact site between the particles was 1/4 or less of the particle size of the smaller particle (whose long diameter is smaller), and it was determined that there was flocculation when the length was more than 1/4.

• Evaluation 8 (Proportion of composite particles that are bent)

The bending of the aluminum particles was measured using the cross-sectional photograph of the coated plate (FE-SEM image, 5000x) obtained in Evaluation 5 and image analysis software.
Specifically, a straight line tool and a curved line tool of the image analysis software, Win Roof version 5.5, were selected, a measurement value obtained by connecting both tips of the cross section of an aluminum particle with a straight line tool was defined as a shortest length, a measurement value obtained by connecting both tips of the cross section, along the cross section, of the aluminum particle with a curved line tool was defined as a particle cross-sectional length, a value of (particle cross-sectional length/particle shortest length) was defined as an index of particle bending, and a particle whose this value is 1.2 or more was defined as a bent particle. 300 particles were measured, and the proportion of bent particles was determined.

[Table 2]

Table 2

| | Example 6 | Example 7 | Example 8 | Example 9 | Example 10 | Example 11 | Example | Example 13 | Example 14 | Example | Example 16 |
|---|---|---|---|---|---|---|---|---|---|---|---|
| Evaluation of composite particles | | | | | | | | | | | |
| $D_{50}$ ($\mu$m) | 9 | 10 | 10 | 9 | 9 | 9 | 9 | 9 | 9 | 10 | 9 |
| Metal particles average thickness (nm) | 90 | 40 | 60 | 90 | 90 | 90 | 110 | 90 | 90 | 170 | 90 |
| Composite particles average thickness (nm) | 130 | 71 | 98 | 150 | 130 | 130 | 150 | 130 | 130 | 230 | 250 |
| Proportion of primary particles (%) | 65 | 38 | 51 | 55 | 55 | 73 | 70 | 31 | 70 | 70 | 45 |
| Proportion of flocculated particles of four or more particles | 7 | 12 | 12 | 15 | 15 | 8 | 5 | 40 | 15 | 15 | 20 |
| Proportion of particles bent (%) | 3 | 2 | 6 | 2 | 5 | 9 | 3 | 3 | 15 | 2 | 4 |
| Evaluation of coating material, coating film | | | | | | | | | | | |
| Storage stability (gas generation): ml | 3 | 6 | 4 | 0 | 3 | 6 | 5 | 3 | 20 | 3 | 0 |
| Designability 1 (Luminance LS) | 400 | 460 | 420 | 380 | 390 | 360 | 380 | 345 | 300 | 370 | 320 |
| Designability 2 (Gloss (60 degrees)) | 105 | 120 | 112 | 100 | 102 | 101 | 98 | 89 | 94 | 100 | 85 |
| Coating film seeds | ◎ | ◎ | ○ | ○ | ○ | ○ | ◎ | × | △ | △ | × |

EP 4 279 267 A1

71

The evaluation results are shown in Table 2. The composite pigment according to the second aspect of the first invention of the present application, which was obtained in Examples 6 to 12 and satisfied all of the physical property requirements of the above items (1) to (4), had good stability as a coating material, had less gas generation (had good storage stability), was also excellent in luminance and gloss, and also effectively suppressed seeds of a coating film.

[Example 17]

In a reactor having a diameter of 10 cm and an internal volume of 2 L with an inclined paddle type stirring blade having a blade diameter of 7 cm at a position of 3 cm from the bottom surface, respectively, 465 g of methoxypropanol (hereinafter, abbreviated as "PM") was added to 135 g of commercially available aluminum paste (manufactured by Asahi Kasei Corporation, product name "GX-3100": average particle size, $D_{50}$: 11 $\mu$m, nonvolatile content: 74%), and while the mixture was being stirred with the stirring blade at 150 rpm, the aluminum paste was uniformly dispersed in PM.
While the dispersed slurry was being stirred at 150 rpm, a liquid, obtained by dissolving 1.0 g of a hydrate of phosphotungstic molybdic acid ($H_3PW_6Mo_6O_{40}$) in 5 g of isopropanol, was gradually added, and the mixture was stirred for 1 hour while the temperature of the slurry was maintained at 40°C.
Then, 10 g of tetraethoxysilane was added as a silicon-containing compound, and then 2 g of 25% aqueous ammonia and 150 g of purified water were added for 3 hours.
Thereafter, the temperature was raised to 50°C, and 8 g of 25% aqueous ammonia and 100 g of purified water were added for 2 hours.
Then, 1.23 g of methyltrimethoxysilane as a silane coupling agent was added, and the mixture was stirred for 2 hours. After the reaction was finished, the slurry was cooled and then washed/filtered. A metal pigment was obtained as an aluminum pigment composition having a nonvolatile content of 60%.

[Example 18]

The same operations as in Example 17 were performed except that 10 g of tetraethoxysilane was added as a silicon-containing compound, then 2 g of 25% aqueous ammonia and 150 g of purified water were added for 3 hours, then the temperature was raised to 50°C, 10 g of tetraethoxysilane was added, and then 8 g of 25% aqueous ammonia and 100 g of purified water were added for 2 hours for treatment, whereby a metal pigment was obtained as an aluminum pigment composition having a nonvolatile content of 60%.

[Example 19]

The same operations as in Example 17 were performed except that 6 g of tetraethoxysilane was added as a silicon-containing compound, then 2 g of 25% aqueous ammonia and 150 g of purified water were added for 3 hours, then the temperature was raised to 50°C, and 8 g of 25% aqueous ammonia and 100 g of purified water were added for 2 hours for treatment, whereby a metal pigment was obtained as an aluminum pigment composition having a nonvolatile content of 60%.

[Example 20]

The same operations as in Example 17 were performed except that, instead of the above aluminum paste, another aluminum paste (manufactured by Asahi Kasei Corporation, product name "FD-5090": average particle size, $D_{50}$, of 9 $\mu$m, nonvolatile content 75%) was used, 15 g of tetraethoxysilane was used as a silicon-containing compound, and 1.5 g of methyltrimethoxysilane was used as a silane coupling agent, whereby a metal pigment was obtained as an aluminum pigment composition having a nonvolatile content of 60%.

[Example 21]

The same operations as in Example 17 were performed except that 10 g of tetraethoxysilane was added as a silicon-containing compound, then 2 g of 25% aqueous ammonia and 150 g of purified water were added for 3 hours, then the temperature was raised to 50°C, 20 g of tetraethoxysilane was added, and then 15 g of 25% aqueous ammonia and 200 g of purified water were added for 4 hours for treatment, whereby a metal pigment was obtained as an aluminum pigment composition having a nonvolatile content of 60%.

[Example 22]

The same operations as in Example 17 were performed except that, after the temperature was raised to 50°C, 10 g of tetraethoxysilane a silicon-containing compound was added, then 2 g of 25% aqueous ammonia and 150 g of purified water were added for 3 hours, then the temperature was raised to 60°C, and 8 g of 25% aqueous ammonia and 100 g of purified water were added for 2 hours for treatment, whereby a metal pigment was obtained as an aluminum pigment composition having a nonvolatile content of 60%.

[Example 23]

The same operations as in Example 17 were performed except that 6 g of tetraethoxysilane was added as a silicon-containing compound, then 2 g of 25% aqueous ammonia and 150 g of purified water were added for 3 hours, and then 8 g of 25% aqueous ammonia and 100 g of purified water were added for 2 hours for treatment, whereby a metal pigment was obtained as an aluminum pigment composition having a nonvolatile content of 60%.

[Example 24]

The same operations as in Example 17 were performed except that, while the temperature was being maintained at 40°C, 10 g of tetraethoxysilane was added as a silicon-containing compound, then 2 g of 25% aqueous ammonia and 150 g of purified water were added for 3 hours, then the temperature was raised to 70°C, and then 8 g of 25% aqueous ammonia and 100 g of purified water were added for 2 hours for treatment, whereby a metal pigment was obtained as an aluminum pigment composition having a nonvolatile content of 60%.

[Comparative Example 2]

While a slurry, in which 465 g of PM was added to 135 g of a commercially available aluminum paste (manufactured by Asahi Kasei Corporation, product name: "GX-3100": average particle size, $D_{50}$: 11 $\mu$m, nonvolatile content: 74%) and dispersed, was being stirred using the same apparatus as in Example 17, a liquid, in which 1 g of phosphotungstic molybdic acid ($H_3PW_6Mo_6O_{40}$) hydrate was dissolved in 5 g of PM, was gradually added, and the mixture was stirred for 1 hour while the temperature of the slurry was maintained at 40°C. Thereafter, the mixture was cooled, and then the slurry was washed/filtered to obtain a metal pigment as an aluminum pigment composition having a nonvolatile content of 60%.

[Example 25]

The same operations as in Example 17 were performed except that, as a treatment using a silicon-containing compound, 10 g of tetraethoxysilane was added at 35°C, and then 10 g of 25% aqueous ammonia and 200 g of purified water were added for 4 hours for the treatment, whereby a metal pigment was obtained as an aluminum pigment composition having a nonvolatile content of 60%.

[Example 26]

The same operations as in Example 17 were performed except that, as a treatment using a silicon-containing compound, 10 g of tetraethoxysilane was added at 70°C, and then 10 g of 25% aqueous ammonia and 200 g of purified water were added for 4 hours for the treatment, whereby a metal pigment was obtained as an aluminum pigment composition having a nonvolatile content of 60%.

[Example 27]

The same operations as in Example 17 were performed except that 10 g of tetraethoxysilane was added as a silicon-containing compound, then 2 g of 25% aqueous ammonia and 150 g of purified water were added for 3 hours, then the temperature was raised to 60°C, 40 g of tetraethoxysilane was added, and then 30 g of 25% aqueous ammonia and 400 g of purified water were added for 4 hours for treatment, whereby a metal pigment was obtained as an aluminum pigment composition having a nonvolatile content of 60%.

[Example 28]

The same operations as in Example 17 were performed except that, as a treatment using a silicon-containing compound, 33 g of tetraethoxysilane was added at 78 °C, then a solution, in which 2.2 g of oxalic acid was dissolved in 54 g of purified water, was added for 3 hours, then the mixture was stirred for 2 hours, then was further continued, and then a solution, in which 1.1 g of ethylenediamine was dissolved in 14.4 g of isopropanol, was added every 1 hour, so that the mixture was treated for 3 hours, whereby a metal pigment was obtained as an aluminum pigment composition having a nonvolatile content of 60%.

Measurement of average particle size ($D_{50}$)

The average particle size ($D_{50}$) of the composite particles (polysiloxane-coated aluminum particles) in the aluminum pigment obtained in each of the above Examples and Comparative Examples was measured using a laser diffraction/scattering type particle size distribution measuring apparatus (LA-300/manufactured by HORIBA, Ltd.). As a measurement solvent, isopropanol was used. The measurement was performed in accordance with the instruction manual of the instrument. As a matter of note, the aluminum pigment as a sample was subjected to ultrasonic dispersion for 2 minutes as a pretreatment, and then the aluminum pigment was put in a dispersion vessel and confirmed to be dispersed at an appropriate concentration, and then the measurement was started. After the measurement was finished, the $D_{50}$ was calculated by the software of the instrument and displayed automatically.

Measurement of Si-NMR

The structures of the polysiloxane layer (the proportion of each of the Q1 to Q4 structures) were determined by Si-NMR. The aluminum pigment obtained in each of the above Examples and Comparative Examples was washed with acetone and air-dried to be used as a sample. For the sample, Si-NMR was measured under the following conditions.

- Measuring apparatus: Bruker Biospin Avance 500
- Observation nucleus: 29Si
- Frequency: 99.35 MHz
- Measurement method: DD/MAS method
- Wait time: 30 sec
- NMR sample tube: 7 mm φ
- Accumulation times: 5,600 times (about 47 Hrs)
- MAS: 5,000 Hz

Measurement of relative element concentration (XPS) between metal and Si

The aluminum pigment obtained in each of the above Examples and Comparative Examples was washed with acetone and air-dried to be used as a sample. For the sample, the silicon concentration and the aluminum concentration were measured under the following conditions by XPS (X-ray photoelectron spectroscopy). For aluminum, the total value of the amounts obtained from the peaks derived from oxide and metal was calculated as the amount of the element.

- Measuring apparatus: ULVAC-PHI Versa Probe II
- Excitation source: mono.AlK$\alpha$ 20 kV $\times$ 5 mA 100 W
- Analysis size: 100 μm φ $\times$ 1.4 mm 100 μm φ X-ray beam is vibrated with 1.4 mm width
- Photoelectron extraction angle: 45°
- Intake region

      Survey scan: 0 to 1,100 eV
      Narrow scan: Al 2p, Si 2p, O 1s, C 1s
      Pass energy
      Survey scan: 117.4 eV
      Narrow scan: 46.95 eV

Evaluation of coating material and coating film

An aqueous metallic coating material with the following composition was prepared using the aluminum pigment composition obtained in each of the above Examples and Comparative Example. A coating material and a coating film obtained therefrom were evaluated by the following method.

(Composition of aqueous metallic coating material)

- Aluminum pigment composition: 12.0 g in terms of nonvolatile content
- Methoxypropanol: 18.0 g
- Polyoxyethylene lauryl ether (nonionic surfactant) (*1): 6.0 g
- Purified water: 12.0 g
- Water-soluble acrylic resin (*2): 110.0 g
- Melamine resin (*3): 18.0 g

    * 1: manufactured by Matsumoto Yushi-Seiyaku Co., Ltd., product name "Marpon L5"
    *2: manufactured by Mitsui Chemicals, Inc., ALMATEX WA 911
    *3: manufactured by Nippon Cytec Industries, Inc., CYMEL 350

After the above components were mixed, the pH was adjusted from 7.7 to 7.8 with dimethylethanolamine, and the viscosity was adjusted from 650 to 750 mPa · s (B-type viscometer, No. 3 low, rotated 60 times, 25°C) with a carboxylic acid-based thickener and purified water.

Evaluation 1 (Storage stability (gas generation))

200 g of the aqueous metallic coating material prepared according to the above formulation was collected in a flask, and a cumulative amount of generated hydrogen gas was measured in a constant-temperature water bath at 60°C for up to 24 hours, which was used as an index of storage stability in the coating material.

    ○: less than 5 ml
    △: 5 ml or more and less than 20 ml
    ×: 20 ml or more

Evaluation 2: Water dispersibility

For the aqueous metallic coating material prepared according to the above formulation, a change in condition after being left to stand at 23°C for 24 hours was visually evaluated as water dispersibility.

    ○: No particular change was observed.
    △: Flocculation of aluminum pigment was slightly observed.
    △: Flocculation of aluminum pigment was observed.

Evaluation 3: Mechanical stability

300 cc of the aqueous metallic coating material produced as described above was put in a 500 ml beaker, and stirred at 200 rpm for 24 hours at room temperature using a shuriken-type disper. The coating material after being stirred was subjected to the same gas generation test as in Evaluation 1.

In addition, for the coating material after being stirred, designability in Evaluation 3 was evaluated as described below.

Evaluation 4: Evaluation of coating film

The aqueous metallic coating material prepared according to the above formulation was applied to an intermediately coated 12 cm × 6 cm steel plate (manufactured by Miki Coating Co., Ltd.) by air spray coating so as to have a dry film thickness of 6 $\mu$m, and pre-dried at 90°C for 10 minutes. Thereafter, an organic solvent type topcoat coating material having the following composition was dispersed with a spatula for 3 minutes, the viscosity of the coating material was adjusted to 20.0 seconds with a Ford Cup No. 4, and the aqueous metallic coating material was applied by air spray coating so as to have a dry film thickness of 20 $\mu$m, and dried at 140°C for 30 minutes to prepare a coated plate, which was subjected to the following evaluation.

(Composition of organic solvent type topcoat coating material)

- Acridic 44-179 (manufactured by DIC Corporation, acrylic clear resin): 141 g
- Super Beccamine J-820 (manufactured by DIC Corporation, melamine resin): 35.3 g

- Toluene: 123.5 g

Evaluation 4-i: Luminance evaluation

The obtained coated plate was evaluated using a laser type metallic feeling measuring apparatus ALCOPE LMR-200 manufactured by Kansai Paint Co., Ltd. As an optical condition, a laser light source is provided at an incident angle of 45 degrees, and optical receivers at light receiving angles of 0 degrees and -35 degrees. As a measurement value, an IV value was obtained at a light receiving angle of -35 degrees at which the maximum light intensity was obtained except for, among laser reflected light, the light in a mirror reflection area that reflected on the surface of the coating film. The IV value is a parameter proportional to the intensity of regularly reflected light from the coating film, and indicates the magnitude of light luminance.
The obtained IV value was evaluated based on the following criteria.

○: The decrease from the standard (Comparative Example 1) was less than 20.
△: The decrease from the standard (Comparative Example 1) was 20 or more and less than 40.
×: The decrease from the standard (Comparative Example 1) was 40 or more.

Evaluation 4-ii: Evaluation of hiding property

The prepared aqueous metallic coating material was applied onto a polyethylene terephthalate sheet (PET sheet) with a 2 mil applicator so as to have a dry film thickness of 15 $\mu$m, and a coating film dried at 140°C for 30 minutes was visually evaluated.

○: From the same level as the standard (Comparative Example 1) to slightly lower level
△: Lower than the standard (Comparative Example 1)
×: Significantly lower than the standard (Comparative Example 1)

Measurement of composite particles

A coating material was produced under the same conditions except that, in order to facilitate the measurement of the thickness and the like of the composite particles, the amount of the metal pigment in the blending of the aqueous metallic coating material to be used in Evaluations 1 and 2 was set to 1/10, and a coated plate was prepared under the condition of Evaluation 3. The coated plate was cut into pieces each having a size of 1 cm square by using a shearing machine.
The cross section of the obtained coating film was set such that ion beam irradiation was possible up to a portion 20 $\mu$m away from the coating film cross section, and a fine polished cross section sample was prepared by ion milling processing using an ion milling apparatus (manufactured by JEOL Ltd./IB-09010CP). The obtained coating film cross section (coated plate) was observed by FE-SEM (manufactured by HITACHI/S-4700) to evaluate the thickness of the composite particle.

Acquisition of FE-SEM image

As the conditions for observation and acquisition of an FE-SEM image, an acceleration voltage was set to 5.0 kV and an image magnification was set to 10,000 times. With the settings, measurement was performed. In addition, before a FE-SEM image was acquired (captured), an electronic axis alignment process was performed to prevent distortion from occurring at the boundary line between the composite particle and the resin in the FE-SEM image.

Measurement of average thickness of composite particles

The thickness of the particle in the cross section of a composite particle was measured using the FE-SEM image (10,000 times) obtained by the above procedure and image analysis software, Win Roof version 5.5 (manufactured by MITANI CORPORATION), and the average thickness was calculated.
First, the FE-SEM image of a composite particle whose cross-sectional thickness was to be measured was displayed, an ROI line was selected to match with the 5 $\mu$m scale of the image, and the length and unit were input from the registration and change.
Next, an image of a composite particle whose cross-sectional thickness was to be measured was displayed, a rectangular ROI was selected such that it matched the cross section of the composite particle, and binary processing was performed.

Next, a measurement item for a vertical chord length to be measured was selected, the measurement was then executed, and an automatic measurement value (vertical chord length value) by image analysis software was displayed.

As described above, 300 composite particles were selected using the above image analysis software, Win Roof version 5.5, and the thicknesses and long diameters in the cross sections of the composite particles were automatically measured. Next, the arithmetic average value of the thicknesses of the 300 composite particles was calculated, and the average thickness of the particles was determined. The thickness uniformity of the composite particles is high, and the difference in thickness among the cutting sites of the composite particle is small. Therefore, the influence of the difference among the cutting sites of the composite particles on the average particle thickness measurement can be ignored.

Measurement of average thickness of polysiloxane layer

For the coated plate used for the above acquisition of an FE-SEM image, a cross-sectional image was obtained at a magnification of 200,000 times by using HR-STEM (high resolution scanning transmission electron microscope, manufactured by HITACHI/S-5500) and adjusting the setting of the acceleration voltage to 30 kV, and the thickness of the polysiloxane layer (coating layer) was measured. When the surface of the polysiloxane layer had irregularities, the cross-sectional area of the polysiloxane layer was measured using image analysis software, Win Roof version 5.5, and divided by the surface length of the composite particle to determine the thickness of the polysiloxane layer. When the composite particle is large, it is not always necessary to measure the areas of all the polysiloxane layers, and the area of the polysiloxane layer in a region of about 1 $\mu$m along the particle surface was measured and the area was divided by the particle surface length, whereby the thickness of the polysiloxane layer can be obtained with sufficient accuracy. In addition, the thickness of the polysiloxane layer was not greatly different from particle to particle and was substantially uniform, and thus, as the average thickness of the polysiloxane layers, the average value of thicknesses was determined for 50 composite particles.

The aluminum paste as the raw material in each of Examples and Comparative Example, the measurement results of the physical properties of the composite particles, and the evaluation results of the physical properties of the metal pigment, are shown in the following Table 3-1 and Table 3-2. Each of the metal pigment compositions obtained in Examples 17 to 28 had a moisture content of 300 ppm or less and a pH of 5 to 9.

[Table 3-1]

Table 3-1

|  | Example 17 | Example 18 | Example 19 | Example 20 | Example 21 | Example 22 |
|---|---|---|---|---|---|---|
| Raw material (Product name) | GX3100 | GX3100 | GX3100 | FD5090 | GX3100 | GX3100 |
| Average particle size ($\mu$m) | 11 | 11 | 11 | 9 | 11 | 11 |
| Average particle thickness (nm) | 230 | 270 | 210 | 170 | 300 | 230 |
| Proportion of Q4 structures (%) | 75 | 70 | 75 | 75 | 60 | 85 |
| Hydrophilicity A (%) | 41 | 49 | 31 | 40 | 55 | 20 |
| Al/Si Relative element concentration (XPS) (%) | 3 | 1 | 6 | 3 | 1 | 9 |
| Polysiloxane layer thickness (nm) | 30 | 50 | 20 | 30 | 65 | 30 |
| Composite particles average aspect ratio | 48 | 41 | 52 | 53 | 37 | 48 |
| Evaluation 1: Storage stability (gas generation) | ○ | ○ | ○ | ○ | ○ | △ |
| Evaluation 2: Water dispersibility | ○ | ○ | ○ | ○ | ○ | O |

(continued)

|  | Example 17 | Example 18 | Example 19 | Example 20 | Example 21 | Example 22 |
|---|---|---|---|---|---|---|
| Evaluation 3: Mechanical stability | ○ | ○ | △ | ○ | ○ | △ |
| Evaluation 4-i: Luminance | ○ | ○ | O | ○ | △ | △ |
| Evaluation 4-ii: Hiding property | ○ | ○ | ○ | ○ | ○ | △ |

[Table 3-2]

Table 3-2

|  | Comparative Example 2 | Example 25 | Example 26 | Example 27 | Example 23 | Example 24 | Example 28 |
|---|---|---|---|---|---|---|---|
| Raw material (Product name) | GX3100 | GX3100 | GX3100 | GX3100 | GX3100 | GX3100 | GX3100 |
| Average particle size ($\mu$m) | 11 | 11 | 11 | 11 | 11 | 11 | 11 |
| Average particle thickness (nm) | 170 | 230 | 230 | 370 | 230 | 230 | 370 |
| Proportion of Q4 structures (%) | - | 35 | 91 | 95 | 55 | 90 | 96 |
| Hydrophilicity A (%) | - | 50 | 10 | 6 | 75 | 8 | 7 |
| Al/Si Relative element concentration (XPS) (%) | - | 8 | 15 | 0 | 9 | 6 | 15 |
| Polysiloxane layer thickness (nm) | - | 30 | 30 | 100 | 30 | 30 | 70 |
| Composite particles average aspect ratio | 65 | 48 | 48 | 30 | 48 | 48 | 30 |
| Evaluation 1: Storage stability (gas generation) | × | ○ | × | ○ | ○ | ○ | × |
| Evaluation 2: Water dispersibility | O | O | △ | × | O | △ | △ |
| Evaluation 3: Mechanical stability | × | × | × | ○ | △ | O | × |
| Evaluation 4-i: Luminance | × | × | × | × | △ | △ | × |
| Evaluation 4-ii: Hiding property | × | △ | × | △ | △ | △ | × |

It has been shown as described above that the metal pigment of the second invention of the present application, in which the proportion of the Q4 structures and the metal/Si relative element concentration were adjusted to be within predetermined ranges, was excellent in storage stability (gas generation), mechanical stability, and designability (luminance and hiding property) of a coating film.

Example 29

27 kg of a commercially available aluminum paste (manufactured by Asahi Kasei Corporation, product name: "GX-3100 (average particle size, $D_{50}$: 11.3 $\mu$m, nonvolatile content: 74%)") and 93 kg of methoxypropanol (hereinafter, abbreviated as "PM") were added to a reaction apparatus including a reactor having a diameter of 0.5 m and a volume of 200 L and a paddle blade having a blade diameter (maximum diameter) of 0.3 m (the shortest distance between the inner surface of the reactor and the tip of the stirring blade: 0.1 m), the mixture was stirred with the rotation speed of the stirring blade set to 100 rpm and the tip speed set to 1.6 m/sec, and the aluminum paste was uniformly dispersed in the PM for 1 hour. At this time, the average particle size, $D_{50}$, of the metal particles in the dispersion was 13.8 $\mu$m.

Next, a liquid, in which 0.2 kg of phosphotungstic molybdic acid ($H_3PW_6Mo_6O_{40}$) hydrate was dissolved in 1 kg of methoxypropanol, was gradually added thereto, and the mixture was stirred for 1 hour while the temperature of the slurry was maintained at 40°C.

Thereafter, 2 kg of tetraethoxysilane was added as an organosilicon compound, then 2 kg of 25% aqueous ammonia and 40 kg of purified water were added for 30 minutes, and then the mixture was further stirred for 1 hour.

Thereafter, 0.25 kg of methyltrimethoxysilane was further added as a silane coupling agent, and the mixture was stirred for 1 hour. After the reaction was finished, the reaction mixture was cooled before the particles settled down or were flocculated, and then the slurry was washed and filtered to obtain an aluminum pigment composition having a nonvolatile content of 60%.

In these reactions, the bottom surface was tapered to not form an abnormal stagnation portion.

Example 30

27 kg of a commercially available aluminum paste (manufactured by Asahi Kasei Corporation, product name: "GX-3100 (average particle size: 11.3 $\mu$m, nonvolatile content: 74%)") and 93 kg of methoxypropanol (hereinafter, abbreviated as "PM") were added to a reaction apparatus including a reactor having a diameter of 0.5 m and a volume of 200 L and a paddle blade having a blade diameter (maximum diameter) of 0.3 m (the shortest distance between the inner surface of the reactor and the tip of the stirring blade: 0.1 m), the mixture was stirred with the rotation speed of the stirring blade set to 100 rpm and the tip speed set to 1.6 m/sec, and while external circulation, in which 2 L/min of the dispersion that had been extracted from the bottom was returned to the reactor at an upper portion of the reactor, was performed, the aluminum paste was uniformly dispersed in the PM for 5 hours. At this time, the average particle size of the metal particles in the dispersion was 11.8 $\mu$m.

Next, a liquid, in which 0.2 kg of phosphotungstic molybdic acid ($H_3PW_6Mo_6O_{40}$) hydrate was dissolved in 1 kg of methoxypropanol, was gradually added thereto, and the mixture was stirred for 1 hour while the temperature of the slurry was maintained at 40°C.

Thereafter, 2 kg of tetraethoxysilane was added as an organosilicon compound, then 2 kg of 25% aqueous ammonia and 40 kg of purified water were added for 1 hour, and then the mixture was further stirred for 2 hours. During these total of 3 hours, 10 kg of PM was added while being showered at the liquid contact portion of the reactor, and while the liquid contact portion was washed by also raising the liquid level simultaneously, the reaction was performed.

Thereafter, 0.25 kg of methyltrimethoxysilane was further added as a silane coupling agent, and the mixture was stirred for 2 hours. After the reaction was finished, the reaction mixture was cooled before the particles settled down or were flocculated, and then the slurry was washed and filtered to obtain an aluminum pigment composition having a nonvolatile content of 60%. During the reaction, the external circulation was continued.

In these reactions, the bottom surface was tapered to not form an abnormal stagnation portion, and the liquid was circulated in which the liquid was extracted from an extraction pipe at the bottom and returned to reactor at an upper portion of the reactor. A circulation pipe was also formed in such a way that, in order to prevent abnormal stagnation from occurring, there was no steep change in diameter by eliminating a protrusion on the inner surface.

Example 31

An aluminum pigment composition having a nonvolatile content of 60% was obtained in the same manner as in Example 30 except that the addition time of 25% aqueous ammonia and purified water was changed to 30 minutes and the subsequent stirring time was changed to 1 hour.

Example 32

An aluminum pigment composition having a nonvolatile content of 60% was obtained in the same manner as in Example 30 except that ultrasonic waves of 500 W were applied for a retention time of about 1 minute in the middle of the flow path for the external circulation.

Example 33

An aluminum pigment composition having a nonvolatile content of 60% was obtained in the same manner as in Example 30 except that the stirring blade was changed to one having a diameter of 0.12 m, and the mixture was stirred with the rotation speed of the stirring blade set to 500 rpm and the tip speed set to 3.1 m/sec.

Example 34

An aluminum pigment composition having a nonvolatile content of 60% was obtained in the same manner as in Example 30 except that the reaction was performed without showering of the PM at the liquid contact portion of the reactor and without simultaneous raising of the liquid level.

Example 35

An aluminum pigment composition having a nonvolatile content of 60% was obtained in the same manner as in Example 30 except that the paste was changed to an aluminum paste (manufactured by Asahi Kasei Corporation, product name "GX 40A (average particle size 19.8 $\mu$m, volatile content 74%").

Example 36

An aluminum pigment composition having a nonvolatile content of 60% was obtained in the same manner as in Example 30 except that the paste was changed to an aluminum paste (manufactured by Asahi Kasei Corporation, product name "FD 5090 (average particle size 9 $\mu$m, volatile content 75%").

Example 37

An aluminum pigment composition having a nonvolatile content of 60% was obtained in the same manner as in Example 30 except that a reaction apparatus including a reactor having a diameter of 1.2 m and a volume of 3,000 L and a paddle blade having a blade diameter of 0.6 m was used, the raw materials and the like were each 15 times, the rotation speed of the stirring blade was set to 100 rpm, and the tip speed was set to 3.1 m/sec.

Comparative Example 3

An aluminum pigment composition having a nonvolatile content of 60% was obtained in the same manner as in Example 30 except that the reaction, in which the organosilicon compound and the silane coupling agent were added, was not performed.

Example 38

An aluminum pigment composition having a nonvolatile content of 60% was obtained in the same manner as in Example 29 except that the stirring blade was changed to one having a maximum diameter of 0.09 m, and the mixture was stirred with the rotation speed of the stirring blade set to 200 rpm and the tip speed set to 0.9 m/sec.

Example 39

An aluminum pigment composition having a nonvolatile content of 60% was obtained in the same manner as in Example 29 except that the mixture was stirred with the rotation speed of the stirring blade set to 1,500 rpm and the tip speed set to 24 m/sec.

Example 40

An aluminum pigment composition having a nonvolatile content of 60% was obtained in the same manner as in Example 29 except that the stirring blade was changed to one having a maximum diameter of 0.49 m (i.e., the shortest distance between the inner surface of the reactor and the tip of the stirring blade was changed to 5 mm), and the tip speed was changed to 2.6 m/sec.

Example 41

An aluminum pigment composition having a nonvolatile content of 60% was obtained in the same manner as in Example 29 except that the mixture was stirred with the rotation speed of the stirring blade set to 25 rpm and the tip speed set to 0.4 m/sec.

Example 42

27 kg of a commercially available aluminum paste (manufactured by Asahi Kasei Corporation, product name: "GX-3100 (average particle size: 11.3 $\mu$m, nonvolatile content: 74%)") and 93 kg of methoxypropanol (hereinafter, abbreviated as "PM") were added to a reaction apparatus including a reactor having a diameter of 0.5 m and a volume of 200 L and a paddle blade having a blade diameter (maximum diameter) of 0.3 m (the shortest distance between the inner surface of the reactor and the tip of the stirring blade: 0.1 m), the mixture was stirred with the rotation speed of the stirring blade set to 100 rpm and the tip speed set to 1.6 m/sec, and while external circulation, in which 2 L/min of the dispersion that had been extracted from the bottom was returned to the reactor at an upper portion of the reactor, was performed, the aluminum paste was uniformly dispersed in the PM for 5 hours. At this time, the average particle size of the metal particles in the dispersion was 11.8 $\mu$m.

Next, a liquid, in which 0.2 kg of phosphotungstic molybdic acid ($H_3PW_6Mo_6O_{40}$) hydrate was dissolved in 1 kg of methoxypropanol, was gradually added thereto, and the mixture was stirred for 1 hour while the temperature of the slurry was maintained at 40°C.

Thereafter, 2 kg of tetraethoxysilane was added as an organosilicon compound, then 0.1 kg of 25% aqueous ammonia and 30 kg of purified water were added for 1 hour, and then the mixture was further stirred for 2 hours. Thereafter, the temperature was raised to 50°C, and 0.4 kg of 25% aqueous ammonia and 20 kg of purified water were added for 2 hours. During these total of 5 hours, 10 kg of PM was added while being showered at the liquid contact portion of the reactor, and while the liquid contact portion was washed by also raising the liquid level simultaneously, the reaction was performed.

Thereafter, 0.25 kg of methyltrimethoxysilane was further added as a silane coupling agent, and the mixture was stirred for 2 hours. After the reaction was finished, the reaction mixture was cooled before the particles settled down or were flocculated, and then the slurry was washed and filtered to obtain an aluminum pigment composition having a nonvolatile content of 60%. During the reaction, the external circulation was continued.

In these reactions, the bottom surface was tapered to not form an abnormal stagnation portion, and the liquid was circulated in which the liquid was extracted from an extraction pipe at the bottom and returned to reactor at an upper portion of the reactor. A circulation pipe was also formed in such a way that, in order to prevent abnormal stagnation from occurring, there was no steep change in diameter by eliminating a protrusion on the inner surface.

Example 43

An aluminum pigment composition having a nonvolatile content of 60% was obtained in the same manner as in Example 42 except that a reaction apparatus including a reactor having a diameter of 1.2 m and a volume of 3,000 L and a paddle blade having a blade diameter of 0.6 m was used, the raw materials and the like were each 15 times, the rotation speed of the stirring blade was set to 100 rpm, and the tip speed was set to 3.1 m/sec.

Example 44

An aluminum pigment composition having a nonvolatile content of 60% was obtained in the same manner as in Example 42 except that the paste was changed to an aluminum paste (manufactured by Asahi Kasei Corporation, product name: "FD 5090 (average particle size: 9 $\mu$m, nonvolatile content: 75%").

Example 45

An aluminum pigment composition having a nonvolatile content of 60% was obtained in the same manner as in Example 42 except that an aluminum paste, having an average particle size, D50, of 10 $\mu$m, a particle thickness of 60 nm, and a nonvolatile content of 75%, was used.

Measurement of average particle size

The average particle sizes, $D_{50}$ based on volume, of the metal particles in the dispersion and the composite particles contained in the obtained aluminum pigment composition were measured using a laser diffraction particle size distribution meter "LA -300" (manufactured by HORIBA, Ltd.). Isopropanol was used as a measurement solvent, and a metal pigment composition containing the composite particles as a sample was subjected to ultrasonic dispersion for 2 minutes as a pretreatment, then the mixture was put into a reactor, and after it was confirmed that an appropriate concentration was obtained, the average particle size, $D_{50}$, was measured.

Preparation of aqueous metallic coating material

After the following components were mixed, the pH was adjusted from 7.7 to 7.8 with dimethylethanolamine, and the viscosity was adjusted from 650 to 750 mPa · s (B-type viscometer, No. 3 low, rotated 60 times, measured at 25°C) with a carboxylic acid-based thickener and purified water to prepare an aqueous metallic coating material.

- Aluminum pigment composition: 12.0 g in terms of nonvolatile content
- Methoxypropanol: 18.0 g
- Polyoxyethylene lauryl ether (nonionic surfactant) (manufactured by Matsumoto Yushi-Seiyaku Co., Ltd., Actinol L5): 6.0 g
- Purified water: 12.0 g
- Water-soluble acrylic resin (manufactured by Mitsui Chemicals, Inc., ALMATEX WA 911): 110.0 g
- Melamine resin (manufactured by Nippon Cytec Industries, Inc., CYMEL 350): 18.0 g

Evaluation 1: Evaluation of coating material stability

For the aqueous metallic coating material prepared according to the above formulation, a change in condition after being left to stand at 23°C for 24 hours was visually evaluated.

○: No particular change was observed.
△: Flocculation of aluminum pigment was slightly observed.
×: Flocculation of aluminum pigment was observed.

Evaluation 2: Storage stability (gas generation) evaluation

200 g of the prepared aqueous metallic coating material was collected in a flask, and a cumulative amount of generated hydrogen gas was observed in a constant-temperature water bath at 60°C for up to 24 hours. The amount of generated gas was evaluated as follows and used as an index of the storage stability in a coating material.

⊙: less than 2 mL
○: 2 mL or more and less than 5 mL
△: 5 mL or more and less than 20 mL
×: 20 mL or more

Evaluation 3: Evaluation of luminance

The prepared aqueous metallic coating material was applied to an intermediately coated 12 cm × 6 cm steel plate by air spray coating so as to have a dry film thickness of 4 µm, and predried at 90°C for 10 minutes. Thereafter, the organic solvent type top coat coating material was applied by air spray coating so as to have a dry film thickness of 20 µm, and dried at 140°C for 30 minutes to prepare a coated plate, which was subjected to evaluation of luminance.
The organic solvent type topcoat coating material was prepared as follows: the following components were mixed and dispersed with a spatula for 3 to 4 minutes; and then the viscosity of the coating material was adjusted to 20.0 seconds with a Ford Cup No. 4.

- Acrylic clear resin (manufactured by DIC Corporation, A 345): 420 g
- Melamine resin (manufactured by DIC Corporation, L-117-60): 165 g
- Aromatic solvent (manufactured by EXXON Chemical Co., Ltd., Solvesso 100): 228 g

The luminance of the coating film was evaluated using a laser type metallic feeling measuring apparatus "ALCOPE LMR-200" manufactured by Kansai Paint Co., Ltd. As an optical condition, a laser light source is provided at an incident angle of 45 degrees, and optical receivers at light receiving angles of 0 degrees and -35 degrees. As a measurement value, an IV value was obtained at a light receiving angle of -35 degrees at which the maximum light intensity was obtained except for, among laser reflected light, the light in a mirror reflection area that reflected on the surface of the coating film. The IV value is a parameter proportional to the intensity of regularly reflected light from the coating film, and indicates the magnitude of light luminance. The determination method is as follows based on Comparative Example 1.

⊙: The decrease from the standard (Comparative Example 1) was less than 20.

○: The decrease from the standard (Comparative Example 1) was 20 or more and less than 40.

△: The decrease from the standard (Comparative Example 1) was 40 or more.

×: The decrease from the standard (Comparative Example 1) was 40 or more.

Evaluation 4: Evaluation of hiding property

The prepared aqueous metallic coating material was applied onto a polyethylene terephthalate sheet (PET sheet) with a 2 mil applicator so as to have a dry film thickness of 15 μm, and a coating film dried at 140°C for 30 minutes was visually observed, and a hiding property was determined as follows based on Comparative Example 1.

⊙: the same level as the standard (Comparative Example 1)

○: From the same level as the standard (Comparative Example 1) to slightly lower level

△: Lower than the standard (Comparative Example 1)

×: Significantly lower than the standard (Comparative Example 1)

Evaluation 5: Evaluation of flocculation/deformation of composite particles

The prepared aqueous metallic coating material was applied onto a polyethylene terephthalate film (PET film) with a 9 mil applicator, left to stand at room temperature for 20 minutes, and then baked at 140°C for 20 minutes to prepare a coated plate. The coated plate was divided into pieces each having a size of 2 cm square with scissors, and then the cross section of the coating film was repeatedly cut using a large rotary microtome (manufactured by YAMATO KOHKI INDUSTRIAL CO., LTD./RV-240) to expose the cross section of the coating film, and then ion milling processing was performed using an ion milling apparatus (manufactured by JEOL Ltd./IB-09010CP) with a setting such that ion beam irradiation was possible up to a portion 20 μm away from the cross section of the coating film to prepare a test piece for cross-section observation. The test piece was observed by FE-SEM (manufactured by HITACHI/S-4700) to observe the degree of overlap between particles (presence or absence of flocculation or fixation) and the degree of deformation of particles (presence or absence of bending). In the observation, particles having a particle size in the range of 90% from the center, when a particle size distribution was measured, were targeted.

Evaluation 5-1: Evaluation of degree of overlap

The degree of overlap (presence or absence of flocculation or fixation) was observed and evaluated at a magnification of about 1,000 to 3,000 times. When the degree of overlap could not be determined at this magnification, the degree of overlap was evaluated by appropriately changing the magnification. In this observation method, observation was performed at a magnification of 30,000 times at the maximum. A plurality of fields of view were observed from the cross section of the same test piece, so that the number of the observed particles was 500 or more. Evaluation was made based on Comparative Example 1 as follows according to the number proportion of flocculated particles.

○: The proportion of flocculated particles was 5% or more and less than 10%.

△: The proportion of flocculated particles was 5% or more and less than 10%.

×: The proportion of flocculated particles was 20% or more.

Evaluation 5-2: Evaluation of degree of deformation

Similarly to Evaluation 5-1, the degree of deformation (presence or absence of bending) was observed and evaluated at a magnification of about 1,000 to 3,000 times. When the degree of deformation could not be determined at this magnification, the degree of deformation was evaluated by appropriately changing the magnification. In this observation method, observation was performed at a magnification of 30,000 times at the maximum. A plurality of fields of view were observed from the cross section of the same test piece, so that the number of the observed particles was 500 or more. For the presence or absence of deformation, a case where the shortest distance between both ends of a particle was 0.8 times or less the length of the particle was determined that there was deformation (bending), and evaluation was made based on Comparative Example 1 as follows according to the number proportion of deformed particles.

○: The proportion of deformed particles was less than 10%.

○: The proportion of deformed particles was 10% or more and less than 35%.

×: The proportion of deformed particles was 35% or more.

The reactor and manufacturing conditions, the conditions of the metal particles used, and the results of the evaluation tests in each of Examples and Comparative Example are shown in Table 4.

[Table 4]

## Table 4

| | | Example 29 | Example 30 | Example 31 | Example 32 | Example 33 | Example 34 | Example 35 | Example 36 | Example 37 | Comparative Example 3 | Example 38 | Example 39 | Example 40 | Example 41 | Example 42 | Example 43 | Example 44 | Example 45 |
|---|---|---|---|---|---|---|---|---|---|---|---|---|---|---|---|---|---|---|---|
| Reactor and manufacturing conditions | Reactor volume (L) | 200 | 200 | 200 | 200 | 200 | 200 | 200 | 200 | 3000 | 200 | 200 | 200 | 200 | 200 | 200 | 3000 | 200 | 200 |
| | Reactor diameter (m) | 0.5 | 0.5 | 0.5 | 0.5 | 0.5 | 0.5 | 0.5 | 0.5 | 1.2 | 0.5 | 0.5 | 0.5 | 0.5 | 0.5 | 0.5 | 1.2 | 0.5 | 0.5 |
| | Stirring blade diameter (m) | 0.3 | 0.3 | 0.3 | 0.3 | 0.12 | 0.3 | 0.3 | 0.3 | 0.6 | 0.3 | 0.09 | 0.3 | 0.49 | 0.3 | 0.3 | 0.6 | 0.3 | 0.3 |
| | Tip speed (m/s) | 1.6 | 1.6 | 1.6 | 1.6 | 3.1 | 1.6 | 1.6 | 1.6 | 3.1 | 1.6 | 0.9 | 23.6 | 2.6 | 0.4 | 1.6 | 3.1 | 1.6 | 1.6 |
| | External circulation | × | ○ | ○ | ○ | ○ | ○ | ○ | ○ | ○ | ○ | × | × | × | × | ○ | ○ | ○ | ○ |
| | Ultrasonic treatment | × | × | × | ○ | × | × | × | × | × | × | × | × | × | × | ○ | ○ | ○ | ○ |
| | Liquid contact portion washing | × | ○ | ○ | ○ | ○ | × | ○ | ○ | ○ | × | × | × | × | × | ○ | ○ | ○ | ○ |
| | Reaction time (h) | 3 | 3 | 1.5 | 3 | 3 | 3 | 3 | 3 | 3 | — | 3 | 3 | 3 | 3 | 3+2 | 3+2 | 3+2 | 3+2 |
| Metal particle conditions | Raw material (aluminum flake product name) | GX 3100 | GX 3100 | GX 3100 | GX 3100 | GX 3100 | GX 3100 | GX 40A | FD 5090 | GX 3100 | GX 3100 | GX 3100 | GX 3100 | GX 3100 | GX 3100 | GX 3100 | GX 3100 | FD 5090 | (SB10) |
| | Average particle size of raw material (μm) | 11.3 | 11.3 | 11.3 | 11.3 | 11.3 | 11.3 | 19.8 | 9.0 | 11.3 | 11.3 | 11.3 | 11.3 | 11.3 | 11.3 | 11 | 11 | 9 | 10 |
| | Average particle size in dispersant (μm) | 13.8 | 11.8 | 11.8 | 11.5 | 13.6 | 11.9 | 20.5 | 9.5 | 12.0 | 11.8 | 16.5 | 13.5 | 11.9 | 16.8 | 12 | 12 | 10 | 11 |
| | Average particle size of metal pigment composition (μm) | 14.9 | 12.2 | 12.2 | 11.8 | 14.8 | 12.3 | 20.7 | 9.7 | 12.3 | 12.1 | 18.5 | 14.5 | 12.3 | 19.5 | 12 | 12 | 10 | 11 |
| Evaluation tests results | Evaluation 1: Coating material stability evaluation | ◎ | ◎ | ◎ | ◎ | ◎ | ◎ | ◎ | ◎ | ◎ | × | ◎ | ◎ | ◎ | ◎ | ◎ | ◎ | ◎ | ◎ |
| | Evaluation 2: Storage stability (gas generation) evaluation | △ | ◎ | ○ | ◎ | ○ | △ | ◎ | ◎ | ◎ | × | × | △ | △ | × | ○ | ○ | ○ | ○ |
| | Evaluation 3: Luminance evaluation | △ | ○ | ○ | ◎ | △ | ○ | ◎ | ◎ | ◎ | — | × | × | × | × | ○ | ○ | ○ | ○ |
| | Evaluation 4: Hiding property evaluation | △ | ◎ | ○ | ◎ | △ | ○ | ◎ | ◎ | ◎ | — | × | △ | × | × | ○ | ○ | ○ | ○ |
| | Evaluation 5-1: Degree of overlap evaluation | △ | ○ | ○ | ◎ | △ | △ | ○ | ○ | ○ | — | × | △ | ○ | × | ◎ | ◎ | ◎ | ◎ |
| | Evaluation 5-2: Degree of deformation evaluation | ◎ | ◎ | ◎ | ◎ | △ | ○ | ○ | ○ | ○ | — | ○ | × | × | ○ | ◎ | ◎ | ◎ | ◎ |

In the table, the manufacturing conditions are indicated by "O" in the case of being implemented and " ×" in the case of not being implemented.

The metal pigment compositions obtained in Examples 29 to 37 and 42 to 45 had good stability as a coating material and good storage stability (less gas generation), and was excellent in coating film color tones, such as luminance and hiding property, and further excellent in the degree of overlap (presence or absence of flocculation/fixation) and the degree of deformation (presence or absence of bending). This is considered to be because the initial dispersion of the aluminum flakes was sufficiently performed and stirring conditions in which the aluminum flakes were not damaged and flocculation at the time of the condensation of the organosilicon compound was suppressed were adopted, the silica resin layer was firmly attached to the surfaces of the aluminum particles.

INDUSTRIAL APPLICABILITY

The composite metal pigment according to the present inventions (in particular, according to the second aspect of the first invention of the present application) and the coating film and the like obtained by using the composite metal pigment combine excellent designability and gloss, suppression of seeds, stability in an aqueous coating material, and the like at high levels beyond the limits of the conventional techniques, so that they can be suitably used in various applications in which metal pigments are conventionally used, such as coating materials, inks, and resin kneading agents; more specifically, automobile bodies, automobile repairing materials, automobile parts, home electric appliances, plastic parts, PCM coating materials, high weather-resistant coating materials, heat-resistant coating materials, anticorrosive coating materials, ship bottom coating materials, offset printing inks, gravure printing inks, screen printing inks, and the like, and hence they have high applicability in various fields of industries including transportation machine industries such as automobiles, electrical and electronic industries such as home electric appliances, coating material industry, printing industry, and the like.

According to the second invention of the present application, it is possible to provide a metal pigment that can be used in coating compositions, ink compositions, or the like, particularly, in aqueous coating materials, aqueous inks, or the like, also has excellent storage stability in water, and has less decreases in brightness and hiding property when a coating film is formed. Therefore, the metal pigment of the second invention of the present application has a high value in practical use, and can be suitably used in a wide range of fields of industries such as manufacturing of coating materials and inks, automobiles, home appliances, and printing.

**Claims**

1. A metal pigment comprising composite particles having metal particles and one or more coating layers formed on surfaces of the metal particle, wherein

   (1) the composite particles have a flaky shape,
   (2) $D_{50}$ based on volume is 0.1 to 30 $\mu$m when a particle size distribution of the composite particles is measured by a laser diffraction type particle size distribution meter, and
   (3) the composite particles have an average thickness of 15 to 300 nm.

2. The metal pigment according to claim 1, wherein the proportion of the composite particles that are bent is 10% or less.

3. The metal pigment according to claim 1 or 2, wherein a number proportion of aggregates constituted by at least four of the composite particles, is 35% or less with respect to a total number of the composite particles.

4. The metal pigment according to any one of claims 1 to 3, wherein the metal particles contain aluminum or an aluminum alloy.

5. The metal pigment according to any one of claims 1 to 4, wherein the one or more coating layers include a metal oxide coating layer.

6. The metal pigment according to any one of claims 1 to 5, wherein the one or more coating layers include a silicon compound-containing layer.

7. The metal pigment according to any one of claims 1 to 6, wherein at least one layer of the coating layers is a polysiloxane layer.

**8.** The metal pigment according to any one of claims 1 to 7, wherein the composite particles have an average particle thickness of 15 to 160 nm.

**9.** The metal pigment according to any one of claims 1 to 8, wherein the composite particles have an average aspect ratio of 20 to 400.

**10.** The metal pigment according to claim 7, wherein the proportion of Q4 structures, in which a Si atom has four -O-Si- bonds, in the structure of the polysiloxane constituting the polysiloxane layer is 40 to 90%.

**11.** The metal pigment according to any one of claims 1 to 10, wherein, when surfaces of the composite particles are evaluated by XPS, the relative element concentration, ((A/B) × 100), between the element concentration of metal, A, and the element concentration of Si, B, is 10% by mole or less.

**12.** The metal pigment according to claim 7 or 10, wherein the polysiloxane layer has an average thickness of 5 to 100 nm.

**13.** The metal pigment according to any one of claims 1 to 12, wherein a hydrophilicity A, defined by the sum of (the proportion of Q1 structures, in which a Si atom has one -O-Si- bond, × 3) + (the proportion of Q2 structures, in which a Si atom has two -O-Si- bonds, × 2) + (the proportion of Q3 structures, in which a Si atom has three -O-Si- bonds), is 10 to 80%.

**14.** The metal pigment according to any one of claims 1 to 13, wherein the composite particles further include a coating layer containing at least one of a metal, a metal oxide, a metal hydrate, and a resin.

**15.** A metal pigment comprising composite particles in which metal particles are coated with a polysiloxane layer, wherein

1) the proportion of Q4 structures, in which a Si atom has four -O-Si- bonds, in the structure of the polysiloxane, is 40 to 90%, and
2) when surfaces of the composite particles are evaluated by XPS, the relative element concentration, ((A/B) × 100), between the element concentration of metal, A, and the element concentration of Si, B, is 10% by mole or less.

**16.** The metal pigment according to any one of claims 1 to 15, wherein, when 200 g of an aqueous metallic coating material, containing 12 g of the metal pigment as a nonvolatile content, 18 g of methoxypropanol, 110 g of an aqueous acrylic resin, 18 g of a melamine resin, and 12 g of water, is collected in a flask and a cumulative amount of generated hydrogen gas is measured in a constant-temperature water bath at 60°C for up to 24 hours, gas generation is 10 ml or less.

**17.** An aqueous metallic coating material containing the metal pigment according to any one of claims 1 to 15 and containing 5% by mass or more of water, wherein, when 200 g of the aqueous metallic coating material is collected in a flask and a cumulative amount of generated hydrogen gas is measured in a constant-temperature water bath at 60°C for up to 24 hours, gas generation is 10 ml or less.

**18.** A metal pigment composition comprising the metal pigment according to any one of claims 1 to 16.

**19.** An aqueous coating material composition comprising the metal pigment according to any one of claims 1 to 16.

**20.** An aqueous ink composition comprising the metal pigment according to any one of claims 1 to 16.

**21.** A coating film comprising the metal pigment according to any one of claims 1 to 16.

**22.** A method for manufacturing a metal pigment, using a stirring vessel-type reaction apparatus and comprising following steps (1) to (3):

(1) dispersing metal particles in a solvent;
(2) coating the metal particles with a silicon compound; and
(3) filtering and washing the metal particles, wherein
the stirring vessel-type reaction apparatus has:

a reactor having a volume of 100 L or more; and

the ratio of the maximum diameter of a stirring blade to the diameter of the reactor is in a range of 0.2 to 1.0, and the shortest distance between an inner surface of the reactor and a tip of the stirring blade is 10 mm or more; and

the tip speed of the stirring blade, while being stirred, is 1 to 20 m/s.

23. The manufacturing method according to claim 22, wherein:

in the step (1), the average particle size of the metal particles in a dispersion is 1.2 times or less the average particle size of the metal particles as a raw material, and the metal particles in the dispersion are uniformly dispersed in the solvent;

in the step (2), stirring is performed to not form a stagnation portion in a surface layer and a bottom; and

the average particle size of composite particles contained in the metal pigment obtained after the step (3) is 1.3 times or less the average particle size of the metal particles as a raw material.

24. The manufacturing method according to claim 22 or 23, wherein in the step (1) and/or (2), a treatment liquid extracted from a vicinity of the bottom of the reactor is returned to the reactor at an upper portion of the reactor for circulation.

25. The manufacturing method according to any one of claims 22 to 24, wherein in the step (2), after a silicon-containing raw material and a catalyst are put in, an inner wall of the reactor near a liquid contact portion between the reactor and a mixed liquid is washed with a reaction liquid or the solvent to reduce deposits or stagnant matters.

26. The manufacturing method according to any one of claims 22 to 25, wherein the step (2) is performed for 2 hours or more.

27. The manufacturing method according to any one of claims 22 to 26, wherein the metal pigment according to any one of claims 1 to 16 is manufactured.

28. A metal pigment obtained by the manufacturing method according to any one of claims 22 to 27.

29. A stirring vessel-type reaction apparatus used in the manufacturing method according to any one of claims 22 to 27.

## INTERNATIONAL SEARCH REPORT

| International application No. |
| --- |
| **PCT/JP2022/000677** |

### A. CLASSIFICATION OF SUBJECT MATTER

***B32B 27/20***(2006.01)i; ***C09C 1/62***(2006.01)i; ***C09C 3/00***(2006.01)i; ***C09C 3/06***(2006.01)i; ***C09C 3/08***(2006.01)i; ***C09C 3/10***(2006.01)i; ***C09C 3/12***(2006.01)i; ***C09D 5/00***(2006.01)i; ***C09D 201/00***(2006.01)i; ***C09D 11/00***(2014.01)i; ***C09D 7/62***(2018.01)i

FI: C09C3/00; C09C3/12; C09D201/00; C09D7/62; C09C3/10; C09C3/08; C09D11/00; C09C1/62; B32B27/20 A; C09D5/00 Z; C09C3/06

According to International Patent Classification (IPC) or to both national classification and IPC

### B. FIELDS SEARCHED

Minimum documentation searched (classification system followed by classification symbols)

B32B27/20; C09C1/62; C09C3/00; C09C3/06; C09C3/08; C09C3/10; C09C3/12; C09D5/00; C09D201/00; C09D11/00; C09D7/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2018/180936 A1 (TOYO ALUMINIUM KK) 04 October 2018 (2018-10-04)<br>claims 1-2, paragraphs [0006], [0009], [0094], [0099], [0116]-[0121], [0128], table 1, fig. 2, examples 1-6 | 1-7, 9, 11-12, 14, 18-23, 25-29 |
| Y | claims 1-2, paragraphs [0006], [0009], [0094], [0099], [0116]-[0121], [0128], table 1, fig. 2, examples 1-6 | 8, 10, 13, 15-17, 24 |
| Y | JP 2019-210483 A (ASAHI KASEI CORP) 12 December 2019 (2019-12-12)<br>claims 1, 3, paragraph [0011], examples | 8 |
| Y | JP 2018-135455 A (ASAHI KASEI CORP) 30 August 2018 (2018-08-30)<br>claims 1-2, paragraph [0011], examples | 8 |
| Y | paragraph [0033] | 24 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**14 March 2022** | Date of mailing of the international search report<br><br>**29 March 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

## INTERNATIONAL SEARCH REPORT

International application No.

**PCT/JP2022/000677**

### C.    DOCUMENTS CONSIDERED TO BE RELEVANT

| Category* | Citation of document, with indication, where appropriate, of the relevant passages | Relevant to claim No. |
|---|---|---|
| Y | JP 2019-151678 A (ASAHI KASEI CORP) 12 September 2019 (2019-09-12)<br>claim 1, paragraphs [0009], [0011], [0077]-[0093], [0105]-[0109], tables 1-2, examples 1-42 | 10, 13, 15-17 |
| Y | JP 2012-162733 A (ASAHI KASEI CHEMICALS CORP) 30 August 2012 (2012-08-30)<br>paragraphs [0026]-[0028], fig. 1-3 | 24 |
| A | JP 2013-518948 A (ECKART GMBH) 23 May 2013 (2013-05-23)<br>entire text, all drawings | 1-29 |
| A | WO 2007/043453 A1 (TOYO ALUMINIUM KK) 19 April 2007 (2007-04-19)<br>entire text | 1-29 |
| A | WO 2004/096921 A1 (TOYO ALUMINIUM KK) 11 November 2004 (2004-11-11)<br>entire text, all drawings | 1-29 |

Form PCT/ISA/210 (second sheet) (January 2015)

## INTERNATIONAL SEARCH REPORT
### Information on patent family members

International application No.

**PCT/JP2022/000677**

| Patent document cited in search report | | | Publication date (day/month/year) | Patent family member(s) | | Publication date (day/month/year) |
|---|---|---|---|---|---|---|
| WO | 2018/180936 | A1 | 04 October 2018 | US 2020/0131374 A1 claims 1-2, paragraphs [0005], [0008], [0114], [0119], [0137]-[0146], [0153]-[0161], table 1, fig. 2, examples 1-6 | | |
| JP | 2019-210483 | A | 12 December 2019 | US 2018/0230315 A1 claims 1, 3, paragraph [0034], examples | | |
| JP | 2018-135455 | A | 30 August 2018 | (Family: none) | | |
| JP | 2019-151678 | A | 12 September 2019 | (Family: none) | | |
| JP | 2012-162733 | A | 30 August 2012 | (Family: none) | | |
| JP | 2013-518948 | A | 23 May 2013 | US 2013/0035400 A1 entire text, all drawings | | |
| WO | 2007/043453 | A1 | 19 April 2007 | US 2009/0117281 A1 entire text | | |
| WO | 2004/096921 | A1 | 11 November 2004 | US 2006/0150864 A1 entire text, all drawings | | |

Form PCT/ISA/210 (patent family annex) (January 2015)

**REFERENCES CITED IN THE DESCRIPTION**

**Patent documents cited in the description**

- JP 2003147226 A
- WO 2004096921 A
- WO 2018180936 A
- JP 2018172617 A
- JP 2013518948 A
- JP 5979788 B
- JP 2019151678 A
- JP 4633239 B